# EUROPEAN PATENT SPECIFICATION

(11) **EP 3 462 220 B1**
(45) Date of publication and mention of the grant of the patent: **14.04.2021**
(21) Application number: 17799406.8
(22) Date of filing: 16.05.2017
(51) Int. Cl.: G02B 5/18, B29C 59/02, B29C 65/48, B32B 3/30, B32B 7/02, B42D 25/328, B42D 25/445, G09F 3/02

(54) **OPTICAL INFORMATION MEDIUM AND METHOD FOR MANUFACTURING SAME**
OPTISCHES INFORMATIONSMEDIUM UND VERFAHREN ZUR HERSTELLUNG DAVON
SUPPORT D'INFORMATIONS OPTIQUE ET SON PROCÉDÉ DE FABRICATION

(30) Priority: 16.05.2016 JP 2016098269; 06.07.2016 JP 2016134390
(43) Date of publication of application: 03.04.2019
(73) Proprietor: Toppan Printing Co., Ltd., Tokyo 110-0016 (JP)
(72) Inventor: HARADA Satoshi, Tokyo 110-0016 (JP)
(74) Representative: Hoffmann Eitle
(86) International application number: PCT/JP2017/018431
(87) International publication number: WO 2017/199982

(56) References cited:
- WO-A1-2015/107347
- WO-A1-2016/125488
- GB-A- 2 510 499
- JP-A- 2014 240 892
- JP-A- 2014 240 892
- JP-A- 2016 513 271

## Description

### [Technical Field]

The present invention relates to an optical information medium having a fine uneven structure. More specifically, the present invention relates to an optical information medium that can be adhered to a surface of a substrate made of paper or a plastic resin, or can be embedded inside a paper substrate.

### [Background Art]

### [Typical methods of producing optical information medium]

Typical methods of continuously mass replicating optical information media having a fine uneven structure include pressing as described in PTL 1, casting as described in PTL 2, photopolymerization as described in PTL3, and the like (refer to PTLs 1 to 3).

When a fine uneven structure is produced by a pressing method, a resin layer which has been formed as a continuous layer is heated to the softening point or higher and a relief mold (mold for replicating a fine uneven structure) is pressed against the surface of the resin layer where the fine uneven structure is to be formed to transfer the profile of the fine uneven structure. In another possible method, a relief mold which has been heated to the softening point of the resin layer or higher is pressed against the resin layer to transfer the profile of the fine uneven structure. Both of these methods use the technique of transferring a profile, which involves pressing a relief mold against a resin layer that has been formed in advance by applying coating to the overall surface of the resin layer. When a colorant, such as a dye or a pigment, is added to the resin layer, a hue may be given to the gloss of a metallic reflective layer, for example, provided to the resin layer. However, the pressing method is predicated on a colored resin layer being present on the overall surface subjected to pressing processing.

In the casting method, the profile of a fine uneven structure is transferred by melt-extruding a resin for forming the fine uneven structure that has been heated to its melting point or higher onto a relief mold (mold for replicating a fine uneven structure), or by casting a solution or dispersion of a resin onto a relief mold. After the profile transfer, the resin is cooled to reduce its fluidity and to provide a continuous resin layer, and then peeled from the relief mold to obtain a fine uneven structure. In this method as well, the resin layer can be colored by adding a colorant, such as a dye or a pigment thereto. However, similar to the pressing method, the colored resin layer is present as a continuous layer.

Photopolymerization (2P method, or photosensitive resin method) includes steps of casting a radiation curable resin composition between a relief mold (mold for replicating a fine uneven structure) and a flat substrate (plastic film, or the like), curing the resin composition with radiation to form a continuous layer, and peeling off the cured resin layer together with the substrate from the relief mold. Use of photopolymerization can provide a highly accurate fine uneven structure. The optical information medium obtained by photopolymerization has higher precision in formation of an uneven structure, higher thermal resistance, and higher chemical resistance than those obtained from pressing and casting in which a thermoplastic resin is used. The photopolymer method can dispense with heating during processing due to the use of a liquid form radiation curable resin composition.

Pressing, casting and photopolymerization, however, all suffer from the following problems.

Specifically, in any of these methods, the resultant resin layer is a single continuous layer. For example, it is difficult to continuously mass-replicate a fine uneven structure only in a desired region of a resin layer which is not an integrated body but is made up of a plurality of parts.

Further, it is difficult to continuously mass-replicate a fine uneven structure only in a desired region of a partially colored resin layer. In this regard, in the pressing method, a colored resin layer made up of a plurality of parts may be provided on a support substrate and the position where the relief mold is in contact with the resin layer may be adjusted to form a fine uneven structure. However, if there is a resin layer made up of a plurality of parts, shrinkage of the support structure due to heat is uneven. Therefore, productivity may be lowered from the viewpoint of registration.

### [Optically variable device (OVD)]

An optically variable device (OVD) is a type of the optical information medium and can also be used as a medium for the purpose of decoration or anti-counterfeiting. Such an OVD has a fine uneven structure for which a diffraction grating, a scattering structure, or the like is mainly used. This fine uneven structure is also formed in general using any of pressing, casting and photopolymerization. An OVD that has been processed through a vapor deposition step of providing a reflecting layer on a fine uneven structure and a coating step of providing an adhesion layer is provided in the form of a transfer foil, an adhesion label, a thread, or the like.

In this OVD, the resin layer forming the fine uneven structure may be colored with a colorant, such as a dye or a pigment, to provide a unique metallic glossy color thereto. For example, the OVD exhibits a silver metallic gloss when a colorless resin layer is used with a reflective layer being made of aluminum. Even with the same aluminum reflective layer, if the resin layer is colored orange (or yellow), the OVD exhibits a gold color, or if colored reddish-brown, exhibits a copper color.

To provide higher counterfeit resistance, designability and chemical resistance to OVD, the OVD may be demetallized. Demetallization refers to a method chiefly including a step of providing a mask layer having a desired pattern on a metal reflective layer, and a step of etching the reflective layer with an acid or an alkali to partially remove the metal for formation of a patterned reflective layer. As another method of demetallization, there is one for removing only desired portions of a reflective layer with the application of a laser beam or the like, but this method requires that the portions to be demetallized be sequentially irradiated with a laser beam, and thus, the relative productivity is low from the viewpoint of the processing speed. For example, holograms that are demetallized by chemical etching with an acid or an alkali are often provided to securities, such as bank notes.

However, if an OVD is produced by demetallization, the following problems may be raised. Specifically, when the resin layer forming the fine uneven structure is colored, the portions of the resin layer where the metal has been removed by demetallization exhibit tinted color and thus are not colorless under visual observation. For example, when an OVD having a metallic glossy gold color is produced with demetallization, the demetallized portions which are desired to be colorless exhibit an orange color. Since the reflective layer does not appear to be a gold metal, the gold gloss of the non-demetallized portions cannot be effectively emphasized to the public who will judge the authenticity. There is also a problem that similar features can be reproduced by forming an orange coating on the overall surface of a counterfeit hologram.

As countermeasures against these problems, the reflective layer may be formed from a metal having non-silver gloss. For example, an OVD may be formed by forming a fine uneven structure on a colorless resin layer, and vapor-depositing copper thereon instead of aluminum, followed by demetallization. The OVD obtained in this way exhibits a copper-color gloss of the deposited coper, while parts thereof where the copper has been removed are colorless under visual observation.

However, this production method has the following problems.

Specifically, since oxides of copper are colored, resistance of copper against chemicals, including resistance against human sweat, results in inferiority in appearance when compared to aluminum whose oxides are white. Therefore, copper is not a practical material in terms of putting it into circulation.

Further, the method of providing a reflective layer by vapor deposition of copper can provide only a copper-color reflective layer, unless there are provided additional steps, that is, one or more steps of vapor deposition of a metal of another color, one or more steps of masking, and/or one or more steps of etching. For example, vapor deposition of gold and demetallization thereof to provide a gold gloss involves high cost and the productivity is reduced compared to the case of coloring a resin layer having a fine uneven structure.

As measures against these problems, a possible method that can be adopted may be to color a part of a layer which is provided to the substrate prior to the resin layer having a fine uneven structure. For example, if colored portions in a desired pattern are provided to a surface of the resin layer having a fine uneven structure, on a side opposite to the surface provided with the reflective layer (i.e., provided between a release layer of a hologram transfer foil and the resin layer having a fine uneven structure), a discontinuous and patterned glossy appearance having a color other than silver is achieved by the colored portions and the reflective layer. However, this production method has the following problems.

Specifically, in this production method, it is necessary to provide the colored portions through a step that is separate from the step of providing the resin layer having a fine uneven structure. Thus, in any of pressing, casting, and photopolymerization, productivity is reduced from the viewpoint of registration.

As countermeasures against these problems, a self-alignment patterning method has been proposed. In this method, colored layers are self-aligned based on the difference in light transmittance of the metal reflective layers caused by the structural difference in the resin layers having a fine uneven structure.

For example, a part of the fine uneven structure is permitted to have a moth-eye structure of sub-wavelength scale, and aluminum is vapor-deposited thereon to form a reflective layer. In this case, since the part constituting the moth-eye structure has a surface area greater than the rest of the structure, the vapor-deposited aluminum will have a relatively smaller thickness. A colored positive photoresist is further coated onto the reflective layer as a mask layer, and the reflective layer is irradiated with light from the fine uneven structure formed side to make the photoresist soluble. In the irradiation, the moth-eye structure part transmits light because the thickness of the aluminum is small, so that the positive photoresist becomes soluble, but other parts not having the moth-eye structure or having a diffraction grating structure do not transmit the light, so that the positive photoresist does not become soluble. When the solubilized photolithographic material is washed off, the colored portions can be provided in a self-alignment manner. However, this production method has the following problems.

Specifically, in this production method, the colored portions are provided not to the front side (i.e., the side of the reflective layer that is the resin layer side having the fine uneven structure) as in a generally used optical information medium, but are provided to the reverse side (i.e., the side of the reflective layer that is the side opposite to the resin layer side having the fine uneven structure). Therefore, authentication is possible only through visual observation from the reverse side. With this production method, it is difficult to color the resin layer having a fine uneven structure which is positioned on the front.

As countermeasures against these problems, a method has been proposed in which a colored fine uneven structure layer in a patterned island state is provided on a substrate, followed by vapor deposition of aluminum and patterning by demetallization.

For example, a patterned and colored fine uneven structure layer is transferred to a bonding portion (receiving layer) on a substrate film, and aluminum is vapor-deposited thereon to form a reflective layer. When the reflective layer is patterned by demetallization, the front side (the side of the reflective layer that is the resin layer side having the fine uneven structure) can be colored as in a generally used optical information medium, and the demetallized portions can be made transparent. If the fine uneven structure layer is formed with a plurality of colors, one or more metallic glosses of gold, silver, copper and the like can be provided as a mixture on the same single surface. However, this production method has the following problems.

Specifically, in this production method, the position of the mask layer provided on the reflective layer during demetallization is not necessarily precisely aligned with the position of the patterned and colored fine uneven structure layer. For example, when a circular fine uneven structure layer is colored orange, and demetallized into a circle of the same size, the positions of both do not necessarily precisely align with each other. Thus, a part of the edge of the circle may appear to be slightly orange, and another part of the edge may appear to be slightly silver in the absence of the fine uneven structure layer. It is extremely difficult, if not impossible, to completely impart the entire body with a gold color only. Also, the productivity is reduced from the viewpoint of registration.

To summarize the above, if any of the aforementioned production methods is used, it is difficult to continuously mass produce a demetallized optical information media for observing the reflective layer from the fine uneven structure layer side (front side), that is, an optical media with almost perfect registration between the reflective layer and the patterned uneven structure layer to an extent equal to or more than that of the demetallized optical information media of a uniform color (including solid color) based on conventional art, so that one would not have a feeling of positional deviation between these layers even if color is different between the region where the reflective layer is present and the region where the reflective layer is not present (i.e. demetallized portions) (e.g., if only the region where the reflective layer is present is colored, and the region where the reflective layer is not present is colorless).

More preferably, it is desirable to obtain a demetallized optical information medium with almost complete registration for observing the reflective layer from the fine uneven structure forming layer side (front side), so that one would not have a feeling of positional deviation between the coloration position and the patterning position of the fine uneven structure forming layer, even if the reverse side provided with the reflective layer and the mask layer is colored.

PTL 16 shows in Fig. 20(b) a cross-sectional view of a security element according to the preamble of claim 1 of the present application.

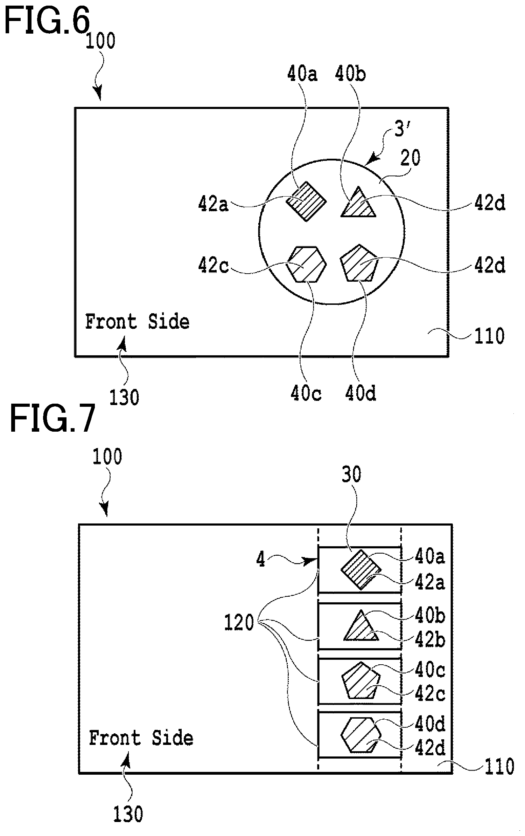

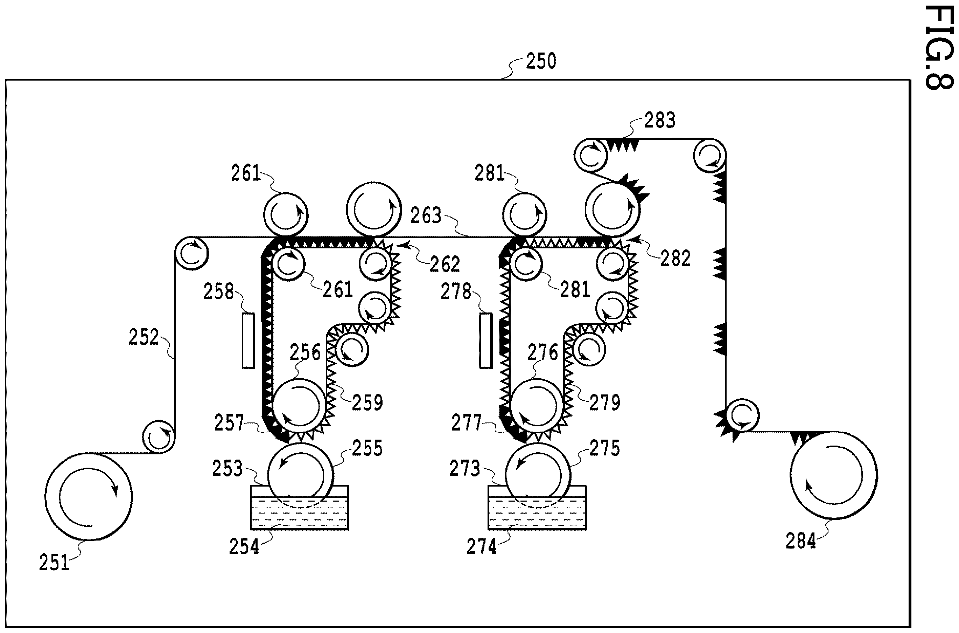

PTL 17 is concerned with an optical element which has a three-dimensional pattern. The optical element includes a substrate, in which a plurality of arc-shaped groves are formed at random pitches in a plan view, and a reflection layer formed along the grooves on the substrate. Figs. 7 and 8 show an example of the optical element in a plan view and a sectional view, respectively. The sectional view of Fig. 8 shows a relief structure forming layer with a reflective layer and mask layer on top.

PTL 18 describes a security device and method of forming a security device comprising providing a laminate with a first transparent layer having an optically variable effect generating relief structure formed in a surface thereof; a reflection enhancing layer extending over the relief structure and following the contour of the relief; and a second transparent layer extending over the reflection enhancing layer, the lateral extent of the second transparent layer being less than the whole area of the security device and corresponding to the lateral extent of the reflection enhancing layer. The first and/or second transparent layer comprises one or more optically effective substances, for example a substance which imparts a coloured tint, such hat the appearance of the optically variable effect generated by the relief structure is different when viewed through the first transparent layer compared with when viewed through the second transparent layer.

### [Citation List]

### [Patent Literature]

PTL 1: JP 4194073 B
PTL 2: JP 2524092 U
PTL 3: JP 4088884 B
PTL 4: WO 98/53013
PTL 5: WO 96/20968
PTL 6: EP 0688840 A
PTL 7: WO 96/40813
PTL 8: WO 93/17060
PTL 9: WO 97/31073
PTL 10: WO 2004/031256
PTL 11: WO 2005/035613
PTL 12: JP S61-98751 A
PTL 13: JP S63-23909 A
PTL 14: JP S63-23910 A
PTL 15: JP 2007-118563 A
PTL 16: WO 2015/107347 A1
PTL 17: JP 2014 240892 A
PTL 18: GB 2 510 499 A

### [Non-Patent Literature]

NPL 1: E. P. Kohler et al., J. Am. Chem. Soc., Vol. 49, pp. 3181-3188 (1927)

### [Summary of the Invention]

### [Technical Problem]

Therefore, the main aim of the present invention is to provide an optical information medium in which the reflective layer is registered with the pattern of the fine uneven structure forming layer to a high degree, so that one would not have a feeling of positional deviation between the reflective layer and the pattern of the fine uneven structure forming layer even when the color of the region where the reflective layer is present is different from the color of the region where the reflective layer is not present. More preferably, the present invention has an aim of providing an optical information medium in which the region provided with a reflective layer is tinted to have one or more colors, and a colored layer that is not colorless is accurately registered with the reflective layer to thereby exert a colored glossy effect.

As a further preferred mode, the present invention has an aim of obtaining a demetallized optical information medium for observing a reflective layer from a fine uneven structure forming layer side (front side), wherein the reverse side provided with the reflective layer and a mask layer is colored, and the coloration position and the patterning position of the fine uneven structure forming layer are well aligned with each other to an extent that one would not have a feeling of positional deviation therebetween under observation from the reverse side. Specifically, the present invention has an aim of providing an optical information medium having a region provided with a reflective layer, which is colored so as to differently appear as observed from the front side and as observed from the reverse side, and exhibiting a glossy effect on both sides with the registration being sufficient.

### [Solution to Problem]

### [First aspect of the present invention]

A first aspect of the present invention is an optical information medium as defined in the appended claim 1.

The fine uneven structure-containing part may be colorless, or may be tinted to have one or more translucent or opaque colors. Furthermore, at least one of the image parts may have a fine uneven structure-containing part tinted to have one or more translucent or opaque colors.

### [Second aspect of the present invention]

A second aspect of the present invention is the optical information medium according to the first aspect of the present invention, characterized in that the image part further includes a back-surface coloring part, and the back-surface coloring part is formed on the mask layer.

### [Third aspect of the present invention]

A production method is provided which is useful for producing an optical information medium of the first or second aspect of the present invention. Specifically, the production method is characterized in that the method includes: (I) a step of preparing a bonding part (receiving layer), the bonding part having a surface including a first region and a second region, at least the second region being provided with a selective-etching-enabling structure; (II) a step of forming at least one image part on the first region of the bonding part, the step of forming the image part including: (II-1) a sub-step of forming a fine uneven structure-containing part on the first region of the bonding part, the fine uneven structure-containing part having a surface on a side opposite to the bonding part, which is provided with a fine uneven structure, (II-2) a sub-step of forming a reflective material layer, covering the second region of the bonding part and the fine uneven structure, (II-3) a sub-step of forming a mask material layer on the second region of the bonding part and the fine uneven structure, covering the reflective material layer, and (II-4) a sub-step of selectively etching the reflective material layer to leave the reflective layer and the mask layer only on the fine uneven structure-containing part; and (III) a step of optionally forming an adhesive layer (protective layer), covering the at least one image part. In the method, the selective-etching-enabling structure is a concavo-convex structure and has a specific surface area greater than a specific surface area of the fine uneven structure; the specific surface area of the selective-etching-enabling structure can be estimated by dividing a total surface area of the second region including unevenness of the selective-etching-enabling structure, by a total surface area of the second region when the second region is taken to be perfectly flat without including unevenness of the selective-etching-enabling structure; the specific surface area of the fine uneven structure can be estimated by dividing a total surface area of the fine uneven structure including unevenness of the fine uneven structure by a total surface area of the first region when the first region is taken to be perfectly flat without including unevenness of the fine uneven structure; and the selective etching is performed making use of a difference in thicknesses between the reflective layer and the mask layer based on a difference in specific surface area between the selective-etching-enabling structure and the fine uneven structure.

More preferably, between the sub-steps (II-3) and (II-4), the method may include (II-3') a sub-step of forming a back-surface coloring material layer at a position corresponding to the fine uneven structure-containing part, covering the fine uneven structure-containing part. In this case, in the sub-step (II-4), the back-surface coloring material layer is concurrently removed while the reflective layer, on which the back-surface coloring material layer is present, is subjected to selective removal, resultantly leaving a back-surface coloring part only on the fine uneven structure-containing part.

The fine uneven structure-containing part may be colorless, or may be tinted to have one or more translucent or opaque colors, and at least one of the image parts may have a fine uneven structure-containing part tinted to have one or more translucent or opaque colors.

### [Fourth aspect of the present invention]

A fourth aspect of the present invention is a transfer foil characterized in that the transfer foil includes: the optical information medium according to the first or second aspect; and a first carrier substrate contacting the bonding part (receiving layer). In the transfer foil, the first carrier substrate is peelable from the bonding part (receiving layer) at an interface therebetween.

### [Fifth aspect of the present invention]

A fifth aspect of the present invention is a label characterized in that the label includes: the optical information medium according to the first or second aspect; a second carrier substrate contacting the bonding part; and a release substrate (peel sheet) contacting the adhesive layer (protective layer). In the label, the adhesive layer (protective layer) has tackiness, and the release substrate (peel sheet) is peelable from the adhesive layer (protective layer) at an interface therebetween.

Herein, a structure including the optical information medium of the first or second aspect and a second carrier substrate contacting the bonding part is referred to as label body.

### [Sixth aspect of the present invention]

A sixth aspect of the present invention is a thread to be embedded characterized in that the thread to be embedded (hereinafter referred to as embedding thread) includes: the optical information medium according to the first or second aspect; a third carrier substrate contacting the bonding part (receiving layer); and a carrier substrate-side adhesive layer (second adhesive layer) contacting the third carrier substrate.

### [Seventh aspect of the present invention]

A seventh aspect of the present invention is a laminate including a receiving substrate; and the optical information medium according to the first or second aspect, the label body derived from the fourth aspect, or the embedding thread derived from the fifth aspect, bonded to the receiving substrate.

### [Advantageous Effects of the Invention]

By adopting the configuration of the first aspect of the present invention, an optical information medium can be provided having one or more image parts having a glossy appearance when observed from the bonding part (receiving layer) side, and the reflective layer is more accurately registered with the pattern of the fine uneven structure forming layer, or a light transmission region is more accurately registered with a region where the reflective layer is present. In a more preferred mode, an optical information medium can be provided in which a colored layer with at least one fine uneven structure forming layer being colored is more accurately registered with a reflective layer, or an optical information medium can be provided in which a colored layer with a region having no reflective layer being colorless is more accurately registered with a reflective layer. In an even more preferred mode, an optical information medium can be provided which includes one or more image parts having a non-silver glossy appearance such as a gold or copper color appearance. Thus, the optical information medium may have higher designability and higher counterfeit resistance. Further, in a more preferred mode, an optical information medium can be provided having higher designability and higher counterfeit resistance, which includes a plurality of separated regions provided with respective reflective layers, wherein each of these regions has one or a plurality of different colors, colored layers which are not colorless are accurately registered with the reflective layers, a plurality of colored glossy effects are exhibited, and more preferably the region having no reflective layer is colorless.

Further, by adopting the configuration of the second aspect of the present invention, an optical information medium can be provided in which the region where a reflective layer is present further exhibits colored glossy effects which are different between when observed from the front surface and when observed from the reverse surface. For example, in a more preferred mode, the fine uneven structure-containing part and the back-surface coloring part may be differently colored in each of one or more image parts to obtain a glossy appearance which is different between observations from the front and back surfaces. Thus, designability and counterfeit resistance may be more enhanced. In a more preferred mode, one or more image parts exhibiting a non-silver glossy appearance such as a gold or copper color appearance as observed from the bonding part may be provided with fine uneven structure-containing parts to provide an optical information medium having higher designability and a higher counterfeit resistance with perfect registration between the colored layer and the reflective layer.

These optical information media of the first and second aspects of the present invention are difficult to form using conventional pressing, casting or photopolymerization. Further, since these optical information media can exhibit a glossy appearance by coloration of the constituent layers other than the reflective layer, selection of the material of the reflective layer is not limited. For example, the reflective layer can be formed using a material having physical strength and chemical resistance equal to or higher than those of aluminum. Further, by providing a plurality of colored parts in each of one or more image parts, designability or counterfeit resistance can be more enhanced.

The optical information medium having the aforementioned configurations can be used as a transfer foil (fourth aspect of the present invention), a label (fifth aspect of the present invention), an embedding thread (sixth aspect of the present invention), or the like. As still another mode, the optical information medium having the aforementioned configurations may be incorporated into a receiving substrate, which may have a printed part, to provide a laminate or printed matter thereof (seventh aspect of the present invention) having high designability or high counterfeit resistance.

Thus, the aforementioned optical information medium is useful in various industries.

### [Brief Description of the Drawings]

Fig. 1 is a schematic cross-sectional view illustrating an optical information medium, according to a first embodiment of the present invention. It should be noted that, in the drawings, reference signs 40a to 40d, 42a to 42d, 44a to 44d, and 46a to 46d may be collectively indicated as 40, 42, 44, and 46 respectively. The same applies to the following drawings.
Fig. 2 is a schematic cross-sectional view illustrating a transfer foil, according to a fourth embodiment of the present invention which is derived from the first embodiment of the present invention.
Fig. 3 is a schematic cross-sectional view illustrating a label, according to a fifth embodiment of the present invention which is derived from the first embodiment of the present invention.
Fig. 4 is a schematic cross-sectional view illustrating an embedding thread, according to a sixth embodiment of the present invention which is derived from the first embodiment of the present invention.
Fig. 5 is a schematic plan view illustrating one configuration example of printed matter including an optical information medium transferred onto a receiving substrate, according to a seventh embodiment of the present invention which is derived from the first embodiment of the present invention.
Fig. 6 is a schematic plan view illustrating another configuration example of printed matter including a label bonded to a receiving substrate, according to the seventh embodiment of the present invention which is derived from the first embodiment of the present invention.
Fig. 7 is a schematic cross-sectional view illustrating another configuration example of printed matter including an embedding thread embedded in a receiving substrate, according to the seventh embodiment of the present invention which is derived from the first embodiment of the present invention.
Fig. 8 is a schematic diagram illustrating an example of a device used for producing the optical information medium (refer to the third embodiment of the present invention), according to the first or second embodiment of the present invention.
Fig. 9 is a schematic plan view illustrating printed matter of Example 1 including an optical information medium transferred onto a receiving substrate, as derived from the first embodiment of the present invention.
Fig. 10 is a schematic plan view illustrating printed matter of Example 2 including a label bonded to a receiving substrate, as derived from the first embodiment of the present invention.
Fig. 11 is a schematic plan view illustrating printed matter of Example 3 including an optical information medium transferred onto a receiving substrate, as derived from the first embodiment of the present invention.
Fig. 12 is a schematic plan view illustrating printed matter of Example 4 including a label bonded to a receiving substrate, as derived from the first embodiment of the present invention.
Fig. 13 is a schematic plan view illustrating printed matter of Example 5 including an embedding thread embedded in a receiving substrate, as derived from the first embodiment of the present invention.
Fig. 14 is a schematic cross-sectional view illustrating a transfer foil of Example 6, as derived from the first embodiment of the present invention.
Fig. 15 is a schematic plan view illustrating printed matter of Example 6 including an optical information medium transferred onto a receiving substrate, as derived from the first embodiment of the present invention.
Fig. 16 is a schematic plan view illustrating printed matter of Example 7 including an unseparated image part and an optical information medium transferred onto a receiving substrate, as derived from the first embodiment of the present invention.
Fig. 17 is a schematic plan view illustrating printed matter of Example 8 including an optical information medium which includes an unseparated image part and has been transferred onto a receiving substrate, as derived from the first embodiment of the present invention.
Fig. 18 is a schematic plan view illustrating printed matter of Example 9 including a label which includes an unseparated image part and has been bonded to a receiving substrate, as derived from the first embodiment of the present invention .
Fig. 19 is a schematic plan view illustrating printed matter of Example 10 including an embedding thread which includes an unseparated image part and has been embedded in a receiving substrate, as derived from the first embodiment of the present invention.
Fig. 20 is a schematic plan view illustrating printed matter of Example 11 including an optical information medium which includes an unseparated image part and has been transferred onto a receiving substrate, as derived from the first embodiment of the present invention.
Fig. 21 is a schematic cross-sectional view illustrating an example of the optical information medium according to the second embodiment of the present invention. It should be noted, in the drawings, reference signs 40a to 40d, 42a to 42d, 44a to 44d, 46a to 46d, and 48a to 48d may be collectively indicated as 40, 42, 44, 46, and 48 respectively. The same applies to the following drawings.
Fig. 22 is a schematic cross-sectional view illustrating a transfer foil, according to the fourth embodiment of the present invention which is derived from the second embodiment of the present invention.
Fig. 23 is a schematic cross-sectional view illustrating an example of a label, according to the fifth embodiment of the present invention which is derived from the second embodiment of the present invention.
Fig. 24 is a schematic cross-sectional view illustrating an example of an embedding thread, according to the sixth embodiment of the present invention which is derived from the second embodiment of the present invention.
Fig. 25A is a schematic plan view illustrating an example of the front side of printed matter including an optical information medium transferred onto a receiving substrate, according to the seventh embodiment of the present invention which is derived from the second embodiment of the present invention.
Fig. 25B is a schematic plan view illustrating an example of the reverse side of the printed matter including an optical information medium transferred onto a receiving substrate, according to the seventh embodiment of the present invention which is derived from the second embodiment of the present invention.
Fig. 26A is a schematic plan view illustrating another example of the front side of printed matter including a label bonded to a receiving substrate, according to the seventh embodiment of the present invention which is derived from the second embodiment of the present invention.
Fig. 26B is a schematic plan view illustrating another example of the reverse side of the printed matter including a label bonded to a receiving substrate, according to the seventh embodiment of the present invention which is derived from the second embodiment of the present invention.
Fig. 27A is a schematic plan view illustrating still another example of the front side of printed matter including an embedding thread embedded in a receiving substrate, according to the seventh embodiment of the present invention which is derived from the second embodiment of the present invention.
Fig. 27B is a schematic plan view illustrating still another example of the reverse side of the printed matter including an embedding thread embedded in a receiving substrate, according to the seventh embodiment of the present invention which is derived from the second embodiment of the present invention.
Fig. 28A is a schematic plan view illustrating the front side of printed matter of Example 12 including an optical information medium transferred onto a transparent receiving substrate, as derived from the second embodiment of the present invention.
Fig. 28B is a schematic plan view illustrating the reverse side of the printed matter of Example 12 including an optical information medium transferred onto a transparent receiving substrate, as derived from the second embodiment of the present invention.
Fig. 29A is a schematic plan view illustrating the front side of printed matter of Example 13 including a label bonded to a transparent receiving substrate, as derived from the second embodiment of the present invention.
Fig. 29B is a schematic plan view illustrating the reverse side of the printed matter of Example 13 including a label bonded to a transparent receiving substrate, as derived from the second embodiment of the present invention.
Fig. 30A is a schematic plan view illustrating the front side of printed matter of Example 14 including an optical information medium transferred onto a transparent receiving substrate, as derived from the second embodiment of the present invention.
Fig. 30B is a schematic plan view illustrating the reverse side of the printed matter of Example 14 including an optical information medium transferred onto a transparent receiving substrate, as derived from the second embodiment of the present invention.
Fig. 31A is a schematic plan view illustrating the front side of printed matter of Example 15 including a label bonded to a transparent receiving substrate, as derived from the second embodiment of the present invention.
Fig. 31B is a schematic plan view illustrating the reverse side of the printed matter of Example 15 including a label bonded to a transparent receiving substrate, as derived from the second embodiment of the present invention.
Fig. 32A is a schematic plan view illustrating the front side of printed matter of Example 16 including an embedding thread embedded in an opaque receiving substrate, as derived from the second embodiment of the present invention.
Fig. 32B is a schematic plan view illustrating the reverse side of the printed matter of Example 16 including an embedding thread embedded in an opaque receiving substrate, as derived from the second embodiment of the present invention.
Fig. 33 is a schematic cross-sectional view illustrating a transfer foil of Example 17, as derived from the second embodiment of the present invention.
Fig. 34A is a schematic plan view illustrating the front side of printed matter of Example 17 including an optical information medium transferred onto an opaque receiving substrate, as derived from the second embodiment of the present invention.
Fig. 34B is a schematic plan view illustrating the reverse side of the printed matter of Example 17 including an optical information medium transferred onto an opaque receiving substrate, as derived from the second embodiment of the present invention.
Fig. 35A is a schematic plan view illustrating the front side of printed matter of Example 18 including an optical information medium which includes an unseparated image part and has been transferred onto a transparent substrate, as derived from the second embodiment of the present invention.
Fig. 35B is a schematic plan view illustrating the reverse side of the printed matter of Example 18 including an optical information medium which includes an unseparated image part and has been transferred onto a transparent substrate, as derived from the second embodiment of the present invention.
Fig. 36A is a schematic plan view illustrating the front side of printed matter of Example 19 including an optical information medium which includes an unseparated image part and has been transferred onto a transparent substrate, as derived from the second embodiment of the present invention.
Fig. 36B is a schematic plan view illustrating the reverse side of the printed matter of Example 19 including an optical information medium which includes an unseparated image part and has been transferred onto a transparent substrate, as derived from the second embodiment of the present invention.
Fig. 37A is a schematic plan view illustrating the front side of printed matter of Example 20 including a label which includes an unseparated image part and has been bonded to a transparent substrate, as derived from the second embodiment of the present invention.
Fig. 37B is a schematic plan view illustrating the reverse side of the printed matter of Example 20 including a label which includes an unseparated image part and has been bonded to a transparent substrate, as derived from the second embodiment of the present invention.
Fig. 38A is a schematic plan view illustrating the front side of printed matter of Example 21 including an embedding thread which includes an unseparated image part and has been embedded in an opaque substrate, as derived from the second embodiment of the present invention.
Fig. 38B is a schematic plan view illustrating the reverse side of the printed matter of Example 21 including an embedding thread which includes an unseparated image part and has been embedded in an opaque substrate, as derived from the second embodiment of the present invention.
Fig. 39A is a schematic plan view illustrating the front side of printed matter of Example 22 including an optical information medium which includes an unseparated image part and has been transferred onto an opaque substrate, as derived from the second embodiment of the present invention.
Fig. 39B is a schematic plan view illustrating the reverse side of the printed matter of Example 22 including an optical information medium which includes an unseparated image part and has been transferred onto an opaque substrate, as derived from the second embodiment of the present invention.

### [Description of the Embodiments]

With reference to the drawings, several embodiments of the present invention will be described below by way of examples. In the present invention, the terms front side and reverse side are defined by the positional relationship between a bonding part and an adhesive layer, in which the surface closer to the bonding part is taken to be the front side, and the surface closer to the adhesive layer is taken to be the reverse side.

### (A) First embodiment of the present invention

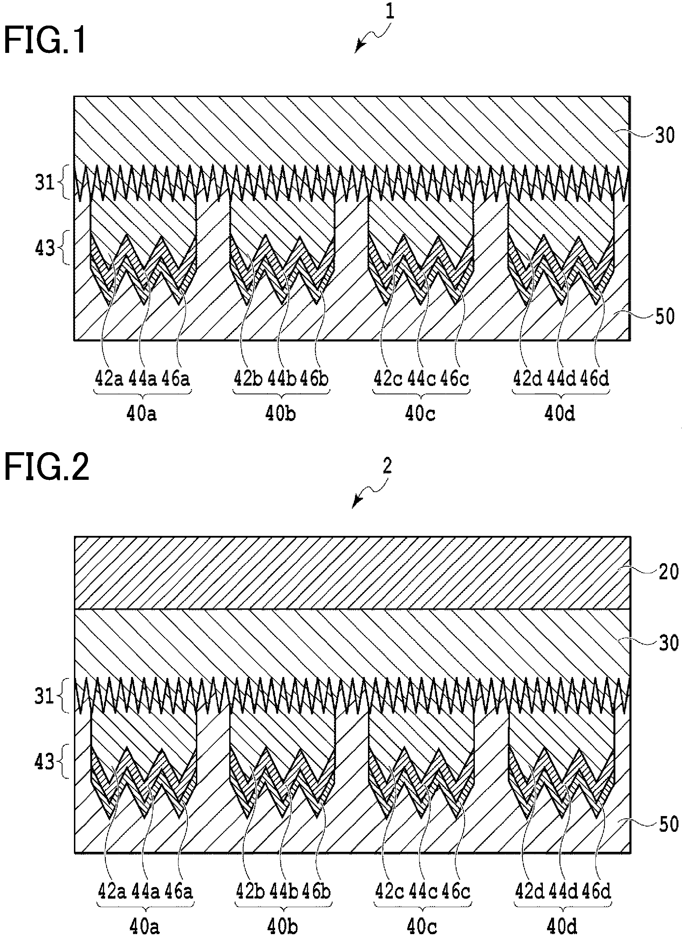

As shown in Fig. 1, an optical information medium 1 of a first embodiment of the present invention includes: (i) a bonding part (receiving layer) 30; (ii) at least one image part 40; and (iii) an adhesive layer (protective layer) 50 covering the at least one image part. These are the main components of the optical information medium 1 of the first embodiment of the present invention.

At least one image part is arranged on part of the bonding part (receiving layer). The at least one image part and the bonding part (receiving layer) not having the at least one image part are covered with the adhesive layer (protective layer).

The image part includes main components of: (ii-1) a fine uneven structure-containing part 42 having a fine uneven structure; (ii-2) a reflective layer 44; and (ii-3) a mask layer 46, in this order from the bonding part (receiving layer) 30. The image part (fine uneven structure-containing part) is formed on part of a surface (first region) of the bonding part. The bonding part (receiving layer) 30 has a selective-etching-enabling structure on an image part (fine uneven structure-containing part) side surface (second region) that is the surface other than at least the first region.

Fig. 1 shows only an example of the present embodiment. Fig. 1 illustrates an example where four image parts (40a to 40d) are provided, but the number of independent image parts may be determined as desired, and may be, for example, 1, 2, 3, or 5 or more.

Referring to Fig. 1, the components will be more specifically described.

### (A-1) Bonding part

The bonding part 30 maintains the at least one image part 40 at a predetermined position. The bonding part 30 desirably has a thickness in the range of 1 µm to 20 µm, from the viewpoint of transparency and supporting the fine uneven structure-containing part. Further, the bonding part 30 is preferably colorless, from the viewpoint of visibility of the fine uneven structure-containing part. Further, the bonding part 30 preferably has a transmittance in the range of 10% to 95%, and more preferably 50% to 95% within a wavelength range of 400 nm to 700 nm, from the viewpoint of visibility and designability of the fine uneven structure-containing part. The bonding part 30 is preferably made of an adhesive resin. The adhesive resin that is usable may be a thermoplastic resin. If the adhesive resin is a thermoplastic resin, the selective-etching-enabling structure is easily formed. Non-limiting examples of the adhesive resin include polyester resin, acrylic resin, vinyl chloride resin, vinyl resin, polyamide resin, vinyl acetate resin, rubber-based resin, ethylene-vinyl acetate copolymer resin, vinyl chloride-vinyl acetate copolymer resin, and the like.

### Selective-etching-enabling structure

When the image part 40 side [fine uneven structure-containing part 42 side] surface of the bonding part 30 is divided into a first region where an image part (fine uneven structure-containing part) is formed and a second region having no image part (fine uneven structure-containing part), at least the second region has a selective-etching-enabling structure 31 (may be termed sub-wavelength structure).

The selective-etching-enabling structure 31 refers to a concavo-convex structure, or a structure having a specific surface area greater than that of the fine uneven structure 43. The specific surface area of the selective-etching-enabling structure 31 can be estimated by dividing the total surface area of the second region including unevenness of the structure 31, by the total surface area of the second region when the second region is taken to be perfectly flat without including unevenness of the structure 31. The specific surface area of the fine uneven structure 43 can be estimated by dividing the total surface area of the structure 43 including unevenness of the structure 43 by the total surface area of the first region when the first region is taken to be perfectly flat without including unevenness of the structure 43. By using the difference in specific surface area, thickness is made different between the reflective layer and the mask layer, for selective etching when producing the optical information medium of the present invention. This will be described later in item (C) regarding a third embodiment of the present invention.

From the viewpoint of such selective etching, (specific surface area of selective-etching-enabling structure) / (specific surface area of fine uneven structure) is preferably 1.2 or more, and more preferably 1.5 or more.

Fig. 1 shows an example in which the selective-etching-enabling structure 31 is formed on the overall image part 40 side surface of the bonding part 30, but for the purpose of selective etching, the selective-etching-enabling structure 31 only has to be provided to the second region [the image part 40 side surface of the bonding part 30 having no image part 40]. However, if a moth-eye configuration, which will be described next, is used as the selective-etching-enabling structure 31, the first region may also be provided with the selective-etching-enabling structure 31 as shown in Fig. 1. This is advantageous in that the adhesiveness rather increases with the materials forming the image part being filled into the concavo-convex structure.

The concavo-convex structure of the selective-etching-enabling structure 31 may, more specifically, be a uniaxially arrayed single grating structure or a biaxially arrayed cross grating structure (moth-eye configuration), or may be a structure having a random period and depth, e.g., a uniaxially arrayed single grating structure or a biaxially arrayed cross grating structure (moth-eye configuration) in which the period and the depth vary in a predetermined range depending on the location.

The selective-etching-enabling structure 31 preferably has a period in the range of 50 nm to 500 nm (less than 500 nm), and more preferably 200 nm to 400 nm (less than 400 nm) from the viewpoint of ease of etching. Specifically, it is preferable that the period of the selective-etching-enabling structure 31 is 50 nm or more from the viewpoint of ease of formation, and it is preferable that the period is less than 500 nm from the viewpoint of avoiding generating diffracted light. The depth range of the selective-etching-enabling structure 31 is preferably in the range of 50 nm to 800 nm (less than 800 nm), more preferably 50 nm to 500 nm, and even more preferably 200 nm to 450 nm (less than 450 nm) from the viewpoint of ease of etching. Specifically, it is preferable that the depth of the selective-etching-enabling structure 31 is 200 nm or more from the viewpoint of ease of selective etching, and the depth of less than 450 nm is preferable from the viewpoint of ease of formation.

The period of the selective-etching-enabling structure 31 refers to the length of one concavity and one convexity adjacent to each other in a direction on the surface where the selective-etching-enabling structure 31 is formed. This period may vary somewhat, but is preferably as constant as possible from the viewpoint of forming a uniform reflective film on the selective-etching-enabling structure 31 in the production process, as will also be described in Item (C). When the selective-etching-enabling structure 31 uses a single grating structure, the period is present in one direction, but when the selective-etching-enabling structure 31 has a cross grating structure, the period is present in two different directions (two types of periods). In the case of the cross-grating structure, the two directions may preferably be the direction with the shortest period and the direction with the second shortest period, but either of the two directions may be either of the periods. The two types of periods in the cross-grating structure may be the same. In this case, it is preferable that the two directions have either of the periods mentioned above. The two directions with this same period may be orthogonal to each other, but the present invention is not limited to this, and the two directions do not have to be orthogonal to each other.

Further, the depth of the selective-etching-enabling structure 31 refers to a vertical distance from the highest part of each convexity to the deepest part of the concavity.

Further, when there are two or more discrete selective-etching-enabling structures 31, such as when there are two or more image parts, the period and the depth can be estimated for each of the selective-etching-enabling structures 31.

Since the selective-etching-enabling structure 31 has a specific surface area greater than that of the fine uneven structure 43 to be described later, the period is usually shorter than the period of the fine uneven structure 43, and/or the depth is greater than the depth of the fine uneven structure 43. The selective-etching-enabling structure 31 is selected from the group consisting of, for example, a relief hologram, a diffraction grating, a scattering structure, a directional structure, an interference structure, a blazed grating, a micro lens, a polarizer, a Fresnel lens, a lenticular lens, a diffusion structure, and an anti-reflective structure. The selective-etching-enabling structure 31 may be a uniaxially arrayed single grating structure, a biaxially arrayed cross grating structure (moth-eye configuration), or a structure having a random period and depth. The selective-etching-enabling structure 31 may be formed by applying a method of pressing, casting or photopolymerization to part of or the entire continuous surface of the bonding part 30. The thickness of the bonding part 30 may be in the range of 0.5 µm or more and 30 µm or less.

### (A-2) Image part

The image part 40 includes the fine uneven structure-containing part 42, the reflective part 44 and the mask part 46 and contributes to image forming (see Fig. 1). The image part 40 has a structure in which the fine uneven structure-containing part 42, the reflective part 44 and the mask part 46 are laminated. The image part 40 is arranged on part of the selective-etching-enabling structure of the bonding part 30. The image part 40 is preferably in contact with the selective-etching-enabling structure of the bonding part 30.

The image part 40 may be an unseparated image part, or two or more discrete image parts. For the sake of convenience, whether there is one image part, or two or more (i.e., a plurality of) image parts, depends on the number of discrete image parts. The term discrete refers to a plurality of image elements in question being neither integrated nor in contact with each other at the level of the fine uneven structure-containing part 42. Further, in at least one image part, the fine uneven structure-containing part may be colorless, or may be tinted to have one color. Alternatively, in at least one of the image parts, the fine uneven structure-containing part may be tinted to have two or more colors. Alternatively, in at least one of the image parts, the fine uneven structure-containing part may have a peripheral area having tinted to have one color, and an inner area surrounded by the peripheral area tinted to have one or more colors different from the color of the peripheral area. Furthermore, a fine uneven structure-containing part of an image part, in the case of a plurality of image parts being provided, may be tinted differently from the fine uneven structure-containing parts of other image parts.

Fig. 1 shows an example where a plurality of image parts 40a to 40d are provided so as to have the same area and the same fine uneven structure in plan view. However, the number of image parts may be one. If there are a plurality of image parts 40, at least two of them may have areas different from others in plan view. Alternatively, if there are a plurality of image parts 40, the areas thereof may be different from each other in plan view.

Furthermore, when there are a plurality of image parts 40, one image part (e.g., 40a) may have a fine uneven structure-containing part 42a provided with a fine uneven structure whose configuration is different from those of the fine uneven structures (e.g., 42b to 42d) of other fine uneven structure-containing parts (e.g., 40b to 40d).

Alternatively, when there are a plurality of image parts 40, the fine uneven structure-containing parts 42 may have fine uneven structures provided with configurations different from each other.

These modifications may further enhance the degree of freedom or designability of the information to be displayed on the optical information medium 1 of the present embodiment.

### (A-3) Fine unevenness-containing part

Materials that can be used for the fine uneven structure-containing part 42 include a thermosetting resin, an oxidative-polymerizable resin, a reactive curable resin, an ultraviolet curable resin, an electron beam curable resin, a thermoplastic resin, and the like. Non-limiting examples of the thermoplastic resin include an acrylic resin, a cellulosic resin, a polyester resin, a vinyl resin, a rubber-based resin, a polyamide resin, a thermoplastic polyimide resin, a polycarbonate resin, a liquid crystal polymer, and the like.

The fine uneven structure-containing part 42 which is one constituent element of an image part is not a layer that is continuously formed on the surface of the bonding part 30, but is formed on only the first region that is the image part-side surface of the bonding layer.

This is because the difference between the specific surface area of the fine uneven structure and that of the etching part can be utilized in selective etching of the reflective layer and the mask layer to be described later.

There fine uneven structure-containing part 42 of the present embodiment may be one, but when provided two or more, they may be independently formed on the respective image parts 40, and may be disposed at a desired interval therebetween.

From the viewpoint of formability, the fine uneven structure-containing part 42 may have a thickness in the range of 0.5 µm to 30 µm, and preferably in the range of 0.1 µm to 10 µm. Further, from the viewpoint of facilitating formation of the fine uneven structure-containing part 42, the fine uneven structure-containing part 42 desirably has a thickness that is three to ten times the thickness of the maximum height of the fine uneven structure on the surface thereof. Although it depends on the viscosity (fluidity) of the uncured resin used for the fine uneven structure-containing part 42, the thickness mentioned above can prevent overflow of the uncured resin and generation of wrinkles therein to achieve a fine uneven structure-containing part 42 of a good configuration.

### Color of the uneven structure-containing part

The fine uneven structure-containing part 42 may be colorless, or may be tinted to have one or more translucent or opaque colors. The term translucent herein refers to a colored state of allowing passage of light incident on the reflective layer 44 and light reflected therefrom to the extent of enabling visual recognition of the optical effect of the fine uneven structure. The term opaque refers to a colored state of blocking the light incident on the reflective layer 44 and the light reflected therefrom to the extent of disabling visual recognition of the optical effect of the fine uneven structure. However, from the viewpoint of fulfilling the function of the reflective layer 44, the fine uneven structure-containing part 42 is preferably at least partially transparent or translucent.

As will be described later, when there are a plurality of fine uneven structure-containing parts 42, the individual parts 42 may be permitted to have respective different colors by printing. Thus, various design appearances can be realized compared to when forming a fine uneven structure on a surface of an integrated layer which is uniformly formed on the overall surface.

In the present embodiment, if there are a plurality of image parts 40, the respective fine uneven structure-containing parts 42 may be colorless, or may be tinted to have one color. Further, one fine uneven structure-containing part may be tinted to have two or more colors. If there are a plurality of fine uneven structure-containing parts 42, at least one of them may be tinted to have two or more colors. For example, in at least one of the image parts 40, the fine uneven structure-containing part 42 may have a peripheral area tinted to have one color, and an inner area surrounded by the peripheral area tinted to have one or more colors different from the color of the peripheral area.

In a preferred configuration example, if there are a plurality of image parts, one image part, e.g., the image part 40a may have a fine uneven structure-containing part 42a whose color is different from those of the fine uneven structure-containing parts 42b to 42d of other image parts (e.g., 40b to 40d).

In a more preferred configuration example, if there are a plurality of image parts, each of the respective image parts 40 may have fine uneven structure-containing parts 42 whose color is different from those of the fine uneven structure-containing parts 42 of other image parts 40.

Herein, two fine uneven structure-containing parts 42 "whose colors are different from each other" refers to: (i) one fine uneven structure-containing part is colorless, and the other fine uneven structure-containing part is tinted to have one or more colors; (ii) if the two fine uneven structure-containing parts are each tinted to have one color, the color of one fine uneven structure-containing part is different from the color of the other fine uneven structure-containing part; or (iii) if both of the two fine uneven structure-containing parts are each tinted to have a plurality of colors, at least one of the colors of one fine uneven structure-containing part is not included in the other fine uneven structure-containing part.

### Fine uneven structure

The fine uneven structure-containing part 42 preferably has a reflective layer 44 side surface which is provided with a fine uneven structure 43 selected from the group consisting of a relief hologram, a diffraction grating, a scattering structure, a directional structure, an interference structure, a blazed grating, a polarizer, a refraction structure, and a light absorbing structure. The refraction structure may be a micro lens, a Fresnel lens, a lenticular lens, a prism structure, or a diffusion structure. More preferably, the fine uneven structure (43) may have a diffraction grating structure, a directional scattering structure, a nondirectional scattering structure, or the like.

As described above, the specific surface area of the fine uneven structure 43 is smaller than the specific surface area of the selective-etching-enabling structure. Generally, the period is preferably less than 500 nm. The fine uneven structure 43 typically has a period of 500 nm or more and less than 100 µm and a depth of 50 nm or more and less than 10 µm, and preferably has a period of 500 nm or more and less than 10 µm and a depth of 100 nm or more and less than 5 µm. The period of the fine uneven structure 43 being 500 nm or more is preferable from the viewpoint of it being more unlikely to be etched than in the selectively etchable region. The period being less than 100 µm is preferable from the viewpoint of making the fine uneven structure 43 unlikely to be visually recognized. The depth of the fine uneven structure 43 being 50 nm or more is preferable from the viewpoint of ease of diffracting, scattering, absorbing, or deflecting light. The depth being less than 10 µm is preferable from the viewpoint of ease of formation.

Fig.1 shows an example of the case in which the overall reflective layers 44a to 44d-side surfaces of the respective fine uneven structure-containing parts 42a to 42d are provided with an uneven structure. However, the fine uneven structure-containing part 42 may have the fine uneven structure 43 only in part of the reflective layer-side surface, and the rest of the surface may be flat.

Alternatively, several types of fine uneven structures 43 may be provided to the reflective layer-side surface of one fine uneven structure-containing part 42.

Further, when there are a plurality of fine uneven structure-containing parts (e.g., 42a to 42d), one image part (e.g., 40a) may have a fine uneven structure-containing part 42a whose fine uneven structure is different from those of fine uneven structure-containing parts 42b to 42d of other image parts (e.g., 40b to 40d).

### (A-4) Reflective layer

The reflective layer 44 which is one constituent element of the image part is provided on the fine uneven structure-containing part 42.

The reflective layer 44 is not present in regions where there is no fine uneven structure-containing part 42 (i.e., is not present on the second region of the bonding part).

The reflective layer 44 has a fine uneven structure-containing part 42 side surface having unevenness conforming to the fine uneven structure of the fine uneven structure-containing part 42, and has a mask layer 46 side surface, when seen from the mask layer side, having unevenness corresponding to an inversion of the fine uneven structure of the fine uneven structure-containing part 42. In other words, both sides of the reflective layer 44 provides optical effects caused by the fine uneven structure of the fine uneven structure-containing part 42. Resultantly, the reflective layer 44 can exhibit a colored glossy appearance caused by the combination of the colors of the reflective layer 44 and the fine uneven structure-containing part 42, if they are tinted, under observation from the front side. It should be noted that, if the fine uneven structure-containing part 42 has a surface with a region not having the fine uneven structure 43, the reflective layer 44 covering such a region provides regular reflection light.

As will be described in item (C) below, when forming the reflective material layer as a continuous layer across the overall surface of the optical information medium, the reflective material layer is relatively thinly formed on the selective-etching-enabling structure 31, because of the difference in specific surface area between the selective-etching-enabling structure 31 of the bonding layer 30 and the fine uneven structure of the fine uneven structure-containing part 42. When forming a mask material layer as a layer continuous from above the reflective material layer, the mask material layer is relatively thinly formed on the selective-etching-enabling structure 31 similarly to the reflective material layer. The selective-etching-enabling structure 31 relatively thinly provided with the mask material layer and the reflective material layer is selectively removed by etching using the mask material layer as a mask to thereby form the reflective layer 44 and the mask layer 46. Finally, the reflective layer 44, when formed by vapor deposition on the fine uneven structure-containing part, preferably has a thickness in the range of 10 nm to 300 nm method. As will be described later, when forming a reflective layer 44 by printing, it is desirable that the dry thickness is adjusted to the range of 1 nm to 10 µm.

Further, as will be described in item (C), from the viewpoint of more effectively transferring unevenness of the fine uneven structure and the selective-etching-enabling structure to the mask-layer-forming surface of the reflective layer (reflective material layer) before being etched, the reflective layer preferably has a thickness that is not more than (the minimum of) the period of the selective-etching-enabling structure, and not more than (the minimum of) the depth of the fine uneven structure.

The reflective layer 44 typically has the same configuration as the fine uneven structure-containing part 42 in plan view. The term configuration in plan view refers to a configuration as observed from a direction normal to the surface of the bonding part 30. However, the reflective layer 44 may be formed only in a region that is part of the fine uneven structure-containing part 42. Such a reflective layer 44 can be formed by paster processing, washout Celite processing, laser processing, or the like. Alternatively, tin or the like may be vapor-deposited to provide a fine sea-island structure reflective material layer, followed by etching using the mask layer 46 as a mask to thereby obtain a sea-island reflective layer 44. The term sea-island structure reflective layer refers to a discontinuous layer constituted of a plurality of discrete reflective materials, or a reflective material layer having a plurality of through holes.

By providing the reflective layer 44 only partially, i.e. only on the fine uneven structure-containing part 42, the glossy appearance caused by the combination of colors of the reflective layer 44 and the fine uneven structure-containing part 42 can be visually recognized simultaneously with the chromatic appearance caused by the color of the fine uneven structure-containing part 42, if it is tinted, as observed from the front, to thereby achieve higher designability.

The reflective layer 44 may have a transmittance of not less than 20% in a region with a wavelength of 400 nm to 700 nm. In this case, the effect of the optical element due to transmission can be used. Further, this transmittance enables visual recognition of the information disposed under the reflective layer, e.g., printed part 130 information such as a portrait, characters, patterns, or the like on a receiving substrate 110 (see the seventh embodiment of the present invention) described below.

### Material of reflective layer

The reflective layer 44 may be formed of metals, or a metal compound or the like. In the present invention, the term metals refers to substances of metal alone, or alloys. The metal compound that can be used may be a metal oxide, a metal sulfide, a metal halide, a metal nitride, or the like. As metals, Ca, Mg, Al, Ga, Sn, Cr, Ce, Ni, Cu, Au and Ag may be used singly or in an alloy form. The metal compound may be an oxide, sulfide, halide, or nitride of Al, Sn, Cr, Ni, Cu, Au, or Ag alone, or an alloy thereof.

Alternatively, the reflective layer 44 may be formed of a transparent material. Examples of the transparent material include inorganic materials such as ceramics, and organic polymers, that is, any material listed below exhibiting optical transparency. The bracketed value after the chemical formula or the compound name set forth below represents a refractive index n of the material.

When the material forming the reflective layer 44 is an inorganic material, the material may, for example, be any of sulfides, chlorides, oxides and fluorides. Of these materials, sulfides have a relatively high refractive index, and fluorides have a relatively low refractive index. Oxides include materials having a relatively high to low refractive index, and thus, when selecting an oxide as the material of forming the reflective layer 44, a wide range of refractive index is provided for the reflective layer 44.

Examples of sulfides include CdS (2.6), ZnS (2.3), and the like. Examples of chlorides include PbCl₂ (2.3), and the like. Oxides that can be used may include Sb₂O₃ (2.0), Fe₂O₃ (2.7), TiO₂ (2.6), CeO₂ (2.3), CdO (2.2), WO₃ (2.0), SiO (2.0), Si₂O₃ (2.5), In₂O₃ (2.0), PbO (2.6), Ta₂O₃ (2.4), ZnO (2.1), ZrO₂ (2.0), MgO (1.6), SiO₂ (1.45), Si₂O₂ (2.0), Al₂O₃ (1.6) and GaO (1.7). Fluorides that can be used may be MgF₂ (1.4), CeF₃ (1), CaF₂ (1.3 to 1.4) and AlF₃ (1.6).

When the material forming the reflective layer 44 is an organic polymer, the material may, for example, be polyethylene (1.51), polypropylene (1.49), polytetrafluoroethylene (1.35) polymethyl methacrylate (1.49), polystyrene (1.60), or the like. These materials may be appropriately selected based on optical properties such as refractive index, reflective index, and transmittance, weathering resistance, the interlayer adhesion, and the like, and may be formed into a thin film.

When forming a reflective layer 44 made of a transparent material, difference in refractive index between the reflective layer 44 and the adjacent layers [the fine uneven structure-containing part 42 and the mask layer 46] is desirably set to 0.1 or more, and preferably to 0.5 or more. Difference in refractive index in such a range can impart sufficient reflectivity to the interfaces between the reflective layer 44 and the adjacent layers.

### (A-5) Mask layer

The mask layer 46 which is a constituent element of an image part is formed on the reflective layer 44. As described above, the mask layer 46 serves as an etching mask when forming the reflective layer 44.

The mask layer 46 has the same configuration as that of the fine uneven structure-containing part in plan view, including the case of providing the reflective layer 44 on only part of the fine uneven structure-containing part 42. Specifically, as will be described in item (C), because of the difference in specific surface area between the selective-etching-enabling structure 31 and the fine uneven structure 43 transferred to the mask material layer side surface of the reflective material layer, the mask material layer is formed thicker on the fine uneven structure-containing part 42 than on the selective-etching-enabling structure 31 of the bonding layer 30. Thus, as a result of selective etching, the mask layer / reflective layer finally remain only on the fine uneven structure-containing part.

When adopting the embodiment of providing the reflective layer 44 only partially i.e. on only the fine uneven structure-containing part 42 of item (A-4) above, a mask layer may also be provided only on the reflective layer provided on the partial region. The surface of the mask layer 46 on a side opposite to the reflective layer 44 may be flat, or may have unevenness conforming to the fine uneven structure of the reflective layer 44.

The mask layers (46a to 46d) may each be formed, for example, of a semimetal, a compound of a semimetal, metals, or a metal compound, or the like. Fig. 1 shows four mask layers (46a to 46d) as formed, but the number of mask layers of the present embodiment should not be limited to four. The semimetal may be silicon. The compound of a semimetal may be silicon oxide. The metals may be Ca, Mg, Al, Ga, Sn, Cr and Ce. The metal compound may be a metal oxide or a metal fluoride. CeO₂, ZnO, ZrO₂, MgOx or Al₂O₃ may be used as the metal oxide. The fluoride may be MgF₂, CeF₃, CaF₂, or AlF₃.

### (A-6) Adhesive layer

The adhesive layer 50 has flexibility, and cooperates with the bonding part 30 to maintain the image part 40 that includes the fine uneven structure-containing part 42, the reflective layer 44, and the mask layer 46 at a predetermined position, isolate the layers constituting the image part 40 from the external environment, improve impact resistance of the image part 40, and adhere the optical information medium 1 to a predetermined position of the receiving substrate 110 (see the seventh embodiment of the present invention).

As an index of flexibility, a value such as of elongation, tensile stress, or tensile modulus may be used. For example, the adhesive layer 50 may be taken to be flexible when the elongation is 5% or more, and more preferably 20% or more, as a result of measurement through the method of ISO 527 using the ISO 3167 test piece (100-µm thickness) which is formed of a material for the adhesive layer 50. By covering the image part 40 with the flexible adhesive layer 50, the impact resistance of the image part 40, and further, the impact resistance of the optical information medium 1, can be improved.

The adhesive layer 50 is formed, covering the image part 40 that includes the fine uneven structure-containing part 42, the reflective layer 44 and the mask layer 46. Thus, the regions on the bonding part 30 not having the image part 40 are filled with the adhesive layer 50. The adhesive layer 50 desirably has a thickness in the range of 1 µm to 50 µm on the top surface of the image part 40 (the surface of the mask layer 46 on a side opposite to the reflective layer 44).

The material that can be used for the adhesive layer 50 may be a thermoplastic resin or a thermosetting resin. The resin that can be used for the adhesive layer 50 may be an acrylic resin, a urethane resin, an olefin resin, an epoxy resin, or the like. These resins may contain particles. The particles may be irregularly shaped or may be spherical. The content of the particles relative to the resin may be set to 5 wt% or more and 70 wt% or less. The particles that can be used may be of an Inorganic material or an organic material. The inorganic material may be silicon or a silicon compound. The organic material may be an acrylic resin, a styrene resin, or a fluorine compound.

In the present embodiment (including modifications thereof), the adhesive layer 50 may be typically colorless. The region other than the image part 40 (i.e., the background) can be made colorless by making the bonding part 30 and the adhesive layer 50 colorless. Specifically, regions other than the image part 40 can be provided with a light transmission region 51 where the bonding part is in direct contact with the adhesive layer 50. In this case, the information disposed under the optical information medium 1, e.g., the printed part 130 information such as a portrait, characters, patterns, or the like on the receiving substrate 110 (see the seventh embodiment of the present invention) described later is visible in the region other than the image part 40 of the optical information medium 1 of the present embodiment.

Alternatively, the adhesive layer 50 may be colored, in a desired design. For example, the adhesive layer 50 may be tinted to have one or more translucent or opaque colors. In this case, a desired chromatic appearance can be provided to the region other than the image part 40 (i.e., the background) under observation from the front side. The background color in this case can be selected independently of the color of the fine uneven structure-containing part 42, if tinted, for achieving a glossy appearance of the image part 40. Thus, higher designability can be imparted to the optical information medium 1. To color the adhesive layer 50, the resin therein is permitted to contain a dye or a pigment. Two or more dyes and/or pigments may be used in combination. The content of dyes or pigments relative to the resin may be in the range of 1 wt% or more and 10 wt% or less. Non-limiting examples of the dyes that can be used include azo dyes. Non-limiting examples of the pigment that can be used include phthalocyanine-based pigments, azo-based pigments, and metal oxides

### (B) Second embodiment of the present invention

The second embodiment of the present invention is more preferred than the first embodiment of the present invention.

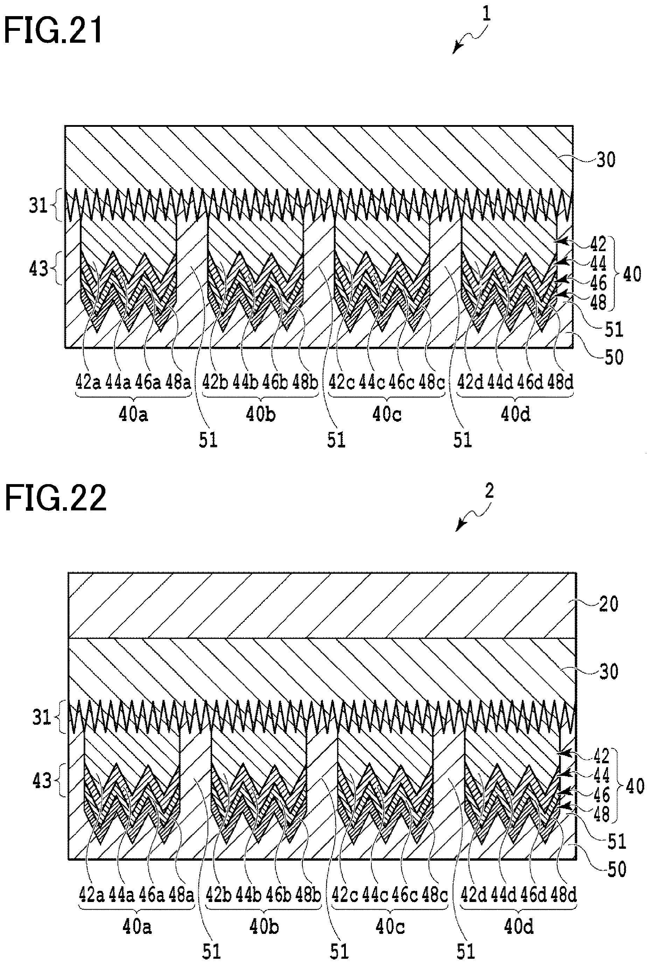

As shown in Fig. 21, an optical information medium 1 of the second embodiment of the present invention includes: (i) a bonding part (receiving layer) 30; (ii) at least one image part 40; and (iii) an adhesive layer (protective layer) 50 covering the at least one image part, which are the same as in the first embodiment of the present invention. These are the main components of the optical information medium 1 of the second embodiment of the present invention.

The image part includes main components, in the order from the bonding part (receiving layer) 30, of: (ii-1) a fine uneven structure-containing part 42 having a fine uneven structure; (ii-2) a reflective layer 44; (ii-3) a mask layer 46; and (ii-4) a back-surface coloring part 48. The image part (fine uneven structure-containing part) is formed on part of a surface (first region) of the bonding part. The bonding part (receiving layer) 30 has a selective-etching-enabling structure on an image part (fine uneven structure-containing part) side surface (second region) other than at least the first region. Specifically, the image part of the present embodiment further includes a back-surface coloring part 48.

Fig. 21 shows only an example of the present embodiment. Fig. 21 illustrates an example where four image parts (40a to 40d) are provided, but the number of independent image parts may be determined as desired, and may be, for example, 1, 2, 3, or 5 or more.

Referring to Fig. 21, the components will be more specifically described.

### (B-1) Bonding part

Including the description of the selective-etching-enabling structure, the description in this item is the same as the description in item (A-1) of the first embodiment of the present invention. However, Fig. 1 should read Fig. 21.

### (B-2) Image part

The image part is a structure including the fine uneven structure-containing part 42, the reflective part 44, the mask part 46 and the back-surface coloring part 48, and contributing to image forming (see Fig. 21). While the present embodiment is different in that it explicitly further includes the back-surface coloring part 48, the same description as in item (A-2) of the first embodiment of the present invention applies in the rest of the configuration. However, Fig. 1 should read Fig. 21. The back-surface coloring part 48 will be described in item (B-5).

### (B-3) Fine uneven structure part

Including the description of the color of the fine unevenness-containing part and the description of the fine uneven structure, the same description as in item (A-3) of the first embodiment of the present invention applies. However, Fig. 1 should read Fig. 21.

### (B-4) Reflective layer and mask layer

The same description as in items (A-4) and (A-5) of the first embodiment of the present invention applies. However, Fig. 1 should read Fig. 21.

The mask layer 46 may be formed, for example, of metals, or a metal compound (such as silicon dioxide), or the like. However, the material used for the mask layer should be selected from materials suitable for forming a back-surface coloring part thereafter. When the material used for the mask layer is magnesium fluoride, the reverse side provided with the reflective layer and the mask layer cannot be colored, for the front side provided with the substrate and the fine uneven structure.

### (B-5) Back surface coloring part

Materials that can be used for forming the back-surface coloring part 48 include a thermosetting resin, an oxidative-polymerizable resin, a reactive curable resin, an ultraviolet curable resin, an electron beam curable resin, a thermoplastic resin, and the like. Non-limiting examples of the thermoplastic resin include an acrylic resin, a cellulosic resin, a polyester resin, a vinyl resin, a rubber-based resin, a polyamide resin, a thermoplastic polyimide resin, a polycarbonate resin, a liquid crystal polymer, and the like.

Colorants that can be used for coloring the back-surface coloring part 48 may be ones used for the fine uneven structure-containing part 42.

The back-surface coloring part 48 may have a thickness in the range of 0.1 µm to 30 µm, and preferably in the range of 0.2 µm to 10 µm. The thickness of the back-surface coloring part 48 may be constant or may vary depending on the location. When the thickness of the back-surface coloring part 48 is constant, the glossy appearance is emphasized, and when the thickness is not constant, but varies, a graduated appearance can be achieved. Thus, the optical information medium 1 is imparted with higher designability.

The back-surface coloring parts 48 shown in Fig. 21 are not continuously formed on the surface of the bonding part 30. The back-surface coloring parts 48 of Fig. 21 are independently provided to the respective image parts 40a to 40d, and are disposed at a desired interval. The back-surface coloring parts 48 are each colorless, or tinted to have one or more translucent or opaque colors. The back-surface coloring parts 48 may individually have colors different from each other. Therefore, various design appearances can be accomplished compared to the case where a back-surface coloring part is formed on a surface of an integrated layer which is uniformly formed on the overall surface.

Referring to the example shown in Fig. 21, the four image parts 40a to 40d may have respective back surface coloring parts 48a to 48d which are colorless, or each tinted to have one color. In at least one of the image parts 40a to 40d, the corresponding one of the back-surface coloring parts 48a to 48d may be tinted to have two or more colors. For example, in at least one of image parts 40a to 40d, the corresponding one of the back-surface coloring parts 48a to 48d may have a peripheral area tinted to have one color, and an inner area surrounded by the peripheral area and tinted to have a color different from the color of the peripheral area. In a preferable configuration example, an image part, e.g. the image part 40a, may have a back-surface coloring part 48a whose color is different from those of other back surface coloring parts 48b to 48d of the image parts 40b to 40d. In a more preferable configuration example, the back-surface coloring parts 48a to 48d of the four image parts 40a to 40d may have colors different from each other. The definition of colors different from each other related to the back-surface coloring parts 48a to 48d is similar to the definition of those for the fine uneven structure-containing parts 42a to 42d. The description referring to the example of Fig. 21 not only applies to the case of four image parts, but also applies to the case of a plurality of image parts of any number.

### (B-6) Adhesive layer

The same description as in item (A-6) of the first embodiment of the present invention substantially applies. However, Fig. 1 should read Fig. 21. In the present embodiment, the image part 40 covered with the adhesive layer 50 includes the back-surface coloring part 48, in addition to the fine uneven structure-containing part 42, the reflective layer 44 and the mask layer 46. In the present embodiment, the adhesive layer is preferably colorless, specifically from the viewpoint of visibility from the reverse side.

### (C) Third embodiment of the present invention

The present embodiment relates to a method of producing an optical information medium including the following steps, namely: (I) a step of preparing a bonding part (receiving layer), the bonding part having a surface constituted of a first region and a second region, at least the second region having a selective-etching-enabling structure; (II) a step of forming at least one image part on part of the first region of the bonding part; and (III) a step of optionally forming an adhesive layer (protective layer) covering the image part.

The image part of the step (II) sequentially includes a fine uneven structure-containing part, a reflective layer and a mask layer, and is formed through the following sub-steps (II-1) to (II-4).

These sub-steps are specifically: (II-1) a sub-step of forming a fine uneven structure-containing part on the first region; (II-2) a sub-step of forming a reflective material layer, covering the bonding part and the fine uneven structure; (II-3) a sub-step of forming a mask material layer, covering the reflective layer; and (II-4) a sub-step of selectively etching the mask material layer and the reflective material layer to leave the reflective layer and the mask layer only on the fine uneven structure.

Use of the production method of the present embodiment including the optional sub-step (II-4) enables production of the optical information medium of the first embodiment of the present invention.

Further, a sub-step (II-3') of covering the mask material layer to form a back-surface coloring material layer can be optionally performed between the sub-steps (II-3) and (II-4). Furthermore, inclusion of sub-step (II-4) enables production of the optical information medium of the second embodiment of the present invention. In this case, the image part in step (II) should sequentially include a fine uneven structure-containing part, a reflective layer, a mask layer and a back-surface coloring part. Further, in this case, sub-step (II-4) serves as a sub-step of selectively etching the reflective material layer and removing the back-surface coloring material layer that has been on the etched reflective material layer to leave the reflective layer, the mask layer, and the back-surface coloring part only on the fine uneven structure.

It should be noted that the reflective material layer, the mask material layer and the back-surface coloring material layer are layers before being etched, and respectively correspond to the reflective layer, the mask layer and the back-surface coloring part.

### (C-1) Step of preparing bonding part (receiving layer) having selective-etching-enabling structure (step I)

The bonding part 30 desirably serves as a part for receiving the fine uneven structure-containing part 42 which will be thermally transferred by the method described below. The bonding part 30 serves as a part for holding the fine uneven structure-containing parts 42 that are not formed into a continuous layer but are discretely disposed.

In view of these points, the bonding part 30 is preferably made of an adhesive resin.

The bonding part 30 has an etched portion formed by applying pressing, casting, photopolymerization, or the like to part of or the overall continuous surface thereof.

The selective-etching-enabling structure can be prepared according the preparation of a fine uneven structure described in item (C-2) below, although the specific surface area is different.

### [Specific example of producing bonding part having selective-etching-enabling structure]

Continuously preparing a bonding part will be described below by way of a specific example of using a device 250 shown in Fig. 8.

The method shown in Fig. 8 is a variation of a two-stage transfer method that will be described in item (C-2). In the method, a selective-etching-enabling structure forming film 259 (termed first forming film hereinafter) corresponds to an original plate.

First, a bonding film 252 is fed from the bonding film unwinding roll 251. The bonding film 252 may be finally cut off for use as a carrier substrate (20, 20', 20"). Alternatively, if the bonding part 30 is self-supporting, the bonding film 252 may serve as a temporary support. The first forming film 259 has a surface (outer surface) on which a resin layer is formed so as to have a forming structure with a configuration which is the inverse of the selective-etching-enabling structure of the bonding part 30.

The first forming film 259 is passed between a bonding ink applying cylinder 255 and a bonding ink pressing cylinder 256 such that the outer surface of the forming film 259 is on the bonding ink applying cylinder 255 side. The bonding ink applying cylinder 255 has concavities (not shown) suitable for forming the selective-etching-enabling structure 31. The bonding ink applying cylinder 255 is rotated while being immersed in a bonding ink 254 in a bonding ink reservoir 253 to allow the concavities of the bonding ink applying cylinder 255 to carry the bonding ink 254. The bonding ink 254 attached to portions other than the concavities of the bonding ink applying cylinder 255 may be removed using any technique known in the art, such as a technique of using a doctor blade (not shown). Subsequently, the bonding ink 254 attached to the bonding ink applying cylinder 255 is transferred to the forming structure of the first forming film 259 to obtain a first forming film 257 to which an uncured bonding part 30 is attached (this film is termed first transfer film hereinafter).

Subsequently, the first transfer film 257 is conveyed to a bonding ink curing section 258. In the bonding ink curing section 258, the uncured bonding ink 254 on the first transfer film 257 is cured to form a bonding part 30.

Then, the first transfer film 257 is brought into contact with the bonding film 252 by using a pair of first bonding cylinders 261. If necessary, pressure and/or heat may be applied to the first transfer film 257 and the bonding film 252 by the pair of first bonding cylinders 261. As a result, the bonding part 30 on the first transfer film 257 is transferred onto the bonding film 252.

Subsequently, the first forming film 257 is separated from a bonding film 263 having a transferred selective-etching-enabling structure 31 (this bonding film is termed first transferred bonding film hereinafter) in a first film peeling section 262. The first forming film 259 is fed and pinched between the bonding ink applying cylinder 255 and the bonding ink pressing cylinder 256, for use in subsequent formation of the selective-etching-enabling structure 31. The first transferred bonding film 263 is conveyed to a second bonding cylinder 281 for further bonding of a fine uneven structure-containing part [see (C-2)].

The following description specifically addresses materials that can be used in the method described referring to Fig. 8.

### First forming film

The first forming film 259 for forming a selective-etching-enabling structure includes, for example, a plastic film made such as of polyethylene terephthalate (PET), polyethylene naphthalene (PEN), or polypropylene (PP), and a resin layer having a forming structure with a configuration which is the inverse of the selective-etching-enabling structure 31. The resin layer can be formed by a well-known method, such as pressing, casting or photopolymerization.

In the present method, the first forming film 259 is used only for forming a bonding part 30 by attaching and curing the bonding ink 254, and is not involved in forming a reflective layer 44 by vapor deposition of metal or the like. In other words, the resin layer of the first forming film 259 is not required to be in intimate contact with the material, such as metal, for forming the reflective layer 44. Thus, the surface of the resin layer may be subjected to release treatment to ease the peeling of the cured bonding ink 254. The release treatment can be carried out by addition of a silicon compound, a fluorine compound, or an inorganic filler, or the like.

### Bonding ink curing section

When the bonding part 30 contains a thermosetting resin, the bonding ink curing section 258 may be an oven used for heating or air-blowing. If the bonding part 30 contains an ultraviolet curing resin or an electron beam curing resin, the bonding ink curing section 258 may be a combination of an oven for removing the volatile components in a forming resin ink 274 by heating or air-blowing, with a device for radiating ultraviolet light or an electron beam for curing the resin.

### Bonding ink

The bonding ink 254 is a composition that contains the adhesive resin mentioned above for constituting the bonding part 30, a solvent, and the like.

### (C-2) Sub-step of forming fine uneven structure-containing part on first region of bonding part (sub-step II-1)

The fine uneven structure-containing part 42 can be formed by coating. Specifically, wet coating contributes to obtaining a fine uneven structure-containing part 42 at low cost. A resin coating solution obtained by diluting a resin with a solvent may be used for adjusting the thickness of the fine uneven structure-containing part 42 to be obtained.

Alternatively, the fine uneven structure part 42 can be formed by, for example, the following methods:
(i) A print transfer method including: a step of preparing an original plate wherein concavities are formed so as to correspond to an inverted configuration of the fine uneven structure-containing part 42; a step of forming a bonding part 30 on a carrier substrate 20 to obtain a laminate; a step of attaching a resin coating solution to the concavities of the original plate; and a step of transferring the resin coating solution attached to the concavities onto the bonding part 30 of the laminate to form a fine uneven structure-containing part 42.
(ii) A two-stage transfer method including: a step of preparing a mother plate wherein concavities are formed so as to be suitable for a fine uneven structure-containing part 42; a step of forming a bonding part 30 on a carrier substrate 20 to obtain a laminate; a step of attaching a resin coating solution to the concavities of the mother plate; a step of transferring the resin coating solution attached to the concavities of the mother plate to a support to form an original plate having a configuration which is the inverse of the fine uneven structure-containing part 42; a step of attaching a second resin coating solution to the concavities of the original plat; and a step of transferring the second resin coating solution attached to the concavities of the original plate to the bonding part 30 of the laminate to form the fine uneven structure-containing part 42.

The print transfer method (i) may further include a step of curing the resin coating solution attached to the concavities, and the two-stage transfer method (ii) may further include a step of curing the second resin coating solution attached to the concavities of the original plate.

When using the print transfer method (i) and two-stage transfer method (ii) involving the curing step, the fine uneven structure-containing part 42 is desirably formed of a material selected from the group consisting of a thermosetting resin, an oxidative-polymerizable resin, a reactive curing resin, an ultraviolet curing resin, and an electron beam curing resin. The resin preferably used for the fine uneven structure-containing part 42 is a thermosetting resin, and the resin specifically preferable is a urethane resin or an epoxy resin.

The urethane resin is normally obtained by reaction of an isocyanate-reactive compound with a polyisocyanate. The polyisocyanate refers to a compound having at least two isocyanate groups per molecule. The polyisocyanate contains a difunctional diisocyanate. By selecting an isocyanate-reactive compound and a polyisocyanate, a remarkably wide variety of products can be made.

The isocyanate-reactive compound contains (a) any organic compound having at least two isocyanate-reactive functional groups per molecule, or (b) an imino-functional compound. The isocyanate-reactive functional group refers to a functional group containing a Zerewitinoff active hydrogen. The presence of the Zerewitinoff active hydrogen can be confirmed by the method described in E. P. Kohler et al., J. Am. Chem. Soc., Vol. 49, pp. 3181-3188 (1927) (see NPL1). Non-limiting examples of the isocyanate-reactive functional group include -COOH, -OH, -NH₂, -NH-, CONH₂, -SH, and -CONH-. Non-limiting examples of the organic compound having at least two isocyanate-reactive functional groups per molecule include polyols, polyamines, polymercaptans, and polyacids. A suitable imino-functional compound is one having at least one terminal imino group per molecule. Preferably, the isocyanate-reactive compound is a polyol, and more preferably a polyether polyol.

A suitable polyol may be a monomer, an oligomer, or a polymer having at least two hydroxyl groups per molecule, and mixtures thereof. Non-limiting examples of the oligomer and monomer having at least two hydroxyl groups per molecule include castor oil, trimethylol propane, and diol. The polyol includes branched diols (e.g., 2-n-butyl-2-ethyl-1,3-propanediol) described in WO 98/53013 (see PTL 4).

Examples of polymers suitable as the polyol include polyester polyol, polyacrylate polyol, polycarbonate polyol, polyurethane polyol, melamine polyol, and mixtures and hybrids thereof. Such polymers are generally known to those skilled in the art and are commercially available. Non-limiting examples of suitable polyester polyol, polyacrylate polyol, and mixtures thereof are mentioned in, for example, WO 96/20968 and Laid-open European Patent Application 0688840 (see PTLs 5 and 6). Non-limiting examples of suitable polyurethane polyol are mentioned in WO 96/40813 (see PTL 7)

The isocyanate-reactive compound may be the hydroxyl functional epoxy resin, alkyd, or dendrimeric polyol mentioned in WO 93/17060 (see PTL 8). Alternatively, the isocyanate-reactive compound may include a latent hydroxy-functional compound. Non-limiting examples of the latent hydroxy-functional compound include bicyclic orthoesters (see PTL 9), spiro-orthoesters (see PTL 9), spiro-orthosilicates (see PTL 10), and bicyclic amideacetals (see PTL 11).

The urethane resin composition for forming the fine uneven structure-containing part 42 may further contain a metal-based catalyst for promoting an addition reaction of an isocyanate group with an isocyanate-reactive functional group. This kind of catalyst is known to those skilled in the art. The catalyst may be contained typically by an amount in the range of 0.001 mass% to 10 mass%, preferably 0.002 mass% to 5 mass%, and more preferably 0.01 mass% to 1 mass%, relative to the non-volatile components of urethane resin composition. Metals suitably used for the catalyst include zinc, cobalt, manganese, zirconium, bismuth, and tin. The urethane resin composition preferably contains a tin-based catalyst. Commonly known examples of the tin-based catalyst include dimethyltin dilaurate, dimethyltin diversatate, dimethyltin dioleate, dibutyltin dilaurate, dioctyltin dilaurate, and tin octoate.

The epoxy resin is a generic name for thermosetting resins that can be cured by formation of a network caused by reaction of the epoxy groups remaining in the polymer. Typically, the epoxy resin is obtained by mixing a prepolymer before being cured by polymerization with a curing agent, followed by thermal curing.

The prepolymer includes ones having various compositions, but the most typical one is bisphenol A bis (glycidyl ether) which is a reaction product of bisphenol A and two molecules of epichlorohydrin. The curing agent includes various polyamines and acid anhydrides.

Non-limiting examples of the alicyclic epoxy compounds used for forming the prepolymer of the epoxy resin include 2-(3,4-epoxy)cylcohexyl-5,5-spiro-(3,4-epoxy)cyclohexane-m-dioxane, 3,4-epoxycyclohexyl-3',4'-epoxycyclohexane carboxylate (EECH), 3,4-epoxycyclohexylalkyl-3',4'-epoxycyclohexane carboxylate, 3,4-epoxy-6-methylcyclohexylmethyl, 3',4-epoxy-6'-methylcyclohexane carboxylate, vinylcyclohexene dioxide, bis(3,4-epoxycyclohexylmethyl) adipate, bis(3,4-epoxy-6-methylcyclohexylmethyl) adipate, exo-exo bis(2,3-epoxycyclopentyl)ether, endo-exo bis(2,3-epoxycyclopentyl)ether, 2,2-bis(4-(2,3-epoxypropoxy)cyclohexyl)propane, 2,6-bis(2,3-epoxypropoxycyclohexyl-p-dioxane, 2,6-bis(2,3-epoxypropoxy)norbornene, diglycidyl ether of linoleic acid dimer, limonene dioxide, 2,2-bis(3,4-epoxycyclohexyl)propane, dicyclopentadiene dioxide, 1,2-epoxy-6-(2,3-epoxypropoxy)hexahydro-4,7-methanoindan, p-(2,3-epoxy)cyclopentylphenyl-2,3-epoxypropyl ether, 1-(2,3-epopxypropoxy)phenyl-5,6-epoxyhexahydro-4,7-methanoindan, o-(2,3-epoxy)cyclopentylphenyl-2,3-epoxypropyl ether, 1,2-bis[5-(1,2-epoxy)-4,7-hexahydromethanoindanoxyl]ethane, cyclopentenylphenyl glycidyl ether, cyclohexanediol diglycidyl ether, diglycidyl hexahydrophthalate, and mixtures thereof.

Non-limiting examples of the aromatic epoxy resin include bisphenol A epoxy resin, bisphenol F epoxy resin, phenol novolac epoxy resin, cresol novolac epoxy resin, biphenol epoxy resin, biphenyl epoxy resin, 4,4'-biphenyl epoxy resin, divinylbenzene oxide resin, 2-glycidylphenyl glycidyl ether resin, and the like, and mixtures thereof.

Non-limiting examples of the curing agent used for curing the prepolymer of the epoxy resin include acid anhydrides such as maleic anhydride and maleic anhydride copolymer, amine compounds such as dicyandiamide, phenolic compounds such as phenol novolac and cresol novolac, and the like. The epoxy resin composition may further contain a curing accelerator. Non-limiting examples of the curing accelerator include imidazoles and their derivatives, tertiary amines, quaternary ammonium salts, and the like.

When forming the fine uneven structure-containing part 42, a radiation-curable resin may be used.

Non-limiting examples of the radiation curable resin include a monomer, an oligomer and a polymer having an ethylenically unsaturated bond. Non-limiting examples of the monomer having a radically polymerizable ethylenically unsaturated bond include 1,6-hexanediol di(meth)acrylate, neopentyl glycol diacrylate, trimethylolpropane triacrylate, pentaerythritol triacrylate, pentaerythritol tetraacrylate, dipentaerythritol pentaacrylate, and dipentaerythritol hexaacrylate. Non-limiting examples of the radiation curable oligomer include epoxy acrylate oligomer, urethane acrylate oligomer, and polyester acrylate oligomer. Non-limiting examples of the radiation curable polymer include urethane-modified acrylic resin, and epoxy-modified acrylic resin.

Other examples of the radiation curable resin include the photocurable resin mentioned in JP S61-98751 A, JP S63-23909 A, JP S63-23910 A and JP 2007-118563 A (see PTLs 12 to 15). To precisely form a fine relief pattern configuration, a non-reactive polymer may be added to the radiation curable resin composition. Non-limiting examples of the non-reactive polymer include an acrylic resin, a polyester resin, a urethane resin, and an epoxy resin.

When using cationic polymerization initiated by light radiation or the like, the material that can be used may be a monomer having an epoxy group, an oligomer having an epoxy group, a polymer having an epoxy group, or vinyl ethers.

When curing the radiation curable resin mentioned above with light such as ultraviolet light, a photopolymerization initiator may be added. The polymerization initiator may be selected according to the resin, and may include a radical photopolymerization initiator, a cationic photopolymerization initiator, or combinations (hybrids) thereof.

Non-limiting example of the radical photopolymerization initiator include: benzoin-based compounds such as benzoin, benzoin methyl ether, and benzoin ethyl ether; anthraquinone-based compounds such as anthraquinone and methylanthraquinone; phenylketone-based compounds such as acetophenone, diethoxyacetophenone, benzophenone, Michler's ketone, hydroxyacetophenone, 1-hydroxycyclohexyl phenyl ketone, α-aminoacetophenone, 2-methyl-1-(4-methylthiophenyl)-2-morpholinopropane-1-one, and benzyl dimethyl ketal; thioxanthone; acylphosphine oxides.

Non-limiting examples of the cationic photopolymerization initiator in the case of using a cationically photopolymerizable compound include aromatic diazonium salts, aromatic iodonium salts, aromatic sulfonium salts, aromatic phosphonium salts, and mixed-ligand metallic salts. In the case of a so-called hybrid material obtained by combining radical photopolymerization with cationic photopolymerization, mixtures of the respective photopolymerization initiators may be used. Alternatively, one type of initiator, such as an aromatic iodonium salt, or an aromatic sulfonium salt, having a function of initiating both types of polymerization may be used. The polymerization initiator may be added to the resin composition in an amount of 0.1 mass% to 15 mass%, with reference to the non-volatile components of the polymerizable resin composition.

The fine uneven structure-containing part 42 is preferably colored. The colorant used for coloring the fine uneven structure-containing part 42 contains a dye or a pigment. Two or more dyes and/or pigments may be used in combination. When forming a translucently colored fine uneven structure-containing part 42 using a pigment, it is desirable to use a pigment with a particle size of 1 nm to 100 nm to prevent scattering and reflection due to the pigment particles. When forming a fine uneven structure-containing part 42 using a curable resin, it is desirable that the dye or the pigment does not react with active species (free radicals, nucleophiles, acids, bases, or the like) generated during curing of the resin. Non-limiting examples of the dyes that can be used include azo dyes. Non-limiting examples of the pigment that can be used include phthalocyanine-based pigments, azo-based pigments, and metal oxides. The colorant is present by an amount of 5 mass% to 50 mass%, preferably 5 mass% to 30 mass% with reference to the non-volatile components of the fine uneven structure-containing part 42.

Alternatively, the colorant may be a material which is excited by ultraviolet light, visible light, or infrared light to emit fluorescent light or phosphorescent light. Use of the fluorescent or phosphorescent colorant can impart a special visual effect of being detected by visual or mechanical observation to the part 42. Non-limiting examples of the fluorescent colorant that can be used include umbelliferone and rhodamine 6G. Non-limiting examples of the phosphorescent colorant that can be used include zinc sulfide and strontium aluminate.

The resin composition used for forming the fine uneven structure-containing part 42 may further contain an additive as necessary. Non-limiting examples of the additive include a polymerization inhibitor, a leveling agent, an anti-foaming agent, an anti-sag agent, an adhesion promoter, a coated surface modifier, a plasticizer, a nitrogen-containing compound, metal such as aluminum or silver, an inorganic oxide such as silica or mica, and a magnetic substance such as magnetite.

### [Specific example of producing fine uneven structure-containing part]

An example of consecutively preparing an uneven structure-containing part will be described below by way of a specific example of using the device 250 shown in Fig. 8.

The method shown in Fig. 8 is a modification of the two-stage transfer method described above. In the method, a second forming film 279 corresponds to an original plate.

Specifically, the second forming film 279 has a surface (outer surface) on which a resin layer is formed so as to have a forming structure with a configuration that is the inverse of the uneven structure-containing part 42.

The second forming film 279 is passed between a forming resin ink applying cylinder 275 and a forming resin ink pressing cylinder 276 such that the outer surface of the forming film 279 is on the forming resin ink applying cylinder 275 side.

The forming resin ink applying cylinder 275 has concavities (not shown) suitable for forming the fine uneven structure-containing part 42. The forming resin ink applying cylinder 275 is rotated while being immersed in a forming resin ink 274 in a forming resin ink reservoir 273 to allow the concavities of the forming resin ink applying cylinder 275 to carry the forming resin ink 274. The forming resin ink 274 attached to portions other than the concavities of the forming resin ink applying cylinder 275 may be removed using any technique known in the art, such as a technique of using a doctor blade (not shown).

Subsequently, the forming resin ink 274 attached to the forming resin ink applying cylinder 275 is transferred to the forming structure of the second forming film 279 to obtain a second forming film 277 to which an uncured fine uneven structure-containing part 42 is attached (this film is termed second transferred film hereinafter).

Subsequently, the second transfer film 277 is conveyed to a forming resin ink curing section 278. In the forming resin ink curing section 278, the uncured forming resin ink 274 on the second transfer film 277 is cured to form a fine uneven structure-containing part 42.

Then, the second transfer film 277 is brought into contact with the first transferred bonding film 263 described referring to Fig. 8 in item (C-1), by using a pair of second bonding cylinders 281. If necessary, pressure and/or heat may be applied to the second transfer film 277 and the transferred bonding film 263 by the pair of second bonding cylinders 281.

As a result, the fine uneven structure-containing part 42 on the second transfer film 277 is transferred onto the bonding part 30 of the first transferred bonding film 263.

Subsequently, the second forming film 279 is separated from a first transferred bonding film 283 having a transferred fine uneven structure-containing part 42 (this bonding film is termed second transferred bonding film hereinafter) in a second film peeling section 282.

The second forming film 279 is fed and pinched between the forming resin ink applying cylinder 275 and the forming resin ink pressing cylinder 276, for use in subsequent formation of the fine uneven structure-containing part 42.

The second transferred bonding film 283 where the fine uneven structure-containing part 42 has been transferred onto the bonding part 30 is taken up by a bonding film take-up roll 284.

Fig. 8 shows a configuration example of a single transfer station including the second forming film 279 (second transfer film 277), the forming resin ink reservoir 273, the forming resin ink 274, the forming resin ink applying cylinder 275, the forming resin ink pressing cylinder 276, the forming resin ink curing section 278, the pair of second bonding cylinders 281, and the second film peeling section 282.

However, a plurality of transfer stations may be provided between the first film peeling section 262 and the bonding film take-up roll 284 to consecutively form a plurality of the fine uneven structure-containing parts 42 having different colors and/or different fine uneven structures 43.

The following description specifically addresses materials that can be used in the method described referring to Fig. 8.

### Second forming film

The second forming film 279 for forming the fine uneven structure includes a plastic film such as PET, PEN, or PP, and a resin layer having a forming structure with a configuration which is the inverse of the fine uneven structure. The resin layer can be formed by a well-known method, such as pressing, casting or photopolymerization.

In the present method, the second forming film 279 is used only for forming a fine uneven structure-containing part 42 by attaching and curing the forming resin ink 274, and is not involved in forming a reflective layer 44 by vapor deposition of metal or the like. In other words, the resin layer of the second forming film 279 is not required to be in intimate contact with the material, such as metal, for forming the reflective layer 44. Thus, the surface of the resin layer may be subjected to release treatment to ease the peeling of the cured forming resin ink 274. The release treatment can be carried out by addition of a silicon compound, a fluorine compound, or an inorganic filler, or the like.

### Forming resin ink curing section

When the fine uneven structure-containing part 42 contains a thermosetting resin, the forming resin ink curing section 278 may be an oven used for heating or air-blowing. If the fine uneven structure-containing part 42 contains an ultraviolet curing resin or an electron beam curing resin, the forming resin ink curing section 278 may be a combination of an oven for removing the volatile components in a forming resin ink 274 by heating or air-blowing, with a device for radiating ultraviolet light or an electron beam for curing the resin.

### Forming resin ink

The forming resin ink 264 is a composition that contains the resin composition mentioned above for constituting the fine uneven structure-containing part 42, a solvent, and the like.

### (C-3) Sub-step of covering bonding part and fine uneven structure to form reflective material layer (sub-step II-2)

If the reflective layer 44 is formed of metals or a metal compound, a well-known method such as vapor deposition, sputtering, or CVD may be appropriately used. Use of these methods enables control of thickness, film-forming rate, number of laminated layers, optical thickness, and the like.

Fine powders or sol of the metals, metal compounds, or organic polymers mentioned above, or metal nanoparticles may be dispersed in an organic polymer to obtain a high brightness light-reflective ink, and this ink may be applied to the fine uneven structure to form a reflective layer 44. In this case, one should be careful so that the fine uneven structure-containing part 42 would not be affected by the solvent contained in the ink. The high brightness light-reflective ink may be applied by a well-known printing method, such as gravure printing, flexography, or screen printing, or a well-known coating method, such as dip coating or roll coating.

Of these methods, vapor deposition is preferable from the viewpoint of productivity.

The reflective material layer, i.e. the reflective layer before being etched, can be formed so as to cover the overall exposed surface (second region) of the fine uneven structure-containing part 42 and the bonding part 30. The selective-etching-enabling structure 31 is formed on the second region of the bonding part, and, as stated above, the specific surface area of the selective-etching-enabling structure 31 is greater than the specific surface area of the fine uneven structure 43. Therefore, even if the reflective material layer is formed so as to cover the entirety, the reflective material layer covering the selective-etching-enabling structure 31 becomes thinner than the reflective material layer covering the fine uneven structure-containing part 42 due to the difference in specific surface area. From the viewpoint of selectively removing the reflective material layer, such a difference in film thickness is preferably such that the resultant time difference in etching would be 1.2 times to 2.0 times or more.

Further, from the viewpoint of more effectively transferring the fine uneven structure and unevenness of the selective-etching-enabling structure 31 to the mask material layer side surface of the reflective material layer, the reflective layer preferably has a thickness that is equal to or less than the (minimum) period of the selective-etching-enabling structure 31, and is equal to or less than the (minimum) depth of the fine uneven structure 43. This is because the selective-etching-enabling structure 31 has a specific surface area greater than that of the fine uneven structure 43, and thus because the period is usually shorter than the period of the fine uneven structure 43, and/or the depth is greater than the depth of the fine uneven structure 43.

### (C-4) Sub-step of covering reflective material layer to form mask material layer (sub-step II-3)

The mask layer 46 serves as an etching mask for patterning the reflective material layer. Thus, the material constituting the mask layer 46 should have resistance to the etching liquid used for patterning the reflective material layer.

For example, the mask layer 46 may be formed of metal, or a metal compound or the like. The mask layer 46 containing a metal, or a metal compound may be formed using a well-known method, such as vapor deposition, sputtering, or CVD.

The mask material layer, i.e. the mask layer before being etched, may be formed as a continuous layer covering the overall surface of the reflective material layer formed in item (C-3), i.e. the overall exposed surface (second region having the selective-etching-enabling structure 31) of the fine uneven structure-containing part 42 and the bonding part 30 (via the reflective material layer). As described in item (C-3), the specific surface area of the selective-etching-enabling structure 31 is greater than the specific surface area of the fine uneven structure 43. Thus, if the thickness of the reflective material layer is sufficiently small, the difference in specific surface area is directly reproduced on the outer surface of the formed reflective material layer. Therefore, similarly to the reflective material layer, the mask material layer covering the selective-etching-enabling structure 31 (via the reflective material layer) should be thinner than the mask material layer covering the fine uneven structure 43 (via the reflective material layer). From the viewpoint of selectively removing the reflective material layer, such a difference in film thickness is preferably such that the resultant time difference in etching would be 1.2 times to 2.0 times or more.

### (C-5) Optional sub-step of covering mask material layer to form back surface coloring material layer (optional sub-step II-3')

A back-surface coloring material layer having one or more colors can be optionally formed as a continuous or discontinuous layer, from above the mask material layer.
The back-surface coloring material layer, i.e. the back-surface coloring part 48 before being etched, can be formed by coating using a colorant-containing resin. Specifically, wet coating contributes to obtaining a back-surface coloring material layer at low cost. A resin coating solution obtained by diluting a resin with a solvent may be used for adjusting the thickness of the back-surface coloring material layer to be obtained.
When forming a back-surface coloring material layer by printing, the back-surface coloring material can be uniformly formed on the selective-etching-enabling structure 31 and the fine uneven structure part 43.

### (C-6) Sub-step of selectively etching reflective material layer to leave reflective layer and mask layer only on fine uneven structure (sub-step II-4)

The etching liquid used when patterning the reflective material layer is appropriately selected in consideration of the materials for the bonding part 30, the fine uneven structure-containing part 42, the reflective layer 44 and the mask layer 46, as well as the material for the back-surface coloring part 48 if it is optionally included (second embodiment of the present invention). For example, when the reflective material layer is formed of aluminum, an aqueous alkaline solution is typically used as the etching liquid. In this case, the bonding part 30, the fine uneven structure-containing part 42, and the mask material layer 46 are each formed of a material unlikely to be affected by the aqueous alkaline solution.

As described in items (C-3) and (C-4), the reflective material layer and the mask material layer covering the selective-etching-enabling structure 31 are made thinner than these layers covering the fine uneven structure 43. By firstly removing only the layers on the selective-etching-enabling structure of the second region of the bonding part by making use of such a difference in thicknesses, the reflective layer and the mask layer can be left only on the fine uneven structure 43. Specifically, the mask material layer provided by vapor deposition or the like can relatively easily permeate the etching fluid and, in addition, the difference in thickness causes a large time lag during the etching. The easy permeation and the large time lag, being coupled with the adjustment of the processing conditions, enable selective removal of metal.

Further, when the back-surface coloring part 48 is optionally included, the etching of the reflective material layer can simultaneously remove the back surface colorant layer portion formed at the same position.

### (C-7) Step of forming adhesive layer (protective layer) covering image part (optional step III)

The adhesive layer is optionally formed, covering the image portion and the second region of the bonding part exposed to the outside by the etching. After performing this step, the optical information medium of the first or second embodiment of the present invention can be obtained.

The adhesive layer 50 can be formed of a thermoplastic resin such as a polyester resin, an acrylic resin, a vinyl chloride resin, a vinyl resin, a polyamide resin, a polyvinyl acetate resin, a rubber-based resin, an ethylene-vinyl acetate copolymer resin, and a vinyl chloride-vinyl acetate copolymer resin.

Alternatively, the adhesive layer 50 may be formed of a flexible thermosetting resin or a photocurable resin. Non-limiting examples of the flexible thermosetting resin or the photocurable resin include a flexible epoxy resin and a flexible urethane resin. Flexibility can be imparted to the thermosetting resin or the photocurable resin by a method of adding a plasticizer to the thermosetting resin or the photocurable resin, or a method of introducing an elastic structure such as flexible backbone or rubber into the backbone of the thermosetting resin or the photocurable resin. The flexible backbone that can be used includes a long aliphatic hydrocarbon chain, or a long alkylene oxide chain. The elastic structure that can be used includes a hydrocarbon chain containing a non-aromatic carbon-carbon double bond which is obtained when using a monomer having a conjugated double bond such as butadiene, isoprene or chloroprene, or other structures.

### (D) Fourth embodiment of the present invention

The fourth embodiment of the present invention is a transfer foil characterized by inclusion of the optical information medium 1 of the first or second embodiment of the present invention, and a carrier substrate 20 contacting a bonding part (receiving layer), wherein the first carrier substrate can be peeled from the bonding part (receiving layer) 30 at an interface therebetween.

In the present embodiment, the bonding part 30 and an adhesive layer 50, as well as a fine uneven structure-containing part 42, a reflective layer 44, a mask layer 46, and an optional back surface coloring part 48 constituting an image part 40 are similar to those of the first or second embodiment bof the present invention.

Figs. 2 and 22 are schematic cross-sectional views each showing an example of the transfer foil 2 derived from the first and second embodiments of the present invention, and including four discrete image parts 40a to 40d.

Figs. 2 and 22 each show that the transfer foil 2 includes a first carrier substrate 20, a bonding part 30, image parts 40a to 40d formed on the bonding part 30, and an adhesive layer 50 covering the image part 40. Fig. 2 shows that the image parts 40a to 40d respectively sequentially include, from the bonding part 30 side, fine uneven structure-containing parts 42a to 42d, reflective layers 44a to 44d, and mask layers 46a to 46d. Fig. 22 shows that the image parts 40a to 40d respectively sequentially include, from the bonding part 30 side, fine uneven structure-containing parts 42a to 42d, reflective layers 44a to 44d, mask layers 46a to 46d, and back surface coloring parts 48a to 48d.
In the transfer foils 2 of Figs. 2 and 22, when transferring the optical information medium 1 having the bonding part 30, the image part 40, and the adhesive layer 50 to the receiving substrate 110 (see the seventh embodiment of the present invention), the carrier substrate 20 is peeled from the bonding part 30 at the interface therebetween.

### First carrier substrate

The first carrier substrate 20 serves as a support of the optical information medium 1 before being transferred. The first carrier substrate 20 can also serve as a support when the optical information medium 1 is produced.

The material used for the first carrier substrate 20 is preferably a film made of a thermoplastic resin. The thermoplastic resin desirably has heat resistance to the extent of not suffering deformation and/or degradation due to heat applied thereto during formation of the optical information medium 1 or the like (especially, due to heat applied thereto during curing or transfer of each constituent layer). Non-limiting examples of the thermoplastic resin that can be used include polyethylene terephthalate (PET), polyethylene naphthalate (PEN), polypropylene (PP) and the like.

In the present embodiment, the bonding part 30 side surface of the first carrier substrate 20 may be subjected to a treatment that enhances releasability at the time of transfer. This treatment makes it easy to peel off the first carrier substrate 20 from the bonding part 30 at the interface therebetween at the time of transfer to the receiving substrate 110 (see the seventh embodiment of the present invention). Examples of materials that can be used for the releasability enhancement treatment include a silicone resin and a fluorine resin.

To improve releasability of the first carrier substrate, the bonding part 30 may be formed of a material that can serve as a release layer. For example, a treatment for further curing the bonding part 30 may be performed after the transfer of the fine uneven structure-containing part 42.

In the transfer foil 2 of the present embodiment, the adhesive force between the first carrier substrate 20 and the bonding part 30 is preferably set to be lower than the adhesive force between the bonding part 30 and the adhesive layer 50, and also lower than the force required for cohesive breaking of the bonding part 30 and the adhesive layer 50.

### (E) Fifth embodiment of the present invention

The fifth embodiment of the present invention is a label 3 characterized by inclusion of the optical information medium 1 of the first or second embodiment of the present invention, a second carrier substrate 20' contacting a bonding part 30 (receiving layer), and a release substrate (peel sheet) 60 contacting the adhesive layer 50 (protective layer), wherein the adhesive layer 50 (protective layer) has tackiness, and the release substrate 60 (peel sheet) can be peeled from the adhesive layer 50 (protective layer) at the interface therebetween. The label from which the release substrate 60 (peel sheet) has been peeled is referred to as label body 3'.

The bonding part 30 and the adhesive layer 50, as well as the fine uneven structure-containing part 42, the reflective layer 44, the mask layer 46 and the optional back surface coloring part 48 constituting the image part 40 in the present embodiment are similar to those of the first or second embodiment of the present invention.

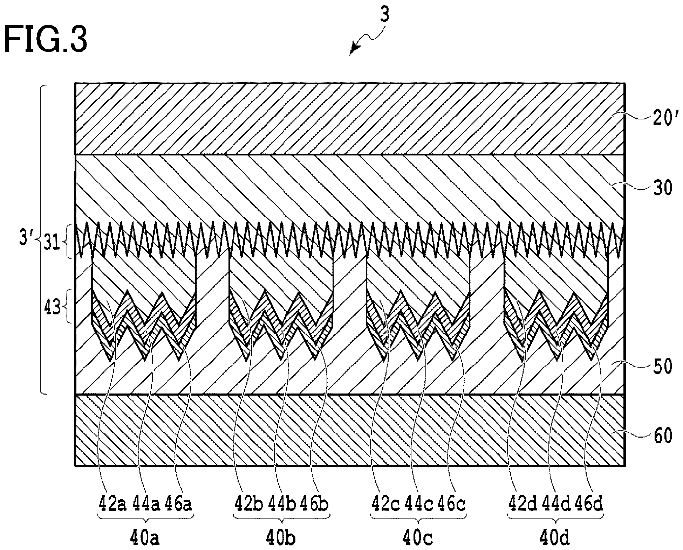

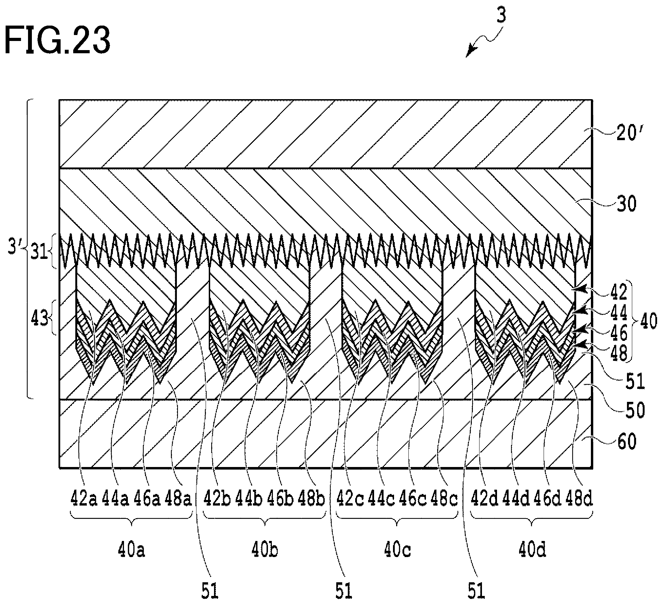

Figs. 3 and 23 are schematic cross-sectional views each showing an example of the label 3 derived from the first and second embodiments of the present invention, and including four discrete image parts 40a to 40d.

Figs. 3 and 23 each show that the label 3 includes a second carrier substrate 20', a bonding part 30, image parts 40a to 40d formed on the bonding part 30, an adhesive layer 50 covering the image part 40, and a release substrate 60 contacting the adhesive layer 50. Fig. 3 shows that the image parts 40a to 40d respectively sequentially include, from the bonding part 30 side, fine uneven structure-containing parts 42a to 42d, reflective layers 44a to 44d, and mask layers 46a to 46d. Fig. 23 shows that the image parts 40a to 40d respectively sequentially include, from the bonding part 30 side, fine uneven structure-containing parts 42a to 42d, reflective layers 44a to 44d, mask layers 46a to 46d, and back surface coloring parts 48a to 48d.

When using the label 3 of the present embodiment, the peeling part 60 is peeled off first, and then the adhesive layer 50 is brought into contact with a desired receiving substrate 110 (see the seventh embodiment of the present invention), so that the label body 3' including the optical information medium 1 and the second carrier substrate 20' is adhered to the receiving substrate 110.

### Second carrier substrate

The second carrier substrate 20' of the present embodiment serves similarly to the first carrier substrate 20 of the fourth embodiment of the present invention. However, in the present embodiment, it is not essential to provide surface treatment to the bonding layer 30 side second carrier substrate 20', so as to enhance releasability. The surface may be configured to be non-peelable. In this case, the second carrier substrate 20' can be used as a protective layer of the optical information medium 1 thereunder. In the present embodiment, the second carrier substrate 20' is desirably colorless and transparent, so that the optical information medium 1 is visually recognizable from the second carrier substrate 20' side.

### Release substrate

The release substrate 60 in the present embodiment contributes to preventing adhesion of the label body 3' due to inadvertent contact therewith prior to bonding. The adhesive layer 50 side surface of the release substrate 60 may be subjected to a treatment that enhances releasability from the adhesive layer 50.

In the label 3 of the present embodiment, the adhesive force between the release substrate 60 and the adhesive layer 50 is preferably set to be lower than the adhesive force between the second carrier substrate 20' and the bonding part 30, and the adhesive force between the bonding part 30 and the adhesive layer 50, and also lower than the force required for cohesive breaking of the second carrier substrate 20', the bonding part 30, and the adhesive layer 50.

The release substrate 60 may be made of paper, fabric, a non-woven fabric, or a thermoplastic resin such as polyethylene or polypropylene.

To facilitate peeling from the adhesive layer 50 when using the label 3, the surface of the release substrate 60 contacting the adhesive layer 50 may be preliminarily treated to enhance releasability. Examples of the material that can be used for the releasability enhancement treatment include a silicone resin or a fluorine resin.

### (F) Sixth embodiment of the present invention

The sixth embodiment of the present invention is a thread 4 to be embedded (hereinafter referred to as embedding thread 4) characterized by inclusion of the optical information medium 1 of the first or second embodiment of the present invention, a third carrier substrate 20" contacting a bonding part 30 (receiving layer), and a carrier substrate-side adhesive layer (also termed second adhesive layer or additional adhesive layer) 70 contacting the third carrier substrate 20".

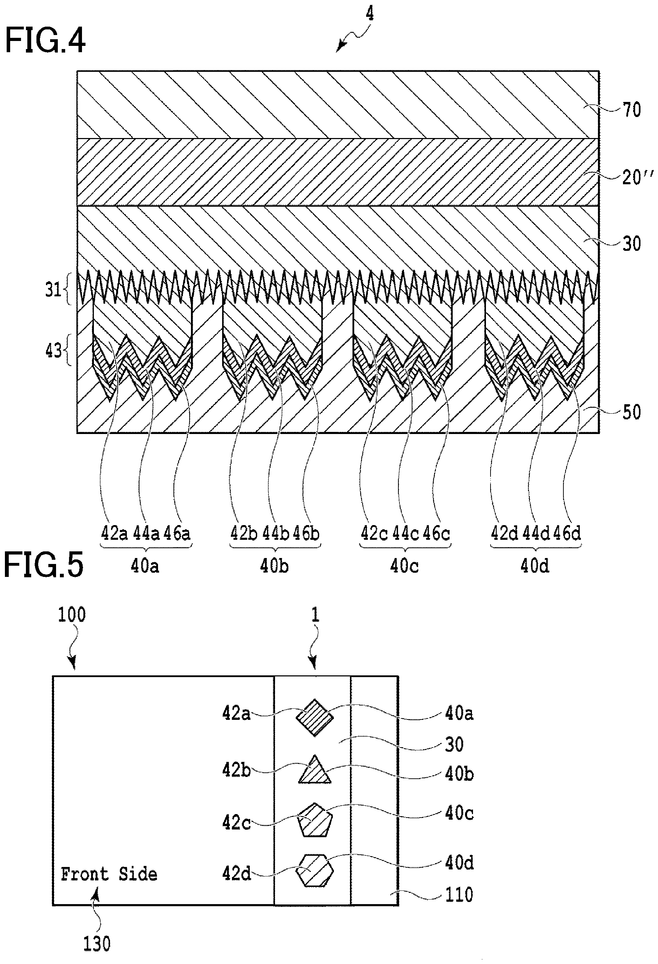

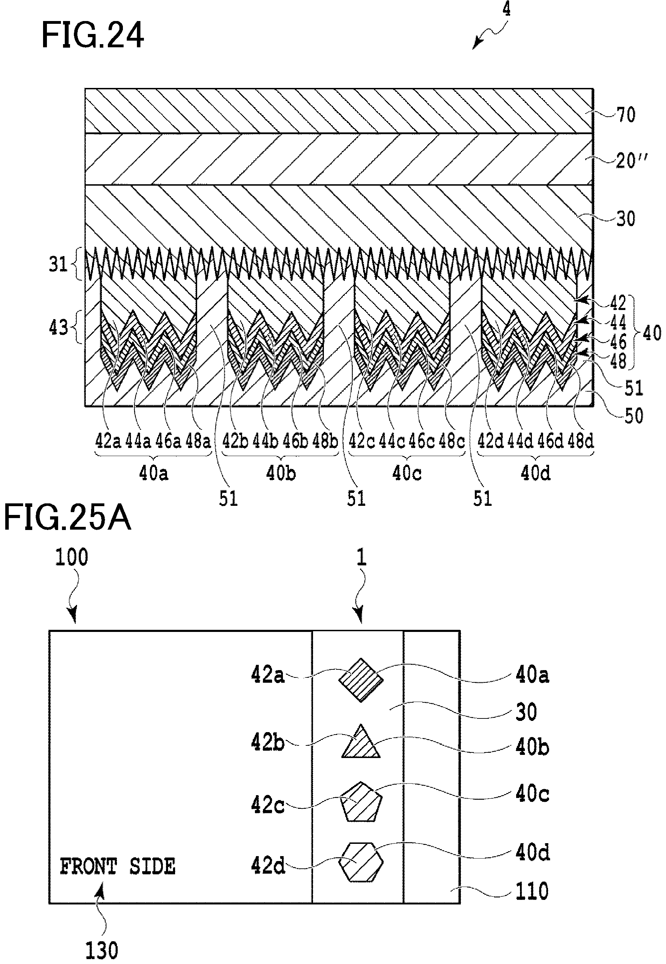

Figs. 4 and 24 are schematic cross-sectional views each showing an example of the embedding thread 4 derived from the first and second embodiments of the present invention, and including four discrete image parts 40a to 40d.

Figs. 4 and 24 show that the embedding thread 4 includes a carrier substrate-side adhesive layer 70, a third carrier substrate 20", a bonding part 30, image parts 40a to 40d formed on the bonding part 30, and an adhesive layer 50 covering the image part 40. Fig. 4 shows that the image parts 40a to 40d respectively sequentially include, from the bonding part 30 side, fine uneven structure-containing parts 42a to 42d, reflective layers 44a to 44d, and mask layers 46a to 46d. Fig. 24 shows that the image parts 40a to 40d respectively sequentially include, from the bonding part 30 side, fine uneven structure-containing parts 42a to 42d, reflective layers 44a to 44d, mask layers 46a to 46d, and back surface coloring parts 48a to 48d.

The bonding part 30 and the adhesive layer 50, as well as the fine uneven structure-containing part 42, the reflective layer 44, the mask layer 46 and the optional back surface coloring part 48 constituting the image part 40 in the present embodiment are similar to those of the first or second embodiment of the present invention. The third carrier substrate 20" of the present embodiment is similar to the first carrier substrate 20 of the fourth embodiment of the present invention.

The carrier substrate-side adhesive layer (second adhesive layer) 70 cooperates with the adhesive layer 50 in the embedding thread 4 of the present embodiment to secure the embedding thread 4 to a predetermined position of the receiving substrate 110 referred to in the seventh embodiment of the present invention. In this case, the receiving substrate 110 may be paper, non-woven fabric, or the like. The carrier substrate-side adhesive layer 70 can be prepared from a material similar to that of the adhesive layer 50. The embedding thread 4 may be embedded in the receiving substrate when the receiving substrate is formed from a fibrous material such as paper.

In the present embodiment, the carrier substrate-side adhesive layer (70) may typically be colorless.

### (G) Seventh embodiment of the present invention

The seventh embodiment of the present invention is a laminate characterized by inclusion of: (i) a receiving substrate; and (ii) an optical information medium of the first or second embodiment of the present invention, a label body derived from the fifth embodiment, or the embedding thread of the sixth embodiment, attached to the receiving substrate.

In the laminate of the present embodiment, the receiving substrate 110 receives the optical information medium 1 (first or second embodiment of the present invention) transferred from the transfer foil 2 (fourth embodiment of the present invention), the label body 3' as a result of removing the release substrate 60 from the label 3 (fifth embodiment of the present invention), or the embedding thread 4 (sixth embodiment of the present invention).

### Receiving substrate 110

The receiving substrate 110 of the present embodiment may be transparent or may be opaque, or may be a receiving substrate having a blank from which a part thereof has been cut out. The receiving substrate 110 may be a laminate of a plurality of transparent or opaque receiving substrate materials, or may be such a laminate having a blank from which a part of the laminate has been cut out in one or more materials.

Non-limiting examples of the material for forming a transparent receiving substrate 110 include polyesters such as polyethylene terephthalate (PET) and polyethylene naphthalate (PEN), polyolefins such as polypropylene (PP), and poly(meth)acrylates such as polymethyl methacrylate (PMMA). Non-limiting examples of the opaque receiving substrate 110 include paper, woven fabric, and non-woven fabric. The receiving substrate 110 may carry a printed part 130 on either or both of the surfaces thereof. In this case, the laminate of the present embodiment is printed matter 100.

When the laminate of the present embodiment includes a printed part, the printed part 130 may be formed by applying any ink known in the art to the receiving substrate 110 by using any technique known in the art. Non-limiting examples of the usable technique include ink-jet printing, screen printing, intaglio printing, letterpress printing, and lithography.

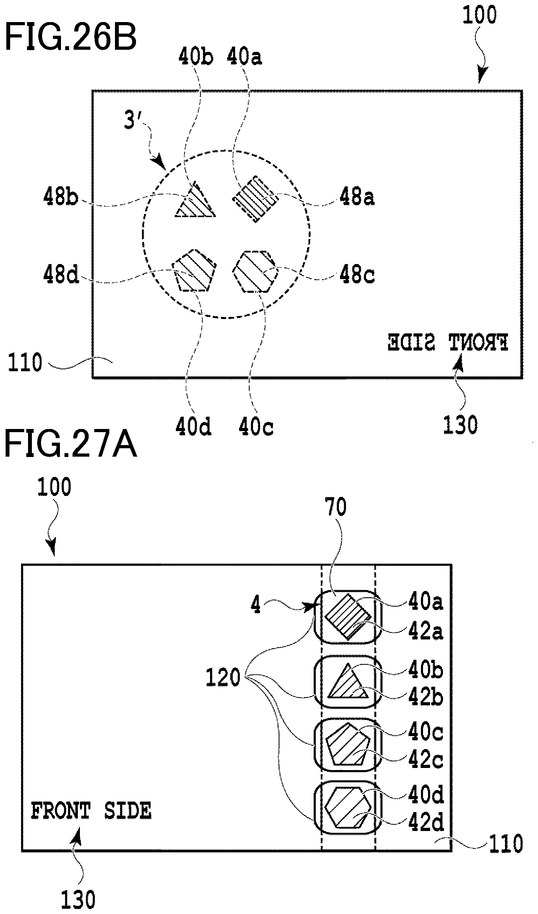

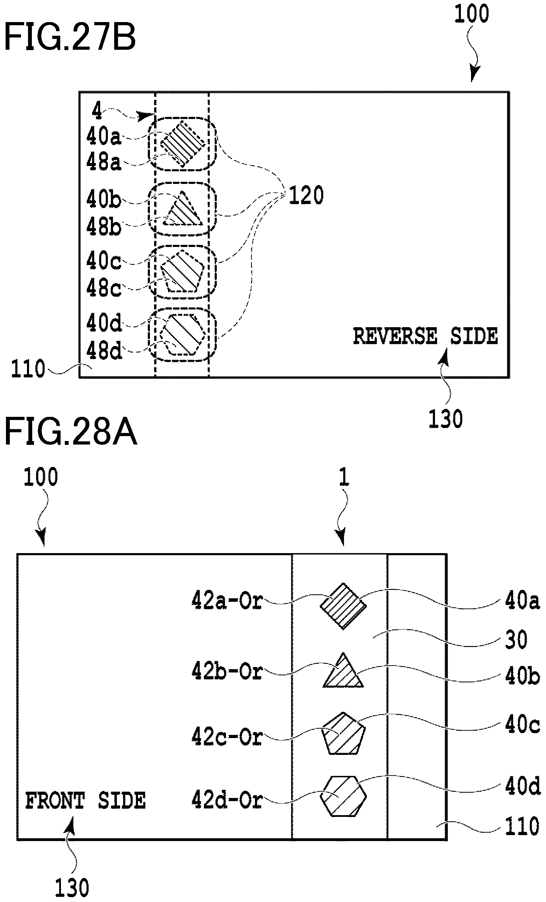

As shown in Figs. 25A and 26B, if a transparent receiving substrate 110 is used, the image parts 40a to 40d are visible from both the front and reverse sides of the printed matter 100. As shown in Figs. 27A and 27B, if an opaque receiving substrate 110 is used, the image parts 40a to 40d are visible only from the front side of the printed matter 100.

When using the embedding thread 4, the receiving substrate 110 is typically opaque. Therefore, the printed matter 100 is preferably provided with a receiving substrate window 120 at a desired position so that the image parts 40a to 40d are visible.

### Applications of first and second embodiments

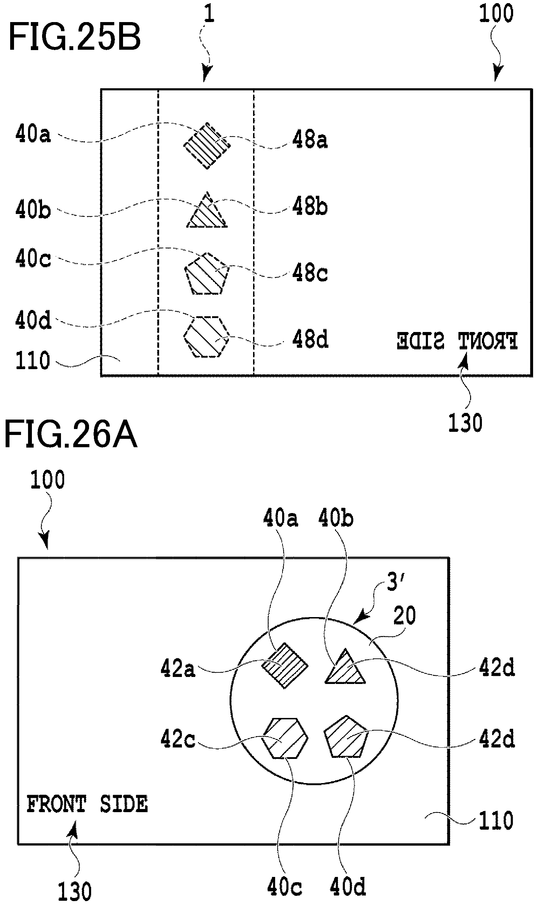

The laminate of the present embodiment as an application, which is configured as printed matter, is shown in Fig. 5 (derived from the first embodiment of the present invention) and Figs. 25A and 25B (derived from the second embodiment of the present invention).

Fig. 5 shows a configuration example of printed matter 100 including a receiving substrate 110 provided with a printed part 130, and an optical information medium 1 in a stripe shape (first embodiment of the present invention) transferred onto the receiving substrate 110. The optical information medium 1 (first embodiment of the present invention) shown in Fig. 5 is a configuration example having the image parts 40a to 40d. Under observation from the front side in Fig. 5, images exhibiting a glossy appearance are visually recognizable in the four image parts 40a to 40d of the optical information medium 1. The glossy appearance in this case is caused by the reflective layers 44a to 44d and the fine uneven structure-containing parts 42a to 42d.

Figs. 25A and 25B show a configuration example of printed matter 100 similarly including a receiving substrate 110 provided with a printed part 130, and an optical information medium 1 in a stripe shape (first embodiment of the present invention) transferred onto the receiving substrate 110. The optical information medium 1 (second embodiment of the present invention) shown in Figs. 25A and 25B is a configuration example having the image parts 40a to 40d. Under observation from the front side in Fig. 25A, images exhibiting a glossy appearance is visually recognizable in the four image parts 40a to 40d of the optical information medium 1 (second embodiment of the present invention). The glossy appearance in this case is caused by the reflective layers 44a to 44d and the fine uneven structure-containing parts 42a to 42d. In Figs. 25A and 25B, a transparent substrate is used for the receiving substrate 110. Thus, under observation from the reverse side in Fig. 25B, images exhibiting a glossy appearance are visually recognizable in the four image parts 40a to 40d of the optical information medium 1. The glossy appearance in this case is caused by the reflective layers 44a to 44d and the back-surface coloring parts 48a to 48d.

The configuration examples of Figs. 5, 25A and 25B can be obtained, for example, through transfer of the optical information medium 1 (first or second embodiment of the present invention) onto the receiving substrate 110 by suitably using the transfer foil 2 of the fourth embodiment corresponding to the present invention.

It should be noted that the front side surface of the laminate of the present embodiment is defined by the positional relationship between the bonding part 30 and the adhesive layer 50. Specifically, the surface closer to the bonding part 30 is the front side.

### Application of fifth embodiment

Figs. 6, 26A and 26B show an application in which the laminate of the present embodiment is configured as printed matter. Specifically, these figures each show printed matter 100 including a receiving substrate 110 provided with a printed part 130, and a label body 3' (derived from the fifth embodiment of the present invention) in a patch (island) shape and bonded onto the receiving substrate 110. Further, these figures each show an example of the label body 3' having image parts 40a to 40d.

The configuration example of Figs. 6, 26A and 26B can be obtained by peeling the release substrate 60 from the label 3 of the fifth embodiment of the present invention, followed by bonding the label body 3' onto the receiving substrate 110.

Figs. 26A and 26B show another example of the printed matter of the present invention. Fig. 26A is a schematic plan view illustrating the front side of the printed matter. Fig. 26B is a schematic plan view illustrating the reverse side of the printed matter. The printed matter 100 shown in Figs. 26A and 26B includes a receiving substrate 110 including a printed part 130, and a label body 3' in a patch (island) shape and bonded onto the receiving substrate 110. The label body 3' has four image parts 40a to 40d as an example. The example shown in Figs. 26A and 26B can be obtained by peeling the release substrate 60 from the label 3 shown in Fig. 23, followed by bonding the label body 3' onto the receiving substrate 110.

In the example shown in Figs. 26A and 26B, the receiving substrate 110 is transparent. Therefore, under observation from the front side in Fig. 26A, images exhibiting a glossy appearance are visually recognizable in the four image parts 40a to 40d of the label body 3'. The glossy appearance in this case is caused by the reflective layers 44a to 44d and the fine uneven structure-containing parts 42a to 42d. Under observation from the reverse side in Fig. 26B, images exhibiting a glossy appearance are visually recognizable in the four image parts 40a to 40d of the label body 3'. The glossy appearance in this case is caused by the reflective layers 44a to 44d and the back-surface coloring parts 48a to 48d.

### Application of sixth embodiment

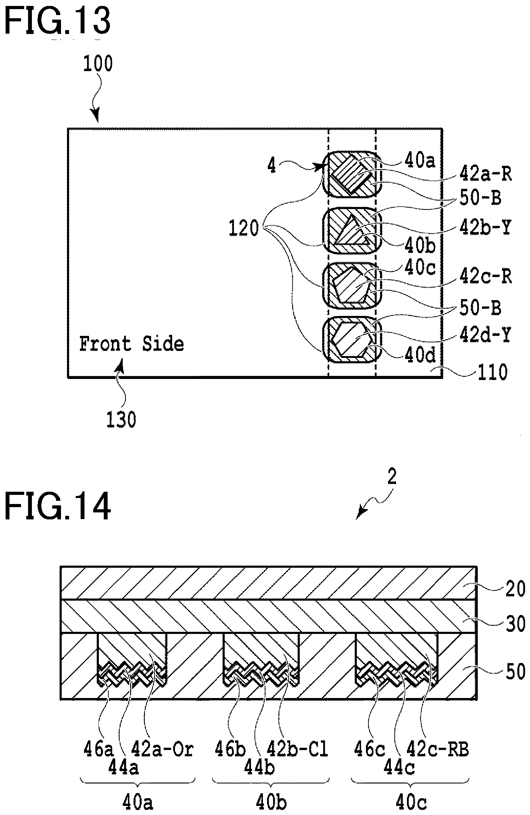

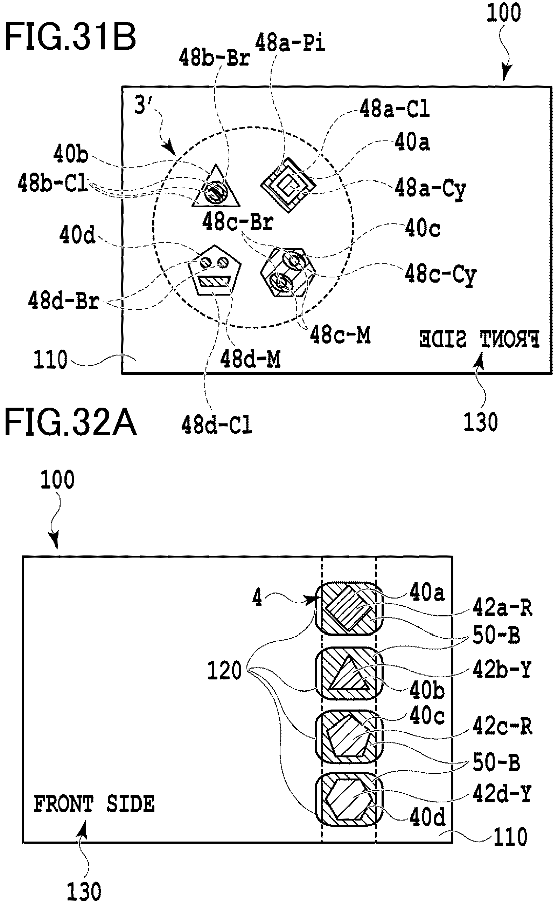

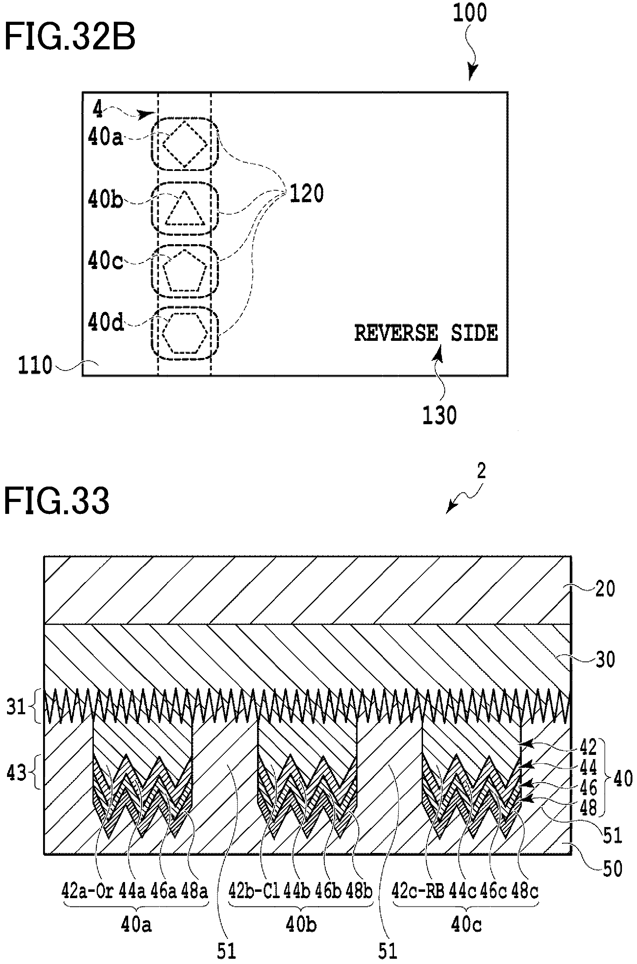

When using the embedding thread 4 of the sixth embodiment, the receiving substrate 110 is preferably paper or a non-woven fabric. The receiving substrate 110 may have one or more receiving substrate windows 120 where there is no fibrous material, at positions respectively corresponding to the image parts 40 of the embedding thread 4 [e.g., see Figs. 7 and 13 (first embodiment of the present invention), Figs. 27A, 27B, 32A and 32B (second embodiment of the present invention)].

The receiving substrate windows 120 may be provided to the carrier substrate-side adhesive layer 70 side of the embedding thread 4, so that the glossy appearance caused by the reflective layers 44 and the fine uneven structure-containing parts 42 is visually observed. Alternatively, the receiving substrate windows 120 may be provided to the adhesive layer 50 side of the embedding thread 4, so that the glossy appearance caused by the reflective layer 44 and the mask layer 46 (medium of the first embodiment of the present invention), or by the reflective layers 44a to 44d and the back-surface coloring part 48 (medium of the second embodiment of the present invention) is visually recognized. Additionally, the receiving substrate windows 120 may be provided to both sides of the receiving substrate 110 so that the aforementioned two types of glossy appearances can be visually recognized. The receiving substrate windows 120 may be formed by any technique known in the art, such as a method in which convexities are provided to a papermaking roll.

Figs. 7, 27A and 27B show an application in which the laminate of the present embodiment is configured as printed matter.

In the configuration example of Figs. 7, 27A and 27B as well, the laminate of the present embodiment is configured as printed matter. Specifically, these figures each show printed matter 100 including a receiving substrate 110 provided with a printed part 130, and an embedding thread 4 embedded in the receiving substrate 110 (sixth embodiment of the present invention). Further, these figures each show an example of an embedding thread 4 having image parts 40a to 40d.

The configuration example of Fig. 7 is obtained by forming the receiving substrate 110 while embedding the embedding thread 4 therein (sixth embodiment of the present invention), and applying a printing ink to the surface of the receiving substrate 110 for formation of the printed part 130.

Fig. 7 shows a configuration example in which the receiving substrate 110 is opaque, and the embedding thread 4 is exposed in four receiving substrate windows 120 provided to the front surface of the receiving substrate 110. Therefore, under observation from the front side in Fig. 7, images exhibiting a glossy appearance are visually recognized in image parts 40a to 40d of the embedding thread 4. The glossy appearance in this case is caused by the reflective layers 44a to 44d and the fine uneven structure-containing parts 42a to 42d. Under observation in the light reflected from the reverse side, the embedding thread 4 is not visually recognized due to the opacity of the receiving substrate 110.

Figs. 27A and 27B show still another example of the printed matter of the present invention. Fig. 27A is a schematic plan view illustrating the front side of printed matter. Fig. 27B is a schematic plan view illustrating the reverse side of the printed matter. Figs. 27A and 27B show an example of printed matter 100 including a receiving substrate 110 provided with a printed part 130, and an embedding thread 4 embedded in the receiving substrate 110. Further, these figures show an example of an embedding thread 4 having image parts 40a to 40d. The example of Figs. 27A and 27B is obtained by forming the receiving substrate 110 while embedding the embedding thread 4 therein, and applying a printing ink to the surface of the receiving substrate 110 for formation of the printed part 130.

Figs. 27A and 27B show an example in which the receiving substrate 110 is opaque, and the embedding thread 4 is exposed in four receiving substrate windows 120 provided to the front surface of the receiving substrate 110. Therefore, under observation from the front side in Fig. 27A, images exhibiting a glossy appearance are visually recognized in four image parts 40a to 40d of the embedding thread 4. The glossy appearance in this case is caused by the reflective layers 44a to 44d and the fine uneven structure-containing parts 42a to 42d. Under observation in the light reflected from the reverse side in Fig. 27B, the embedding thread 4 is not visually recognized due to the opacity of the receiving substrate 110.

It should be noted that Figs. 27A and 27B show a structure in which the receiving substrate windows 120 are provided only to the front side of the receiving substrate 110 so that the image parts 40a to 40d are visually recognized only from the front side. However, the receiving substrate windows 120 may also be provided to the reverse side of the receiving substrate 110 so that the image parts 40a to 40d are visually recognized from the reverse side. In this case, images exhibiting a glossy appearance caused by the reflective layers 44a to 44d and the back-surface coloring parts 48a to 48d can be visually recognized from the reverse side. The shape and the number of receiving substrate windows 120 can be changed as desired.

### Printed part 130

The printed part 130 may be formed by applying any ink known in the art to the receiving substrate 110 by using any technique known in the art. Non-limiting examples of the usable technique include ink-jet printing, screen printing, intaglio printing, letterpress printing, and lithography.

Figs. 5 to 7 and 25A to 27B show configuration examples in which the printed part 130 is provided at a position apart from the optical information medium 1, the label body 3' and the embedding thread 4, respectively. However, the position where the printed part 130 is provided is not specifically limited. For example, the printed part 130 may be provided to a lower part of the optical information medium 1 shown in Fig. 5 or Figs. 25A and 25B, a lower part of the label body shown in Fig. 6 or Figs. 26A and 26B, or around the receiving substrate windows 120 shown in Fig. 7 or Figs. 27A and 27B to surround the image parts 40a to 40d. Further, the printed part 130 may be designed to be continuous from the label body 3' onto the receiving substrate 110, or may be separately provided to these members, or the printed part 130 may be provided on the receiving substrate 110 and then the label body 3' may be provided thereon.

Figs. 5 to 7 and 25A to 27B show examples in which the printed part 130 is provided at a position apart from the image parts 40a to 40d. However, as necessary, the printed part 130 may be provided overlapping the image parts 40a to 40d, or surrounding the image parts 40a to 40d.

### Image parts 40a to 40d

Figs. 5 to 7 and 25A to 27B show examples in which the image parts 40a to 40d are fixed after being registered with respect to the receiving substrate 110. However, a greater number of image parts may be provided to form repetition of wall paper patterns (images).

### Examples

Examples of the present invention will be described below. For clarification, the examples are described using bracketed reference signs and referring to conceptual diagrams corresponding to the respective examples.

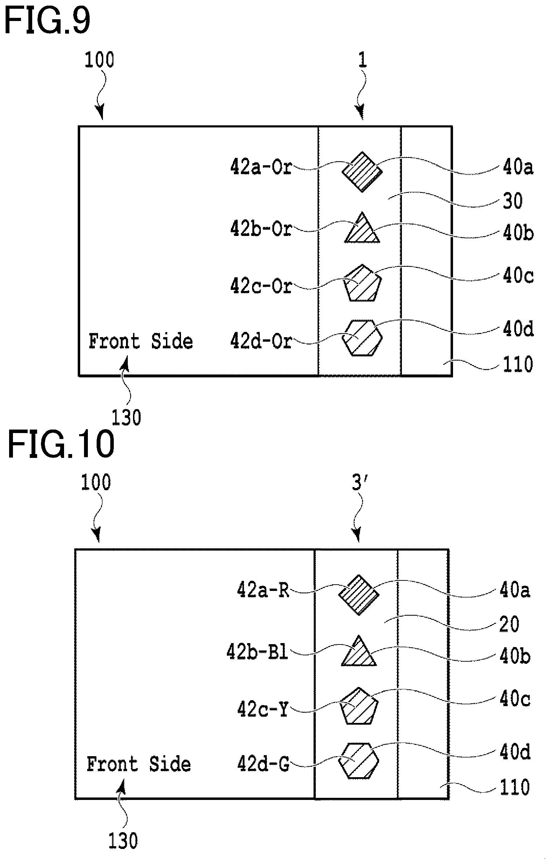

### [Example 1] (Fig. 9)

### (1-1)

First, a bonding part 30 and uneven structure-containing parts 42a to 42d were formed using the method shown in Fig. 8. A bonding film 252 was prepared by coating a PET film with an acrylic resin as a release layer.

Specifically, first, an acrylic UV-curable resin was applied to a PET film, and an inverted configuration of a desired selective-etching-enabling structure 31 was transferred to the acrylic UV-curable resin by photopolymerization to obtain a first forming film 259. A bonding ink 254 containing an acrylic adhesive resin was loaded in the bonding ink reservoir 253. The bonding ink 254 was transferred from the bonding ink applying cylinder 255 to the first forming film 259 by applying pressure with the bonding ink pressing cylinder 256. A hot-air oven was used as the bonding ink curing section 258 to dry and cure the ink, thereby obtaining a first transfer film 257 [see (C-1)].

Then, the bonding film 252 was fed from the bonding film unwinding roll 251, followed by applying pressure to the bonding film 252 by the first bonding cylinders 261. During the application of pressure, the bonding film 252 was brought into contact with the first transfer film 257 to transfer the bonding part 30 to the bonding film 252. The first forming film 259 was peeled by the first film peeling section 262 to obtain a first transferred bonding film 263 that has been provided with the bonding part 30.

The fine uneven structure formed in the first transferred bonding film had a pitch of 0.4 µm and a height of 0.2 µm. The aspect ratio i.e. the ratio of the pitch of the fine uneven structure and the height of the uneven structure was 0.5, and the ratio of the surface area of the selective-etching-enabling structure formed bonding film and the surface area of the fine uneven structure was 1.4.

A urethane resin was applied to a PET film, followed by drying to form a resin layer. The resultant film was pressed to transfer an inverted configuration of a desired fine uneven structure to the resin layer to thereby obtain a second forming film 279. A forming resin ink 274 containing a urethane resin and an orange colorant was loaded in the forming resin ink reservoir 273. After registration, pressure was applied to the film 279 by the forming resin ink pressing cylinder 276 to transfer the forming resin ink 274 to the second forming film 279 from the forming resin ink applying cylinder 275 having patterned concavities. A hot-air oven was used as the forming resin ink curing section 278 to dry and cure the ink, thereby obtaining a second transfer film 277.

While pressure was applied to the film 277 by the second bonding cylinders 281, the first transferred bonding film 263 was brought into contact with the second transfer film 277 to transfer the fine uneven structure-containing parts 42a-Or to 42d-Or to the first transferred bonding film 263. Then, the second forming film 279 was peeled by the second film peeling section 282, and the resultant second transferred bonding film 283 provided with the fine uneven structure-containing parts 42a-Or to 42d-Or was taken up by the bonding film take-up roll 284. Then, the second transferred bonding film 283 was cut to obtain a stripe-shaped intermediate object 1-1 in which the first carrier substrate 20, the bonding part 30 and the fine uneven structure-containing parts 42a-Or to 42d-Or were laminated in this order. The first carrier substrate 20 herein is a PET film which has a release layer made of an acrylic resin, and which was used as the bonding film 252.

### (1-2)

Then, aluminum was vapor-deposited with a thickness of 55 nm on an overall fine uneven structure-containing parts 42a-Or to 42d-Or-side surface of the intermediate object 1-1 to form an aluminum layer. In this case, a relatively thin aluminum layer was formed on the selective-etching-enabling structure 31 of the bonding part 30 having a greater surface area than the fine uneven structure-containing parts 42a-Or to 42d-Or. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure 31 of the bonding part 30 having a greater surface area than the fine uneven structure-containing parts 42a-Or to 42d-Or. Thus, an intermediate object 1-2 was obtained.

### (1-3)

Then, the obtained intermediate object 1-2 was immersed in a sodium hydroxide solution to etch off the aluminum layer using the silicon dioxide layer as a mask. In this case, the relatively thin silicon dioxide layer and the aluminum layer were selectively removed first to form patterned reflective layers 44a to 44d and patterned mask layers 46a to 46d. The etching removal was followed by washing with a hydrochloric acid solution and water, and the resultant object i.e. an intermediate object 1-3 was dried with hot air. Subsequently, an acrylic resin was applied to the dried intermediate object 1-3 to form an adhesive layer 50, thereby forming a transfer foil 2 of the fourth embodiment derived from the first embodiment of the present invention.

The transfer foil 2 had four discrete image parts 40a to 40d. The image parts 40a to 40d respectively had discrete orange colored fine uneven structure-containing parts 42a-Or to 42d-Or, discrete aluminum reflective layers 44a to 44d respectively remained only on the fine uneven structure-containing parts 42a-Or to 42d-Or, and discrete mask layers 46a to46d respectively remained only on the fine uneven structure-containing parts 42a-Or to 42d-Or. Only the colorless adhesive layer 50 was present in the gaps between the image parts 40a to 40d.

The resultant transfer foil 2 was thermocompressively bonded to a cotton paper receiving substrate 110 having a printed part 130 by use of an up-down heat-transfer device provided with a hot stamp, followed by peeling off the first carrier substrate 20 to obtain the printed matter 100 shown in Fig. 9. In the printed matter 100, a stripe-shaped optical information medium 1 had been transferred onto the front surface shown in Fig. 9.

As shown in Fig. 9, when the printed matter 100 was observed from the front side, four discrete image parts 40a to 40d were visually recognized. It was observed that the four image parts 40a to 40d exhibited a gold glossy appearance caused by the reflective layers 44a to 44d made of aluminum and the orange fine uneven structure-containing parts 42a-Or to 42d-Or. It was also observed that the reflective layers 44a to 44d were respectively registered with the orange fine uneven structure-containing parts 42a-Or to 42d-Or with no deviation, and the region other than the four image parts 40a to 40d was colorless and transparent.

As described above, in the optical information medium 1 (first embodiment of the present invention) as obtained, discrete image parts were visually observed in a colorless and transparent region, without using a monolayer having an orange-colored fine structure, and without allowing the gold glossy appearance as observed from the front side to mix with the silver glossy appearance of only the reflective layers due to positional deviation between the fine uneven structure and the mask layer, or to mix with the translucent orange appearance of the fine uneven structure having no metallic gloss. Thus, there were obtained a transfer foil 2 (fourth embodiment of the present invention) and printed matter 100 having the optical information medium 1 (seventh embodiment of the present invention). The reflective layers 44a to 44d of the present example, which were formed of aluminum, had physical strength and chemical resistance equivalent to those of the conventional reflective layer providing a silver glossy appearance.

### [Example 2] (Fig. 10)

### (2-1)

Except for using a PET film having no release layer containing an acrylic resin as a bonding film 252, and using a forming resin ink 274 containing a urethane resin and a red colorant, a fine uneven structure-containing part 42a-R was formed at a predetermined position on a bonding part 30 by the same procedure as in Example 1.

Then, except for omitting the PET film on which the fine uneven structure-containing part 42a-R was formed, and omitting the bonding ink applying cylinder 255, the bonding ink pressing cylinder 256, and the bonding ink reservoir 253, a fine uneven structure-containing part 42b-Bl was formed at a predetermined position, using the same device as in Fig. 8 and a forming resin ink 274 containing a urethane resin and a blue colorant.

Subsequently, except for using a forming resin ink 274 containing a urethane resin and a yellow colorant, a fine uneven structure-containing part 42c-Y was formed at a predetermined position through the same procedure as in the formation of the fine uneven structure-containing part 42b-Bl. Further, except for using a forming resin ink 274 containing a urethane resin and a green colorant, a fine uneven structure-containing part 42c-G was formed at a predetermined position through the same procedure as stated above. Then, the second transferred bonding film 283 was cut to obtain a stripe-shaped intermediate object 2-1 in which a second carrier substrate 20', a bonding part 30 and the fine uneven structure-containing parts 42a to 42d were laminated in this order. Herein, the second carrier substrate 20' is a PET film which does not have a release layer made of an acrylic resin, and which was used as a bonding film 252.

### (2-2)

Then, an aluminum layer with a thickness of 55 nm was formed on an overall surface of the intermediate object 2-1 having four kinds of fine uneven structure-containing parts 42a to 42d, through the same procedure as in Example 1. In this case, a relatively thin aluminum layer was formed on the selective-etching-enabling structure of the bonding part 30 having a greater surface area than the fine uneven structure-containing parts 42a to 42d. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing parts 42a to 42d. Thus, an intermediate object 2-2was obtained.

### (2-3)

Then, the obtained intermediate object 2-2 was immersed in a sodium hydroxide solution to etch off the aluminum layer using the silicon dioxide layer as a mask through the same procedure as in Example 1. In this case, the relatively thin silicon dioxide layer and the aluminum layer were selectively removed first to form patterned reflective layers 44a to 44d and patterned mask layers 46a to 46d. Then, the resultant object was washed and dried, followed by forming an adhesive layer 50, through the same procedure as in Example 1. A release substrate 60 made of a non-woven fabric was bonded to the surface of the adhesive layer 50 of the obtained laminate to form a label 3 of the fourth embodiment derived from the first embodiment of the present invention.

The label 3 had four discrete image parts 40a to 40d. The image parts 40a to 40d respectively had discrete fine uneven structure-containing parts 42a-R, 42b-Bl, 42c-Y and 42d-G respectively colored red, blue, yellow and green, discrete aluminum reflective layers 44a to 44d respectively remained only on the fine uneven structure-containing parts 42a-R, 42b-Bl, 42c-Y and 42d-G, and discrete mask layers 46a to 46d respectively remained only on the fine uneven structure-containing parts 42a-R, 42b-Bl, 42c-Y and 42d-G. Only the colorless adhesive layer 50 was present in the gaps between the image parts 40a to 40d.

After peeling off the release substrate 60, the obtained label 3 was bonded to a cotton paper receiving substrate 110 having a printed part 130 to obtain the printed matter 100 shown in Fig. 10. In the printed matter 100, a striped-shape label body 3' had been transferred onto the front surface shown in Fig. 10.

As shown in Fig. 10, when the printed matter 100 was observed from the front side, four discrete image parts 40a to 40d were visually recognized. It was observed that the four image parts 40a to 40d respectively exhibited glossy appearances that were not silver (e.g., red glossy appearance of the image part 40a) caused by the reflective layers 44a to 44d made of aluminum and the fine uneven structure-containing parts 42a to 42d having respective colors. It was also observed that the reflective layers 44a to 44d were respectively registered with the fine uneven structure-containing parts 42a-R, 42b-Bl, 42c-Y and 42d-G having different colors with no deviation, and the region other than the four image parts 40a to 40d was colorless and transparent.

As described above, in the optical information medium 1 (first embodiment of the present invention) as obtained, discrete image parts were visually observed in a colorless and transparent region, without using a monolayer having a fine structure tinted to have one color, and without allowing the glossy appearances that were not silver as observed from the front side to mix with the silver glossy appearance of only the reflective layers due to positional deviation between the fine uneven structure and the mask layer, or to mix with the translucent red, blue, yellow and green appearances of the fine uneven structure having no metallic gloss. Thus, there were obtained a label 3 having the optical information medium 1 (fifth embodiment of the present invention), and printed matter 100 having the label body 3' (seventh embodiment of the present invention). The reflective layers 44a to 44d of the present example, which were formed of aluminum, had physical strength and chemical resistance equivalent to those of the conventional reflective layer providing a silver glossy appearance.

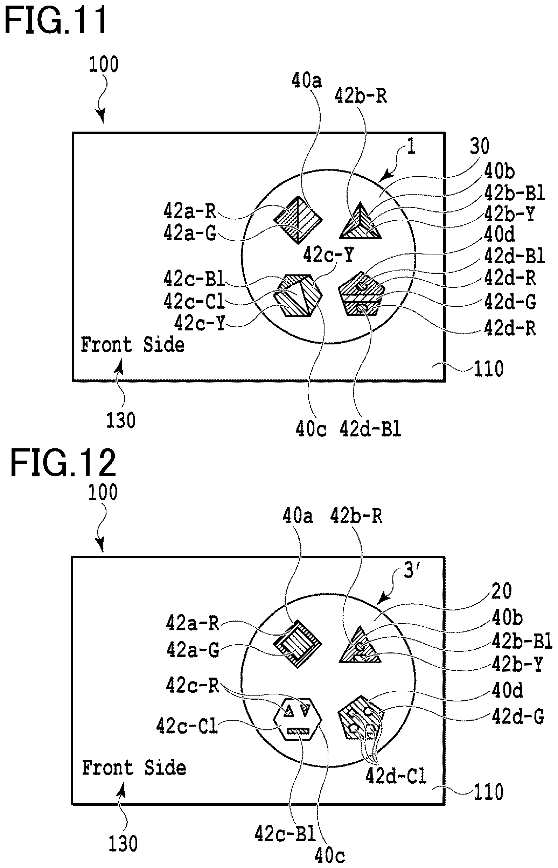

### [Example 3] (Fig. 11)

### (3-1)

Except for using a forming resin ink 274 containing a urethane resin and a red colorant, fine uneven structure-containing parts 42a-R, 42b-R and 42d-R were formed at predetermined positions on the bonding part 30 through the same procedure as in Example 1.

Then, except for omitting the PET film on which the fine uneven structure-containing parts 42a-R, 42b-R and 42d-R were formed, and omitting the bonding ink applying cylinder 255, the bonding ink pressing cylinder 256, and the bonding ink reservoir 253, fine uneven structure-containing parts 42b-Bl, 42c-Bl, and 42d-Bl were formed at predetermined positions, using the same device as in Fig. 8 and a forming resin ink 274 containing a urethane resin and a blue colorant.

Subsequently, except for using a forming resin ink 274 containing a urethane resin and a yellow colorant, fine uneven structure-containing parts 42b-Y and 42c-Y were formed at predetermined positions through the same procedure as in the formation of the fine uneven structure-containing parts 42b-Bl, 42c-Bl and 42d-Bl. Further, except for using a forming resin ink 274 containing a urethane resin and a green colorant, fine uneven structure-containing parts 42a-G and 42d-G were formed at predetermined positions through the same procedure as stated above. Further, except for using a forming resin ink 274 containing a urethane resin but free of colorants, a fine uneven structure-containing part 42c-Cl was formed at a predetermined position through the same procedure as stated above. Then, the second transferred bonding film 283 was cut to obtain a patch-shaped intermediate object 3-1 in which a first carrier substrate 20, a bonding part 30 and the fine uneven structure-containing parts 42a to 42d were laminated in this order. The first carrier substrate 20 herein is a PET film which has a release layer made of an acrylic resin, and which was used as the bonding film 252.

### (3-2)

Then, an aluminum layer with a thickness of 55 nm was formed on an overall surface of the intermediate object 3-1 having four kinds of fine uneven structure-containing parts 42a to 42d, through the same procedure as in Example 1. In this case, a relatively thin aluminum layer was formed on the selective-etching-enabling structure of the bonding part 30 having a greater surface area than the fine uneven structure-containing parts 42a to 42d. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing parts 42a to 42d. Thus, the intermediate object 3-2 was obtained.

### (3-3)

Then, the prepared intermediate object 3-2 was immersed in a sodium hydroxide solution to etch off the aluminum layer using the silicon dioxide layer as a mask through the same procedure as in Example 1. In this case, the relatively thin silicon dioxide layer and the aluminum layer were selectively removed first to form patterned reflective layers 44a to 44d and patterned mask layers 46a to 46d. Then, the resultant object was washed and dried, followed by forming an adhesive layer 50, through the same procedure as in Example 1 to form a transfer foil 2 of the third embodiment derived from the first embodiment of the present invention.

The first image part 40a had fine uneven structure-containing parts 42a-R and 42a-G having two regions with different colors, an aluminum reflective layer 44a remained only on the fine uneven structure-containing parts 42a-R and 42a-G, and a mask layer 46a remained only on the fine uneven structure-containing parts 42a-R and 42a-G. The second image part 40b had fine uneven structure-containing parts 42b-R, 42b-Bl and 42b-Y having three regions with different colors, an aluminum reflective layer 44b remained only on the fine uneven structure-containing parts 42b-R, 42b-Bl and 42b-Y, and a mask layer 46b remained only on the fine uneven structure-containing parts 42b-R, 42b-Bl and 42b-Y. The third image part 40c had fine uneven structure-containing parts 42c-Bl, 42c-Y and 42c-Cl having three regions with two different colors including one colorless region, an aluminum reflective layer 44c remained only on the fine uneven structure-containing parts 42c-Bl, 42c-Y and 42c-Cl, and a mask layer 46c remained only on the fine uneven structure-containing parts 42c-Bl, 42c-Y and 42c-Cl. The fourth image part 40d had fine uneven structure-containing parts 42d-R, 42d-Bl and 42d-G having five regions with three different colors, an aluminum reflective layer 44d remained only on the fine uneven structure-containing parts 42d-R, 42d-Bl and 42d-G, and a mask layer 46d remained only on the fine uneven structure-containing parts 42d-R, 42d-Bl and 42d-G. Only the colorless adhesive layer 50 was present in the gaps between the image parts 40a to 40d.

Through the same procedure as in Example 1, the obtained transfer foil 2 was thermocompressively bonded to a white PET receiving substrate 110 having a printed part 130, followed by peeling off the carrier substrate 20 to obtain the printed matter 100 shown in Fig. 11 as a laminate of the seventh embodiment derived from the first embodiment of the present invention.

In the printed matter 100, a patch-shaped optical information medium 1 had been transferred onto the front surface shown in Fig. 11.

As shown in Fig. 11, when the printed matter 100 was observed from the front side, four discrete image parts 40a to 40d were visually recognized. It was observed that the four image parts 40a to 40d respectively exhibited glossy appearances of a plurality of colors produced by the reflective layers 44a to 44d made of aluminum and the fine uneven structure-containing parts 42a to 42d having a plurality of colors. It was also observed that the reflective layers 44a to 44d were respectively registered with the fine uneven structure-containing parts 42a-R, 42a-G, 42b-R, 42b-Bl, 42b-Y, 42c-Bl, 42c-Cl, 42c-Y, 42d-Bl, 42d-R and 42d-G having a plurality of colors with no deviation, and the region other than the four image parts 40a to 40d was colorless and transparent. In the third image part 40c, the region provided with the colorless fine uneven structure-containing part 42c-Cl exhibited a silver glossy appearance. In this way, the present invention can provide an image exhibiting both the conventional silver glossy appearance and the glossy appearances in other colors.

As described above, in the optical information medium 1 (first embodiment of the present invention) as obtained, discrete image parts were visually recognized in a colorless and transparent region, without using a monolayer having a fine structure tinted to have one color, and without allowing the multi-color glossy appearance including silver as observed from the front side to mix with the silver glossy appearance of only the reflective layers due to positional deviation between the fine uneven structure and the mask layer, or to mix with the translucent red, blue, yellow and green appearances of the fine uneven structure having no metallic gloss. Thus, there were obtained a transfer foil 2 (fourth embodiment of the present invention) and printed matter 100 having the optical information medium 1 (seventh embodiment of the present invention). The reflective layers 44a to 44d of the present example, which were formed of aluminum, had physical strength and chemical resistance equivalent to those of the conventional reflective layer providing a silver glossy appearance.

### [Example 4] (Fig. 12)

### (4-1)

Using a forming resin ink 274 containing a urethane resin and a red colorant, fine uneven structure-containing parts 42a-R, 42b-R and 42c-R were formed at predetermined positions on the bonding part 30 through the same procedure as in Example 2.

Then, using a forming resin ink 274 containing a urethane resin and a blue colorant, fine uneven structure-containing parts 42b-Bl and 42c-Bl were formed at predetermined positions through the same procedure as in Example 2. Subsequently, using a forming resin ink 274 containing a urethane resin and a yellow colorant, a fine uneven structure-containing part 42b-Y was formed at a predetermined position through the same procedure as in Example 2. Further, using a forming resin ink 274 containing a urethane resin and a green colorant, fine uneven structure-containing parts 42a-G and 42d-G were formed at predetermined positions through the same procedure as in Example 2. Furthermore, using a forming resin ink 274 containing a urethane resin but free of colorants, fine uneven structure-containing parts 42c-Cl and 42d-Cl were formed at predetermined positions through the same procedure as in Example 3. Then, the fine uneven structure-containing part-formed bonding film 283 was cut to obtain a patch-shaped intermediate object 4-1 in which a second carrier substrate 20', a bonding part 30 and the fine uneven structure-containing parts 42a to 42d were laminated in this order. Herein, the second carrier substrate 20' is a PET film which does not have a release layer made of an acrylic resin, and which was used as a bonding film 252.

### (4-2)

Then, an aluminum layer with a thickness of 55 nm was formed on an overall surface of the fine uneven structure-containing part-formed bonding film 283 having four kinds of fine uneven structure-containing parts 42a to 42d, through the same procedure as in Example 2. In this case, a relatively thin aluminum layer was formed on the selective-etching-enabling structure of the bonding part 30 having a greater surface area than the fine uneven structure-containing parts 42a to 42d. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing parts 42a to 42d. Thus, an intermediate object 4-2 was obtained.

### (4-3)

Then, the prepared intermediate object 4-2 was immersed in a sodium hydroxide solution to etch off the aluminum layer using the silicon dioxide layer as a mask through the same procedure as in Example 2. In this case, the relatively thin silicon dioxide layer and the aluminum layer were selectively removed first to form patterned reflective layers 44a to 44d and patterned mask layers 46a to 46d. Then, the resultant object was washed and dried, followed by forming an adhesive layer 50 and bonding a release substrate 60, through the same procedure as in Example 2 to form a label 3 of the fourth embodiment derived from the first embodiment of the present invention.

The first image part 40a had fine uneven structure-containing parts 42a-R and 42a-G having two regions with different colors, an aluminum reflective layer 44a remained only on the fine uneven structure-containing parts 42a-R and 42a-G, and a mask layer 46a remained only on the fine uneven structure-containing parts 42a-R and 42a-G. The second image part 40b had fine uneven structure-containing parts 42b-R, 42b-Bl and 42b-Y having three regions with different colors, an aluminum reflective layer 44b remained only on the fine uneven structure-containing parts 42b-R, 42b-Bl and 42b-Y, and a mask layer 46b remained only on the fine uneven structure-containing parts 42b-R, 42b-Bl and 42b-Y. The third image part 40c had fine uneven structure-containing parts 42c-R, 42c-Bl and 42c-Cl having three regions with two different colors including one colorless region, an aluminum reflective layer 44c remained only on the fine uneven structure-containing parts 42c-R, 42c-Bl and 42c-Cl, and a mask layer 46c remained only on the fine uneven structure-containing parts 42c-R, 42c-Bl and 42c-Cl. The fourth image part 40d had fine uneven structure-containing parts 42d-G and 42d-Cl having one region with one color and four colorless regions, an aluminum reflective layer 44d remained only on the fine uneven structure-containing parts 42d-G and 42d-Cl, and a mask layer 46d remained only on the fine uneven structure-containing parts 42d-G and 42d-Cl. Only the colorless adhesive layer 50 was present in the gaps between the image parts 40a to 40d.

After peeling off the release substrate 60, the obtained label 3 was bonded to a white PET receiving substrate (110) having a printed part 130 to obtain the printed matter 100 shown in Fig. 12 as a laminate of the seventh embodiment derived from the first embodiment of the present invention. In the printed matter 100, a patch-shaped label body 3' had been bonded onto the front surface shown in Fig. 12.

As shown in Fig. 12, when the printed matter 100 was observed from the front side, four discrete image parts 40a to 40d were visually recognized. It was observed that the four image parts 40a to 40d respectively exhibited glossy appearances of a plurality of colors produced by the reflective layers 44a to 44d made of aluminum and the fine uneven structure-containing parts 42a to 42d tinted to have a plurality of colors. It was also observed that the reflective layers 44a to 44d were respectively registered with the fine uneven structure-containing parts 42 a-R, 42a-G, 42b-R, 42b-Bl, 42b-Y, 42c-R, 42c-Bl, 42c-Cl, 42d-G and 42d-Cl tinted to have a plurality of colors with no deviation, and the region other than the four image parts 40a to 40d was colorless and transparent. The first image part 40a had a glossy appearance of two colors produced by the peripheral area constituted of the red fine uneven structure-containing part 42a-R and the inner area constituted of the green fine uneven structure-containing part 42a-G. Further, the third image part 40c had a peripheral area constituted of the colorless fine uneven structure-containing part 42c-Cl and exhibiting a silver glossy appearance, and an inner area constituted of the red and blue fine uneven structure-containing parts 42c-R and 42c-Bl and exhibiting a non-silver glossy appearance. In this way, the present invention can provide an image in which an inner area exhibiting one or more colors is provided inside a peripheral area exhibiting one color.

### [Example 5] (Fig. 13)

### (5-1)

Using a forming resin ink 274 containing a urethane resin and a red colorant, fine uneven structure-containing parts 42a-R and 42c-R were formed at predetermined positions on the bonding part 30 through the same procedure as in Example 2.

Then, using a forming resin ink 274 containing a urethane resin and a yellow colorant, fine uneven structure-containing parts 42b-Y and 42d-Y were formed at predetermined positions through the same procedure as in Example 2. Then, the second transferred bonding film 283 was cut to obtain a stripe-shaped intermediate object 5-1 in which a third carrier substrate 20", a bonding part 30 and the fine uneven structure-containing parts 42a to 42d were laminated in this order. Herein, the third carrier substrate 20" is a PET film which does not have a release layer made of an acrylic resin, and which was used as a bonding film 252.

### (5-2)

Then, an aluminum layer with a thickness of 55 nm was formed on an overall surface of the intermediate object 5-1 having four kinds of fine uneven structure-containing parts 42a to 42d, through the same procedure as in Example 2. In this case, a relatively thin aluminum layer was formed on the selective-etching-enabling structure of the bonding part 30 having a greater surface area than the fine uneven structure-containing parts 42a to 42d. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing parts 42a to 42d. Thus, an intermediate object 5-2 was obtained.

### (5-3)

Then, the prepared intermediate object 5-2 was immersed in a sodium hydroxide solution to etch off the aluminum layer using the silicon dioxide layer as a mask, through the same procedure as in Example 2. In this case, the relatively thin silicon dioxide layer and the aluminum layer were selectively removed first to form patterned reflective layers 44a to 44d and patterned mask layers 46a to 46d. Then, the resultant object was washed and dried through the same procedure as in Example 2. Thus, an intermediate object 5-3 was obtained.

A composition containing an acrylic resin and a blue colorant was applied to an overall image parts 40a to 40d-side surface of the dried intermediate object 5-3 to form a blue adhesive layer 50-B. Then, a composition containing an acrylic resin but free of colorants was applied to an overall third carrier substrate 20"-side surface of the intermediate object to form a colorless carrier substrate-side adhesive layer 70, thereby forming an embedding thread 4 of the sixth embodiment derived from the first embodiment of the present invention.

The obtained embedding thread 4 was embedded in a cotton dispersion to prepare a laminate of the seventh embodiment in which the embedding thread 4 was embedded in a cotton receiving substrate 110. The front surface of the cotton receiving substrate 110 had receiving substrate windows 120 at positions corresponding to the image parts 40a to 40d of the embedding thread 4, with the image parts 40a to 40d being respectively exposed in the windows. The front-side and the reverse-side surfaces of the laminate (cotton receiving substrate 110) were subjected to printing to form a printed part 130, thereby obtaining printed matter 100 as a laminate of the seventh embodiment derived from the first embodiment of the present invention.

As shown in Fig. 13, when the printed matter 100 was observed from the front side, four discrete image parts 40a to 40d were visually recognized. The two image parts 40a and 40c had a non-silver glossy appearance produced by the reflective layers 44a and 44c made of aluminum and the red fine uneven structure-containing parts 42a-R and 42c-R. The two image parts 40b and 40d had a non-silver glossy appearance produced by the reflective layers 44b and 44d made of aluminum and the yellow fine uneven structure-containing parts 42b-Y and 42d-Y. The reflective layers 44a to 44d were respectively registered with the fine uneven structure-containing parts 42a-R, 42b-Y, 42c-R and 42d-Y having colors different from each other with no deviation. The region other than the four image parts 40a to 40d was observed to be non-glossy blue as produced by the blue adhesive layer 50-B. The lack of gloss was due to the absence of the reflective layers 44a to 44d from the region other than the image parts 40a to 40d.

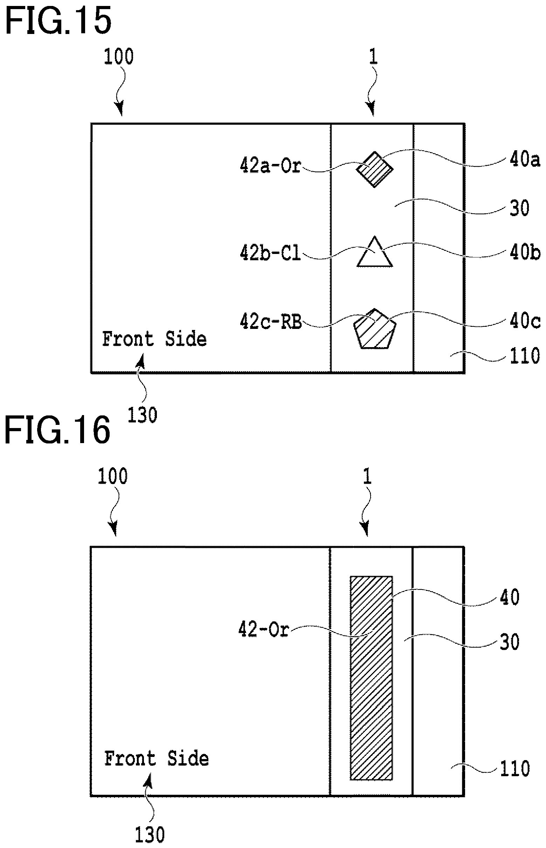

### [Example 6] (Figs. 14 and 15)

### (6-1)

A bonding part 30 was formed by the same procedure as in Example 1.

Then, except for using a fine uneven structure forming film 279 having a configuration which is the inverse of a diffraction grating structure, a fine uneven structure-containing part 42a-Or was formed at a predetermined position using a forming resin ink 274 containing a urethane resin and an orange colorant, through the same procedure as in Example 1.

Then, except for omitting the PET film on which the fine uneven structure-containing part 42a-Or was formed, and omitting the bonding ink applying cylinder 255, the bonding ink pressing cylinder 256, and the bonding ink reservoir 253, a fine uneven structure-containing part 42b-Cl was formed at a predetermined position, using the same device as in Fig. 8, and using a fine uneven structure forming film 279 having a configuration which is the inverse of a non-directional scattering structure, and a resin ink 274 containing a urethane resin but free of colorants. In plan view, the fine uneven structure-containing part 42b-Cl had an area different from that of the fine uneven structure-containing part 42a-Or.

Then, using a fine uneven structure forming film 279 having a configuration which is the inverse of a directional scattering structure, and a forming resin ink 274 containing a urethane resin and a reddish-brown colorant, a fine uneven structure-containing part 42c-RB was formed at a predetermined position. In plan view, the fine uneven structure-containing part 42c-RB had an area different from that of the fine uneven structure-containing part 42b-Cl or the fine uneven structure-containing part 42a-Or. Then, the second transferred bonding film 283 was cut to obtain a stripe-shaped intermediate object 6-1 in which a first carrier substrate 20, a bonding part 30 and the fine uneven structure-containing parts 42a to 42c were laminated in this order. The first carrier substrate 20 herein is a PET film which has a release layer made of an acrylic resin, and which was used as the bonding film 252.

### (6-2)

Then, an aluminum layer with a thickness of 55 nm was formed on an overall surface of the intermediate object 6-1 having three kinds of fine uneven structure-containing parts 42a to 42c, through the same procedure as in Example 1. In this case, a relatively thin aluminum layer was formed on the selective-etching-enabling structure of the bonding part 30 having a greater surface area than the fine uneven structure-containing parts 42a to 42c. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing parts 42a to 42c. Thus, an intermediate object 6-2 was obtained.

### (6-3)

Then, the prepared intermediate object 6-2 was immersed in a sodium hydroxide solution to etch off the aluminum layer using the silicon dioxide layer as a mask, through the same procedure as in Example 1. In this case, the relatively thin silicon dioxide layer and the aluminum layer were selectively removed first to form patterned reflective layers 44a to 44c and patterned mask layers 46a to 46c. Then, the resultant object was washed and dried, followed by forming an adhesive layer 50 to form a transfer foil (2) of the third embodiment derived from the first embodiment of the present invention shown in Fig. 14 [however, Fig. 14 omits the selective-etching-enabling structure on the bonding part 30 for clarity] through the same procedure as in Example 1.

The first image part 40a had an orange fine uneven structure-containing part 42a-Or having a diffraction grating structure on the surface, an aluminum reflective layer 44a remained only on the fine uneven structure-containing part 42a-Or, and a mask layer 46a remained only on the fine uneven structure-containing part 42a-Or. The second image part 40b had a colorless fine uneven structure-containing part 42b-Cl having a non-directional scattering structure on the surface, an aluminum reflective layer 44b remained only on the fine uneven structure-containing part 42b-Cl, and a mask layer 46b remained only on the fine uneven structure-containing part 42b-Cl. The third image part 40c had a reddish brown fine uneven structure-containing part 42c-RB having a directional scattering structure on the surface, an aluminum reflective layer 44c remained only on the fine uneven structure-containing part 42c-RB, and a mask layer 46c remained only on the fine uneven structure-containing part 42c-RB. Only the colorless adhesive layer 50 was present in the gaps between the image parts 40a to 40c.

Through the same procedure as in Example 1, the obtained transfer foil 2 was thermocompressively bonded to an opaque cotton receiving substrate 110 having a printed part 130, followed by peeling off the carrier substrate 20 to obtain the printed matter 100 shown in Fig. 15 as a laminate of the seventh embodiment derived from the first embodiment of the present invention.

In the printed matter 100, a stripe-shaped optical information medium 1 had been transferred onto the front surface shown in Fig. 15.

As shown in Fig. 15, when the printed matter 100 was observed from the front side, three discrete image parts 40a to 40c were visually recognized. The first image part 40a generally exhibited a gold glossy appearance, while the observed hue varied with the change of the observation angle.

This effect was caused by the diffraction grating structure on the surface of the orange fine uneven structure-containing part 42a-Or. The second image part 40b generally exhibited a silver glossy appearance, while the intensity and the hue of the reflected light remained unchanged, irrespective of the change in the observation angle. This effect was caused by the non-directional scattering structure on the surface of the colorless fine uneven structure-containing part 42b-Cl. The third image part 40c generally exhibited a copper glossy appearance, and the intensity of the reflected light was observed to increase at a specific observation angle when the observation angle was changed. This effect was caused by the directional scattering structure on the surface of the reddish brown fine uneven structure-containing part 42c-RB. Furthermore, the first to third image parts 40a to 40c had surface areas different from each other.

### [Example 7] (Fig. 16)

Except for forming an unseparated image part 40, the procedure of Example 1 was repeated to obtain a transfer foil 2 of the third embodiment derived from the first embodiment of the present invention. The image part 40 of the obtained transfer foil 2 included a fine uneven structure-containing part 42-Or containing a urethane resin and an orange colorant, a reflective layer 44 made of aluminum, and a mask layer 46, in this order.

The obtained transfer foil 2 was thermocompressively bonded to an opaque cotton receiving substrate 110 having a printed part 130 by use of an up-down heat-transfer device provided with a hot stamp, followed by peeling off the first carrier substrate 20 to obtain the printed matter 100 shown in Fig. 16 as a laminate of the seventh embodiment derived from the first embodiment of the present invention. In the printed matter 100, a stripe-shaped optical information medium 1 of the first embodiment of the present invention had been transferred onto the front surface shown in Fig. 16.

As shown in Fig. 16, when the printed matter 100 was observed from the front side, an unseparated image part 40 was visually recognized. It was observed that the unseparated image part 40 exhibited a gold glossy appearance caused by the reflective layer 44 made of aluminum and the orange fine uneven structure-containing part 42-Or. It was also observed that the reflective layer 44 was registered with the orange fine uneven structure-containing part 42-Or with no deviation, and the region other than the image part 40 was colorless and transparent.

As described above, in the optical information medium 1 (first embodiment of the present invention) as obtained, the gold glossy appearance as observed from the front side was contained in the colorless and transparent region, without using a monolayer having an orange-colored fine structure. Thus, there were obtained transfer foil 2, and printed matter 100 having the optical information medium 1. The reflective layer 44 of the present example, which was formed of aluminum, exhibited physical strength and chemical resistance equivalent to those of the conventional reflective layer providing a silver glossy appearance.

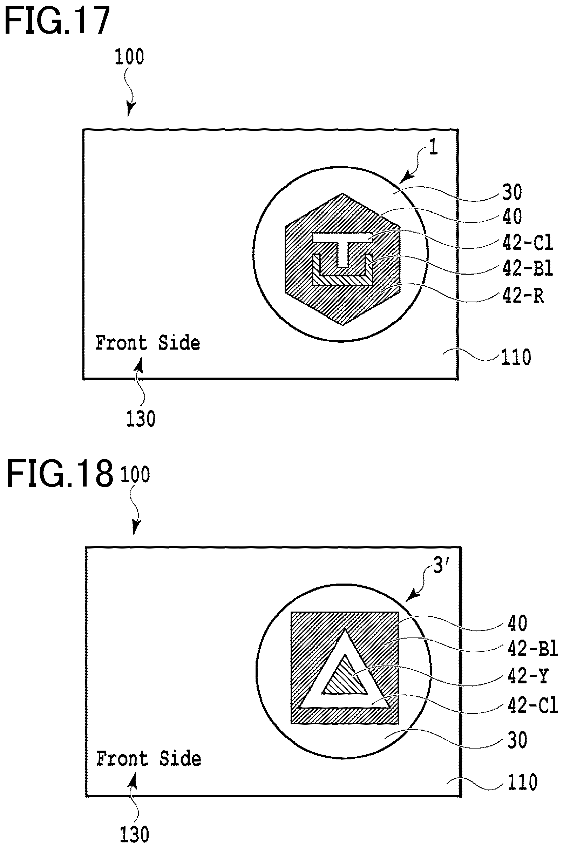

### [Example 8] (Fig. 17)

### (8-1)

Except for using a forming resin ink 274 containing a urethane resin and a red colorant, a fine uneven structure-containing part 42-R was formed at a predetermined position on the bonding part 30, through the same procedure as in Example 1.

Then, except for omitting the PET film on which the fine uneven structure-containing part 42-R was formed, and omitting the bonding ink applying cylinder 255, the bonding ink pressing cylinder 256, and the bonding ink reservoir 253, a fine uneven structure-containing part 42-Bl was formed at a predetermined position, using the same device as in Fig. 8 and a forming resin ink 274 containing a urethane resin and a blue colorant.

Subsequently, except for using a forming resin ink 274 containing a urethane resin but free of colorants, a fine uneven structure-containing part 42-Cl was formed at a predetermined position, through the same procedure as stated above. Resultantly, an unseparated fine uneven structure-containing part 42 was formed by the fine uneven structure-containing parts 42-R, 42-B1, and 42-Cl of the respective colors. Then, the fine uneven structure-containing part-formed bonding film 283 was cut to obtain a patch-shaped intermediate object 8-1 in which a first carrier substrate 20, a bonding part 30 and the fine uneven structure-containing part 42 were laminated in this order. The first carrier substrate 20 herein is a PET film which has a release layer made of an acrylic resin, and which was used as the bonding film 252.

### (8-2)

Then, an aluminum layer with a thickness of 55 nm was formed on an overall surface of the intermediate object 8-1 having the fine uneven structure-containing part 42, through the same procedure as in Example 1. In this case, a relatively thin aluminum layer was formed on the selective-etching-enabling structure of the bonding part 30 having a greater surface area than the fine uneven structure-containing part 42c. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing part 42. Thus, an intermediate object 8-2 was obtained.

### (8-3)

Then, the prepared intermediate object 8-2 was immersed in a sodium hydroxide solution to etch off the aluminum layer using the silicon dioxide layer as a mask, through the same procedure as in Example 1. In this case, the relatively thin silicon dioxide layer and the aluminum layer were selectively removed first to form a patterned reflective layer 44 and a patterned mask layer 46. Resultantly, an unseparated image part 40 was formed by the fine uneven structure-containing part 42, the reflective layer 44, and the mask layer 46, which were obtained as stated above. Then, the resultant object was washed and dried, followed by forming an adhesive layer 50, through the same procedure as in Example 1 to form a transfer foil 2 of the fourth embodiment derived from the first embodiment of the present invention.

The image part 40 had fine uneven structure-containing parts 42-R, 42-Bl and 42-Cl having two regions with different colors and one colorless region, an aluminum reflective layer 44 remained only on the fine uneven structure-containing parts 42-R, 42-Bl and 42-Cl, and a mask layer 46 remained only on the fine uneven structure-containing parts 42-R, 42-Bl and 42-Cl. Further, only the colorless adhesive layer 50 was present in the region other than the image part 40.

Through the same procedure as in Example 1, the obtained transfer foil 2 was thermocompressively bonded to an opaque cotton receiving substrate 110 having a printed part 130, followed by peeling off the carrier substrate 20 to obtain printed matter 100 shown in Fig. 17 as a laminate of the seventh embodiment derived from the first embodiment of the present invention. In the printed matter 100, a patch-shaped optical information medium 1 of the first embodiment of the present invention had been transferred onto the front surface shown in Fig. 17.

As shown in Fig. 17, when the printed matter 100 was observed from the front side, an unseparated image part 40 was visually recognized. It was observed that the image part 40 exhibited glossy appearances of a plurality of colors produced by the reflective layer 44 made of aluminum and the fine uneven structure-containing part 42 tinted to have a plurality of colors, and a region provided with the colorless fine uneven structure-containing part 42c-Cl exhibited a silver glossy appearance. It was also observed that the reflective layer 44 was registered with the fine uneven structure-containing part 42 having a plurality of colors with no deviation, and the region other than the image part 40 was colorless and transparent. In this way, the present invention can provide an image exhibiting both the conventional silver glossy appearance and the glossy appearances in other colors.

As described above, in the optical information medium 1 (first embodiment of the present invention) as obtained, the glossy appearances of a plurality of colors including silver as observed from the front side were contained in the colorless and transparent region, without using a monolayer having a fine structure tinted to have one color. Thus, there were obtained a transfer foil 2 (fourth embodiment of the present invention), and printed matter 100 having the optical information medium 1. The reflective layer 44 of the present example, which was formed of aluminum, exhibited physical strength and chemical resistance equivalent to those of the conventional reflective layer providing a silver glossy appearance.

### [Example 9] (Fig. 18)

### (9-1)

Using a forming resin ink 274 containing a urethane resin and a blue colorant, a fine uneven structure-containing part 42-Bl was formed at a predetermined position on the bonding part 30 through the same procedure as in Example 2.

Then, using a forming resin ink 274 containing a urethane resin and a yellow colorant, a fine uneven structure-containing part 42-Y was formed at a predetermined position through the same procedure as in Example 2. Using a forming resin ink 274 containing a urethane resin but free of colorants, a fine uneven structure-containing part 42-Cl was formed at a predetermined position, through the same procedure as in Example 3. Resultantly, an unseparated fine uneven structure-containing part 42 was formed by the fine uneven structure-containing parts 42-Bl, 42-Y, and 42-Cl of the respective colors. Then, the fine uneven structure-containing part-formed bonding film 283 was cut to obtain a patch-shaped intermediate object 9-1 in which a second carrier substrate 20', a bonding part 30 and the fine uneven structure-containing part 42 were laminated in this order. Herein, the second carrier substrate 20' is a PET film which does not have a release layer made of an acrylic resin, and which was used as a bonding film 252.

### (9-2)

Then, an aluminum layer with a thickness of 55 nm was formed on an overall surface of the intermediate object 9-1 having the fine uneven structure-containing part 42, through the same procedure as in Example 2. In this case, a relatively thin aluminum layer was formed on the selective-etching-enabling structure of the bonding part 30 having a greater surface area than the fine uneven structure-containing part 42c. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing part 42. Thus, an intermediate object 9-2 was obtained.

### (9-3)

Then, the prepared intermediate object 9-2 was immersed in a sodium hydroxide solution to etch off the aluminum layer using the silicon dioxide layer as a mask, through the same procedure as in Example 2. In this case, the relatively thin silicon dioxide layer and the aluminum layer were selectively removed first to form a patterned reflective layer 44 and a patterned mask layer 46. Resultantly, an unseparated image part 40 was formed by the fine uneven structure-containing part 42, the reflective layer 44, and the mask layer 46, which were obtained as stated above. Then, the resultant object was washed and dried, followed by forming an adhesive layer 50 and bonding a release substrate 60, through the same procedure as in Example 2 to form a label 3 of the fourth embodiment derived from the first embodiment of the present invention.

The image part 40 had fine uneven structure-containing parts 42-Y, 42-Bl and 42-Cl having two regions with different colors and one colorless region, an aluminum reflective layer 44 remained only on the fine uneven structure-containing parts 42-Y, 42-Bl and 42-Cl, and a mask layer 46 remained only on the fine uneven structure-containing parts 42-Y, 42-Bl and 42-Cl. Further, only the colorless adhesive layer 50 was present in the region other than the image part 40.

After peeling off the release substrate 60, the obtained label 3 was bonded to an opaque cotton receiving substrate 110 having a printed part 130 to obtain the printed matter 100 shown in Fig. 18 as a laminate of the seventh embodiment derived from the first embodiment of the present invention.

In the printed matter 100, a patch-shaped label body 3' had been bonded onto the front surface shown in Fig. 18.

As shown in Fig. 18, when the printed matter 100 was observed from the front side, an unseparated image part 40 was visually recognized. It was observed that the image part 40 exhibited glossy appearances of a plurality of colors produced by the reflective layer 44 made of aluminum and the fine uneven structure-containing part 42 tinted to have a plurality of colors, and a region provided with the colorless fine uneven structure-containing part 42-Cl exhibited a silver glossy appearance. It was also observed that the reflective layer 44 was registered with the fine uneven structure-containing part 42 having a plurality of colors with no deviation, and the region other than the image part 40 was colorless and transparent. In this way, the present invention can provide an image in which an inner area exhibiting one or more colors is provided inside a peripheral area exhibiting one color.

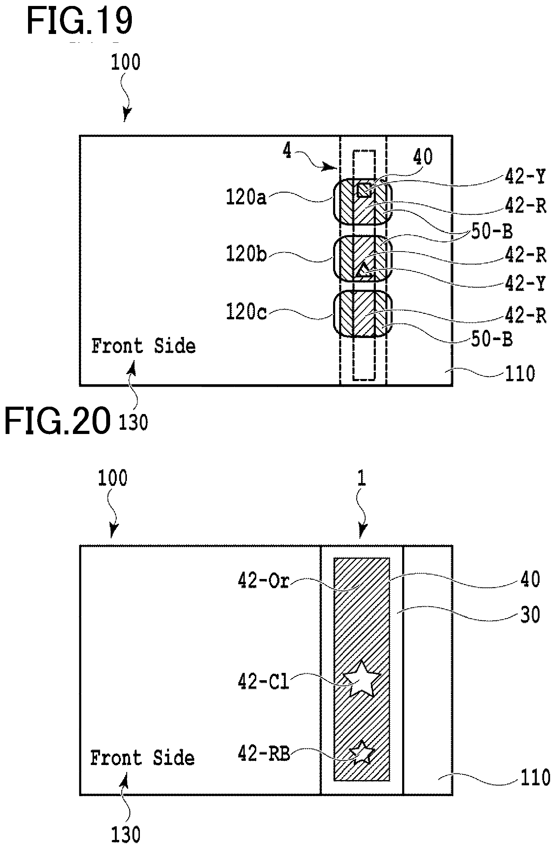

### [Example 10] (Fig. 19)

### (10-1)

Using a forming resin ink 274 containing a urethane resin and a red colorant, a fine uneven structure-containing part 42-R was formed at a predetermined position on the bonding part 30 through the same procedure as in Example 2.

Then, using a forming resin ink 274 containing a urethane resin and a yellow colorant, a fine uneven structure-containing part 42-Y was formed at a predetermined position, through the same procedure as in Example 2. Resultantly, an unseparated fine uneven structure-containing part 42 was formed by the fine uneven structure-containing parts 42-R and 42-Y of the respective colors. Then, the second transferred bonding film 283 was cut to obtain a stripe-shaped intermediate object 10-1 in which a third carrier substrate 20", a bonding part 30 and the fine uneven structure-containing part 42 were laminated in this order. Herein, the third carrier substrate 20" is a PET film which does not have a release layer made of an acrylic resin, and which was used as a bonding film 252.

### (10-2)

Then, an aluminum layer with a thickness of 55 nm was formed on an overall surface of the intermediate object 10-1 having the fine uneven structure-containing part 42, through the same procedure as in Example 2. In this case, a relatively thin aluminum layer was formed on the selective-etching-enabling structure of the bonding part 30 having a greater surface area than the fine uneven structure-containing part 42c. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing part 42. Thus, an intermediate object 10-2 was obtained.

### (10-3)

Then, the prepared intermediate object 10-2 was immersed in a sodium hydroxide solution to etch off the aluminum layer using the silicon dioxide layer as a mask, through the same procedure as in Example 2. In this case, the relatively thin silicon dioxide layer and the aluminum layer were selectively removed first to form a patterned reflective layer 44 and a patterned mask layer 46. Resultantly, an unseparated image part 40 was formed by the fine uneven structure-containing part 42, the aluminum reflective layer 44 remained only on the fine uneven structure-containing part 42, and the mask layer 46 remained only on the fine uneven structure-containing part 42, which were obtained as stated above. Then, the resultant object was washed and dried through the same procedure as in Example 2. Thus, an intermediate object 10-3 was obtained.

A composition containing an acrylic resin and a blue colorant was applied to an overall image part 40-side surface of the dried intermediate object 10-3 to form a blue adhesive layer 50-B. Then, a composition containing an acrylic resin but free of colorants was applied to an overall third carrier substrate 20"-side surface of the intermediate object 10-4 to form a colorless carrier substrate-side adhesive layer 70, thereby forming an embedding thread 4 of the sixth embodiment derived from the first embodiment of the present invention.

The obtained embedding thread 4 was embedded in a cotton dispersion to prepare a laminate of the seventh embodiment derived from the first embodiment of the present invention, in which the embedding thread 4 was embedded in a cotton receiving substrate 110. The front surface of the cotton receiving substrate 110 had receiving substrate windows 120a to 120c at portions in which the image part 40 of the embedding thread 4 partially exposed. The front-side and the reverse-side surfaces of the laminate (cotton receiving substrate 110) were subjected to printing to form a printed part 130, thereby obtaining printed matter 100 as a laminate of the seventh embodiment derived from the first embodiment of the present invention.

As shown in Fig. 19, when the printed matter 100 was observed from the front side, an unseparated image part 40 was visually observed through the receiving substrate windows 120. The image part 40 observed from the first and second receiving substrate windows 120a and 120b exhibited a non-silver glossy appearance caused by the reflective layer 44 made of aluminum and the fine uneven structure-containing parts 42-R and 42-Y tinted to have two colors. The image part 40 observed from the third receiving substrate window 120c exhibited a non-silver glossy appearance caused by the reflective layer 44 made of aluminum and the red colored fine uneven structure-containing part 42-R. In all of the receiving substrate windows 120a to 120c, the reflective layer 44 was registered with the fine uneven structure-containing part 42 having a plurality of colors with no deviation, and the region other than the image part 40 was observed to be non-glossy blue as produced by the blue adhesive layer 50-B. The lack of gloss was due to the absence of the reflective layer 44 from the region other than the image part 40.

### [Example 11] (Fig. 20)

### (11-1)

A bonding part 30 was formed by the same procedure as in Example 1. Then, except for using a fine uneven structure forming film 279 having a configuration which is the inverse of a diffraction grating structure, a fine uneven structure-containing part 42-Or was formed at a predetermined position using a forming resin ink 274 containing a urethane resin and an orange colorant, through the same procedure as in Example 1.

Then, except for omitting the PET film on which the fine uneven structure-containing 42-Or was formed, and omitting the bonding ink applying cylinder 255, the bonding ink pressing cylinder 256, and the bonding ink reservoir 253, a fine uneven structure-containing part 42-Cl was formed at a predetermined position, using the same device as in Fig. 8, a fine uneven structure forming film 279 having a configuration which is the inverse of a non-directional scattering structure, and a resin ink 274 containing a urethane resin but free of colorants. In plan view, the fine uneven structure-containing part 42-Cl had an area different from that of the fine uneven structure-containing part 42-Or.

Then, using a fine uneven structure forming film 279 having a configuration which is the inverse of a directional scattering structure, and a forming resin ink 274 containing a urethane resin and a reddish-brown colorant, a fine uneven structure-containing part 42-RB was formed at a predetermined position. In plan view, the fine uneven structure-containing part 42-RB had an area different from that of the fine uneven structure-containing part 42-Cl or the fine uneven structure-containing part 42-Or. Resultantly, an unseparated fine uneven structure-containing part 42 was formed by the fine uneven structure-containing parts 42-Or, 42-RB, and 42-Cl of the respective colors. Then, the second transferred bonding film 283 was cut to obtain a stripe-shaped intermediate object in which a first carrier substrate 20, a bonding part 30 and the fine uneven structure-containing part 42 were laminated in this order. The first carrier substrate 20 herein is a PET film which has a release layer made of an acrylic resin, and which was used as the bonding film 252. Thus, an intermediate object 11-1 was obtained.

### (11-2)

Then, an aluminum layer with a thickness of 55 nm was formed on an overall surface of the intermediate object 11-1 having the fine uneven structure-containing part 42, through the same procedure as in Example 1. In this case, a relatively thin aluminum layer was formed on the selective-etching-enabling structure of the bonding part 30 having a greater surface area than the fine uneven structure-containing part 42c. Subsequently, silicon dioxide was vapor-deposited on the overall surface of the aluminum layer so as to have a thickness of 20 nm to form a silicon dioxide layer. In this case, a relatively thin silicon dioxide layer was formed on the aluminum layer which was formed on the selective-etching-enabling structure of the bonding part 30 having a greater surface area than the fine uneven structure-containing part 42. Thus, an intermediate object 11-2 was obtained.

### (11-3)

Then, the prepared intermediate object 11-2 was immersed in a sodium hydroxide solution to etch off the aluminum layer using the silicon dioxide layer as a mask, through the same procedure as in Example 1. In this case, the relatively thin silicon dioxide layer and the aluminum layer were selectively removed first to form a patterned reflective layer 44 and a patterned mask layer 46. Resultantly, an unseparated image part 40 was formed by the fine uneven structure-containing part 42, the aluminum reflective layer 44 remained only on the fine uneven structure-containing part 42, and the mask layer 46 remained only on the fine uneven structure-containing part 42, which were obtained as stated above. Then, the resultant object was washed and dried, followed by forming an adhesive layer 50, through the same procedure as in Example 1 to form a transfer foil 2, shown in Fig. 14, of the fourth embodiment derived from the first embodiment of the present invention. The image part 40 had an orange fine uneven structure-containing part 42-Or having a diffraction grating structure on the surface, a colorless fine uneven structure-containing part 42-Cl having a non-directional scattering structure on the surface, and a reddish brown fine uneven structure-containing part 42-RB having a directional scattering structure on the surface.

Through the same procedure as in Example 1, the obtained transfer foil 2 was thermocompressively bonded to an opaque cotton receiving substrate 110 having a printed part 130, followed by peeling off the carrier substrate 20 to obtain the printed matter 100 shown in Fig. 20 as a laminate of the seventh embodiment derived from the first embodiment of the present invention.

In the printed matter 100, a stripe-shaped optical information medium 1 of the first embodiment of the present invention had been transferred onto the front surface shown in Fig. 22.

As shown in Fig. 20, when the printed matter 100 was observed from the front side, an unseparated image part 40 was visually recognized. The region of the image part 40 provided with the orange fine uneven structure-containing part 42-Or generally exhibited a gold glossy appearance, while the observed hue varied with the change of the observation angle. This effect was caused by the diffraction grating structure on the surface of the orange fine uneven structure-containing part 42-Or. The region of the image part 40 provided with the colorless fine uneven structure-containing part 42-Cl generally exhibited a silver glossy appearance, while the intensity and the hue of the reflected light remained unchanged, irrespective of the change in the observation angle. This effect was caused by the non-directional scattering structure of the surface of the colorless fine uneven structure-containing part 42-Cl. The region of the image part 40 provided with the reddish-brown fine uneven structure-containing part 42-RB generally exhibited a copper glossy appearance, and the intensity of the reflected light was observed to increase at a specific observation angle when the observation angle was changed. This effect was caused by the directional scattering structure on the surface of the reddish brown fine uneven structure-containing part 42-RB. Furthermore, the aforementioned three regions had surface areas different from each other.

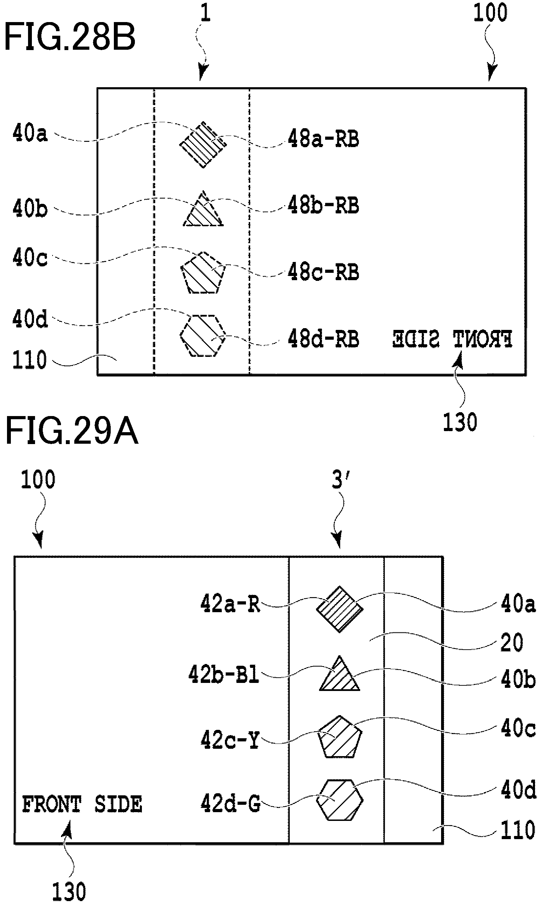

### [Example 12] [Figs. 28A and 28B]

First, in the same manner as in (1-1) and (1-2) of Example 1, an intermediate object 12-1 corresponding to the intermediate object 1-1 was obtained, and then, an intermediate object 12-2 corresponding to the intermediate object 1-2 was obtained.

Subsequently, a composition containing a vinyl chloride-vinyl acetate copolymer resin and a reddish-brown colorant was applied to the object to cover the fine uneven structure-containing parts 42a-Or to 42d-Or, at the positions corresponding to these parts, to form back surface coloring material layers a-RB to d-RB.

Then, the obtained intermediate object 12-3 was immersed in a sodium hydroxide solution to etch off the aluminum layer using the silicon dioxide layer as a mask. In this case, the relatively thin silicon dioxide layer and the aluminum layer were selectively removed first to form patterned reflective layers 44a to 44d and patterned mask layers 46a to 46d. In this case, the material of the back-surface coloring part, which had been on the firstly selectively removed silicon dioxide material and the aluminum material, was concurrently removed to form the patterned back surface coloring parts 48a-RB to 48d-RB. The etching removal was followed by washing with a hydrochloric acid solution and water, and the resultant object i.e. an intermediate object 12-4 was dried with hot air. Subsequently, an acrylic resin was applied to the dried intermediate object 12-4 to form an adhesive layer 50, thereby forming a transfer foil 2. The transfer foil 2 had four discrete image parts 40a to 40d. The image parts 40a to 40d respectively had discrete orange-colored fine uneven structure-containing parts 42a-Or to 42d-Or, discrete aluminum reflective layers 44a to 44d respectively remained only on the fine uneven structure-containing parts 42a-Or to 42d-Or, discrete mask layers 46a to 46d respectively remained only on the fine uneven structure-containing parts 42a-Or to 42d-Or, and discrete reddish brown-colored back surface coloring part layers 48a-RB to 48d-RB respectively remained only on the fine uneven structure-containing parts 42a-Or to 42d-Or. Only the colorless adhesive layer 50 was present in the gaps between the image parts 40a to 40d.

The resultant transfer foil 2 was thermocompressively bonded to a transparent polypropylene receiving substrate 110 having a printed part 130 by use of an up-down heat-transfer device provided with a hot stamp, followed by peeling off the first carrier substrate 20 to obtain the printed matter 100 shown in Figs. 28A and 28B. In the printed matter 100, a stripe-shaped optical information medium 1 of the second embodiment of the present invention had been transferred onto the front surface shown in Fig. 28A.

As shown in Fig. 28A, when the printed matter 100 was observed from the front side, four discrete image parts 40a to 40d were visually recognized. It was observed that the four image parts 40a to 40d exhibited a gold glossy appearance caused by the reflective layers 44a to 44d made of aluminum and the orange fine uneven structure-containing parts 42a-Or to 42d-Or. It was also observed that the reflective layers 44a to 44d were respectively registered with the orange fine uneven structure-containing parts 42a-Or to 42d-Or with no deviation, and the region other than the four image parts 40a to 40d was colorless and transparent.

As shown in Fig. 28B, when the printed matter 100 was observed from the reverse side, four discrete image parts 40a to 40d were visually recognized through the transparent receiving substrate 110. It was observed that the four image parts 40a to 40d exhibited a copper glossy appearance caused by the reflective layers 44a to 44d made of aluminum and the reddish-brown back surface coloring parts 48a-RB to 48d-RB. It was also observed that the reflective layers 44a to 44d were respectively registered with reddish brown back surface coloring parts 48a-RB to 44d-RB with no deviation, and the region other than the four image parts 40a to 40d was colorless and transparent.

As described above, in the optical information medium 1 as obtained, discrete image parts were visually recognized in a colorless and transparent region, without using a monolayer having an orange-colored fine structure, and without allowing the gold glossy appearance as observed from the front side to mix with the silver glossy appearance of only the reflective layer due to positional deviation between the fine uneven structure and the mask layer, or to mix with the translucent orange appearance of the fine uneven structure having no metallic gloss, and without allowing the copper glossy appearance as observed from the back surface to mix with the silver glossy appearance of only the reflective layer due to positional deviation between the back surface coloring part, the fine uneven structure and the mask layer, or to mix with the translucent reddish brown appearance of the back surface coloring part having no metallic gloss. Thus, there were obtained a transfer foil 2 and printed matter 100 having the optical information medium 1. The reflective layers 44a to 44d of Example 12, which were formed of aluminum, had physical strength and chemical resistance equivalent to those of the conventional reflective layer providing a silver glossy appearance.

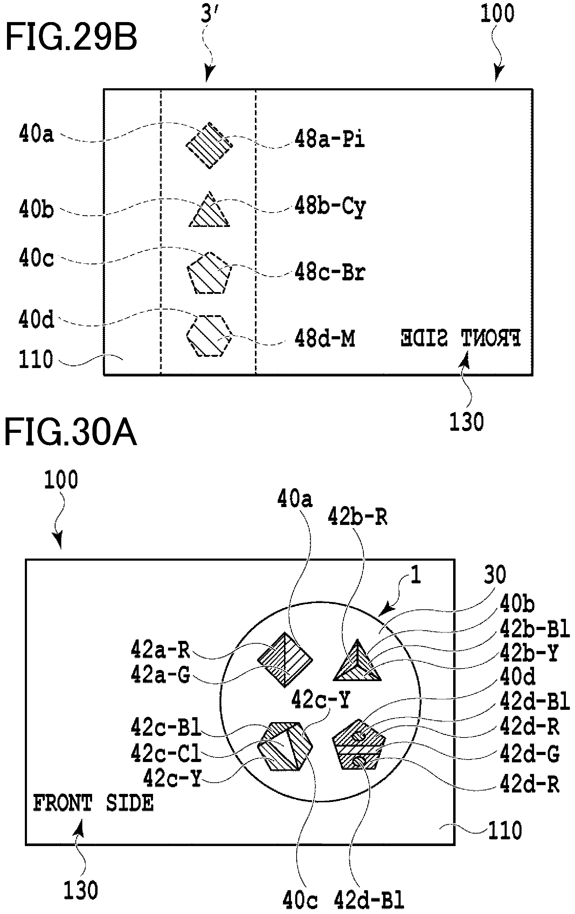

### [Example 13] [Figs. 29A and 29B]

First, in the same manner as in (2-1) and (2-2) of Example 2, an intermediate object 13-1 was obtained, and then, an intermediate object 13-2 was obtained. However, in (2-1) and (2-2) of Example 2, Example 1 should read Example 12, intermediate object 2-1 should read intermediate object 13-1, and intermediate object 2-2 should read intermediate object 13-2.

Subsequently, a composition containing a vinyl chloride-vinyl acetate copolymer resin and a pink colorant was applied to the intermediate object 13-2 to cover the fine uneven structure-containing part 42a-R, at a position corresponding to the part, to form a back-surface coloring material layer a-Pi.

Subsequently, through the same procedure stated above, a composition containing a vinyl chloride-vinyl acetate copolymer resin and a cyan colorant was applied to the intermediate object to cover the fine uneven structure-containing part 42b-Bl, at a position corresponding to the part, to form a back-surface coloring material layer b-Cy. Furthermore, a composition containing a vinyl chloride-vinyl acetate copolymer resin and a brown colorant was applied to the intermediate object to cover the fine uneven structure-containing part 42c-Y, at a position corresponding to the part, to form a back-surface coloring material layer c-Br. Furthermore, a composition containing a vinyl chloride-vinyl acetate copolymer resin and a magenta colorant was applied to the intermediate object to cover the fine uneven structure-containing part 42d-G, at a position corresponding to the part, to form a back-surface coloring material layer d-M.

Then, the intermediate object was immersed in a sodium hydroxide solution to etch off the aluminum layer using the silicon dioxide layer as a mask through the same procedure as in Example 12. In this case, the relatively thin silicon dioxide layer and the aluminum layer were selectively removed first to form patterned reflective layers 44a to 44d and patterned mask layers 46a to 46d. In this case, the material of the back-surface coloring material layer, which had been on the firstly selectively removed silicon dioxide material and the aluminum material, was concurrently removed to form patterned back surface coloring parts 48a to 48d. Then, the resultant object was washed and dried, followed by forming an adhesive layer 50, through the same procedure as in Example 12. A release substrate 60 made of a non-woven fabric was bonded to the surface of the adhesive layer 50 of the obtained laminate to form a label 3. The label 3 had four discrete image parts 40a to 40d. The image parts 40a to 40d respectively had discrete fine uneven structure-containing parts 42a-R, 42b-Bl, 42c-Y and 42d-G respectively colored red, blue, yellow and green, discrete aluminum reflective layers 44a to 44d respectively remained only on the fine uneven structure-containing parts 42a-R, 42b-Bl, 42c-Y and 42d-G, discrete mask layers 46a to46d respectively remained only on the fine uneven structure-containing parts 42a-R, 42b-Bl, 42c-Y and 42d-G, and discrete back surface coloring parts 48a-R, 48b-Cy, 48c-Br and 48d-M respectively colored pink, cyan, brown and magenta and respectively remained only on the fine uneven structure-containing parts 42a-R, 42b-Bl, 42c-Y and 42d-G. Only the colorless adhesive layer 50 was present in the gaps between the image parts 40a to 40d.

After peeling off the release substrate 60, the obtained label 3 was bonded to a transparent PET receiving substrate 110 having a printed part 130 to obtain the printed matter 100 shown in Figs. 29A and 29B. In the printed matter 100, a striped-shape label body 3' had been transferred onto the front surface shown in Fig. 29A.

As shown in Fig. 29A, when the printed matter 100 was observed from the front side, four discrete image parts 40a to 40d were visually recognized. It was observed that the four image parts 40a to 40d respectively exhibited glossy appearances that were not silver (e.g., red glossy appearance of the image part 40a) caused by the reflective layers 44a to 44d made of aluminum and the fine uneven structure-containing parts 42a to 42d having respective colors. It was also observed that the reflective layers 44a to 44d were respectively registered with the fine uneven structure-containing parts 42a-R, 42b-Bl, 42c-Y and 42d-G having different colors with no deviation, and the region other than the four image parts 40a to 40d was colorless and transparent.

As shown in Fig. 29B, when the printed matter 100 was observed from the reverse side, four discrete image parts 40a to 40d were visually recognized through the transparent receiving substrate 110. It was observed that the four image parts 40a to 40d exhibited a non-silver glossy appearance caused by the reflective layers 44a to 44d made of aluminum and the back-surface coloring parts 48a to 48d having respective colors. It was also observed that the reflective layers 44a to 44d were respectively registered with the back-surface coloring parts 48a to 48d having respective colors with no deviation, and the region other than the four image parts 40a to 40d was colorless and transparent.

As described above, in the optical information medium 1 (second embodiment of the present invention) as obtained, discrete image parts were visually recognized in a colorless and transparent region, without using a monolayer having a fine structure tinted to have one color, and without allowing the plurality of non-silver glossy appearances as observed from the front side and the plurality of non-silver glossy appearances as observed from the reverse side to mix with the silver glossy appearance of only the reflective layers due to positional deviation between the fine uneven structure, the reflective layers, the mask layer, and the back surface coloring parts, or to mix with the translucent red, blue, yellow and green appearances of the fine uneven structure, or the appearances of pink, cyan, brown, and magenta of the back surface coloring parts having no metallic gloss. Thus, there were obtained a label 3 having the optical information medium 1 (fifth embodiment of the present invention), and printed matter 100 having the label body 3' (seventh embodiment of the present invention). The reflective layers 44a to 44d of Example 13, which were formed of aluminum, had physical strength and chemical resistance equivalent to those of the conventional reflective layer providing a silver glossy appearance.

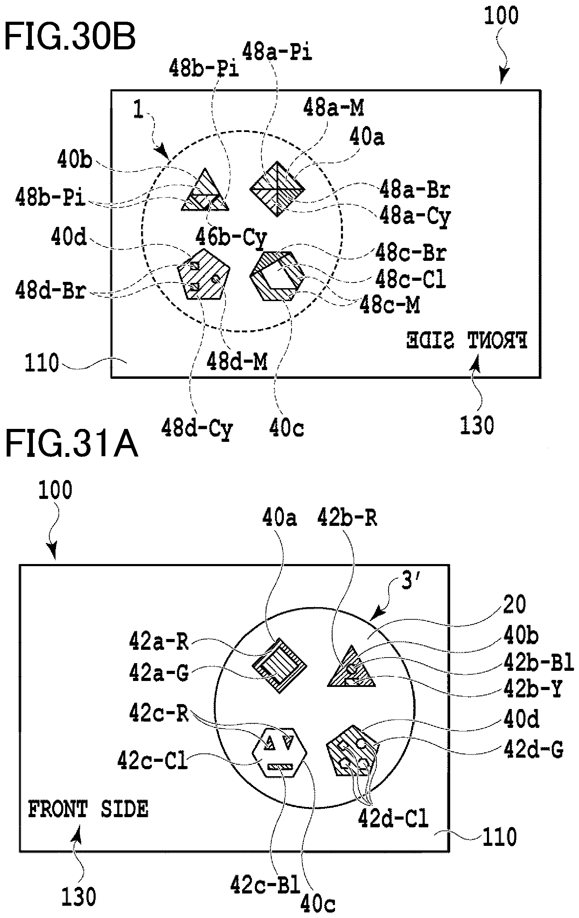

### [Example 14] [Figs. 30A and 30B]

First, in the same manner as in (2-1) and (2-2) of Example 2, an intermediate object 14-1 was obtained, and then, an intermediate object 14-2 was obtained. However, in (3-1) and (3-2) of Example 3, Example 1 should read Example 12, intermediate object 3-1 should read intermediate object 14-1, and intermediate object 3-2 should read intermediate object 14-2.

Subsequently, a composition containing a vinyl chloride-vinyl acetate copolymer resin and a pink colorant was applied to only predetermined portions of the intermediate object 14-2 to form back surface coloring material layers a-Pi and b-Pi.

Through the same procedure stated above, a composition containing a vinyl chloride-vinyl acetate copolymer resin and a cyan colorant was applied only to predetermined portions of the intermediate object to form back surface coloring material layers a-Cy, b-Cy, and d-Cy. Further, a composition containing a vinyl chloride-vinyl acetate copolymer resin and a brown colorant was applied only to predetermined portions of the intermediate object to form back surface coloring material layers a-Br, c-Br, and d-Br. Further, a composition containing a vinyl chloride-vinyl acetate copolymer resin and a magenta colorant was applied only to predetermined portions of the intermediate object to form back surface coloring material layers a-M, c-M, and d-M. Subsequently, a composition containing a vinyl chloride-vinyl acetate copolymer resin but free of colorants was applied only to a predetermined portion of the intermediate object to form a colorless back surface coloring material layer c-Cl.

Then, the intermediate object was immersed in a sodium hydroxide solution to etch off the aluminum layer using the silicon dioxide layer as a mask through the same procedure as in Example 12. In this case, the relatively thin silicon dioxide layer and the aluminum layer were selectively removed first to form patterned reflective layers 44a to 44d and patterned mask layers 46a to 46d. In this case, the material of the back-surface coloring material layer, which had been on the firstly selectively removed silicon dioxide material and the aluminum material, was concurrently removed to form patterned back surface coloring parts 48a to 48d. Then, the resultant object was washed and dried, followed by forming an adhesive layer 50, through the same procedure as in Example 12 to form a transfer foil 2.

The first image part 40a had fine uneven structure-containing parts 42a-R and 42a-G having two regions with different colors, an aluminum reflective layer 44a remained only on the fine uneven structure-containing parts 42a-R and 42a-G, a mask layer 46a remained only on the fine uneven structure-containing parts 42a-R and 42a-G, and back surface coloring parts 48a-Pi, 48a-Cy, 48a-Br, and 48a-M having four regions with different colors and remained only on the fine uneven structure-containing parts 42a-R and 42a-G.

The second image part 40b had fine uneven structure-containing parts 42b-R, 42b-Bl and 42b-Y having three regions with different colors, an aluminum reflective layer 44b remained only on the fine uneven structure-containing parts 42b-R, 42b-Bl and 42b-Y, a mask layer 46b remained only on the fine uneven structure-containing parts 42b-R, 42b-Bl and 42b-Y, and back surface coloring parts 48b-Pi and 48b-Cy having four regions with two different colors and remained only on the fine uneven structure-containing parts 42b-R, 42b-Bl and 42b-Y.

The third image part 40c had fine uneven structure-containing parts 42c-Bl, 42c-Y and 42c-Cl having three regions with two different colors and one colorless region, an aluminum reflective layer 44c remained only on the fine uneven structure-containing parts 42c-Bl, 42c-Y and 42c-Cl, a mask layer 46c remained only on the fine uneven structure-containing parts 42c-Bl, 42c-Y and 42c-Cl, and back surface coloring parts 48c-Br, 48c-M and 48c-Cl having three regions with two different colors and one colorless region and remained only on the fine uneven structure-containing parts 42c-Bl, 42c-Y and 42c-Cl.

The fourth image part 40d had fine uneven structure-containing parts 42d-R, 42d-Bl and 42d-G having five regions with three different colors, an aluminum reflective layer 44d remained only on the fine uneven structure-containing parts 42d-R, 42d-Bl and 42d-G, a mask layer 46d remained only on the fine uneven structure-containing parts 42d-R, 42d-Bl and 42d-G, and back surface coloring parts 48d-Cy, 48d-Br and 48d-M having four regions with three different colors and one colorless region and remained only on the fine uneven structure-containing parts 42d-R, 42d-Bl and 42d-G. Only the colorless adhesive layer 50 was present in the gaps between the image parts 40a to 40d.

Through the same procedure as in Example 12, the resultant transfer foil 2 was thermocompressively bonded to a transparent polypropylene receiving substrate 110 having a printed part 130, followed by peeling off the carrier substrate 20 to obtain the printed matter 100 shown in Figs. 30A and 30B. In the printed matter 100, a patch-shaped optical information medium 1 of the second embodiment of the present invention had been transferred onto the front surface shown in Fig. 30A.

As shown in Fig. 30A, when the printed matter 100 was observed from the front side, four discrete image parts 40a to 40d were visually recognized. It was observed that the four image parts 40a to 40d respectively exhibited glossy appearances of a plurality of colors produced by the reflective layers 44a to 44d made of aluminum and the fine uneven structure-containing parts 42a to 42d tinted to have a plurality of colors. It was also observed that the reflective layers 44a to 44d were respectively registered with the fine uneven structure-containing parts 42a-R, 42a-G, 42b-R, 42b-Bl, 42b-Y, 42c-Bl, 42c-Cl, 42c-Y, 42d-Bl, 42d-R and 42d-G tinted to have a plurality of colors with no deviation, and the region other than the four image parts 40a to 40d was colorless and transparent. In the third image part 40c, the region provided with the colorless fine uneven structure-containing part 42c-Cl exhibited a silver glossy appearance. In this way, an image exhibiting both the conventional silver glossy appearance and the glossy appearances in other colors can be provided.

As shown in Fig. 30B, when the printed matter 100 was observed from the reverse side, four discrete image parts 40a to 40d were visually recognized through the transparent receiving substrate 110. It was observed that the four image parts 40a to 40d exhibited glossy appearances of a plurality of colors produced by the reflective layers 44a to 44d made of aluminum and the back-surface coloring parts 48a to 48d tinted to have a plurality of colors. It was also observed that the reflective layers 44a to 44d were respectively registered with the back-surface coloring parts 48a to 48d tinted to have a plurality of colors with no deviation, and the region other than the four image parts 40a to 40d was colorless and transparent. In the third image part 40c, the region provided with the colorless fine uneven structure-containing part 48c-Cl exhibited a silver glossy appearance, similarly to the observation from the front side. In this way, an image exhibiting both the conventional silver glossy appearance and the glossy appearances in other colors can also be provided in the observation from the reverse side.

As described above, in the optical information medium 1 (second embodiment of the present invention) as obtained, discrete image parts were visually recognized in a colorless and transparent region, without using a monolayer having a fine structure tinted to have one color, and without allowing the multi-color glossy appearance including silver as observed from the front side and the plurality of non-silver glossy appearances as observed from the reverse side to mix with the silver glossy appearance of only the reflective layers due to positional deviation between the fine uneven structure, the reflective layers, the mask layer, and the back surface coloring parts, or to mix with the translucent red, blue, yellow and green appearances of the fine uneven structure, or the appearances of pink, cyan, brown, and magenta of the back surface coloring parts having no metallic gloss. Thus, there were obtained a transfer foil 2 (fourth embodiment of the present invention) and printed matter 100 (seventh embodiment of the present invention) having the optical information medium 1. The reflective layers 44a to 44d of Example 14, which were formed of aluminum, had physical strength and chemical resistance equivalent to those of the conventional reflective layer providing a silver glossy appearance.

### [Example 15] [Figs. 31A and 31B]

First, in the same manner as in (4-1) and (4-2) of Example 4, an intermediate object 15-1 was obtained, and then, an intermediate object 15-2 was obtained. However, in (4-1) to (4-2) of Example 4, Example 2 should read Example 13, Example 3 should read Example 14, intermediate object 4-1 should read intermediate object 15-1, and intermediate object 4-2 should read intermediate object 15-2.

Subsequently, a composition containing a vinyl chloride-vinyl acetate copolymer resin and a pink colorant was applied to only a predetermined portion to form a back-surface coloring material layer a-Pi. Through the same procedure stated above, a composition containing a vinyl chloride-vinyl acetate copolymer resin and a cyan colorant was applied only to predetermined portions to form back surface coloring material layers a-Cy and 48c-Cy. Further, a composition containing a vinyl chloride-vinyl acetate copolymer resin and a brown colorant was applied only to predetermined portions to form back surface coloring material layers b-Br, 48c-Br, and 48d-Br. Further, a composition containing a vinyl chloride-vinyl acetate copolymer resin and a magenta colorant was applied only to predetermined portions to form back surface coloring material layers c-M and 48d-M. Subsequently, a composition containing a vinyl chloride-vinyl acetate copolymer resin but free of colorants was applied only to predetermined portions to form colorless back surface coloring material layers a-Cl, 48b-Cl, and 48d-Cl.

Then, the resultant object was immersed in a sodium hydroxide solution to etch off the aluminum layer using the silicon dioxide layer as a mask through the same procedure as in Example 13. In this case, the relatively thin silicon dioxide layer and the aluminum layer were selectively removed first to form patterned reflective layers 44a to 44d and patterned mask layers 46a to 46d. In this case, the material of the back-surface coloring material layer, which had been on the firstly selectively removed silicon dioxide material and the aluminum material, was concurrently removed to form patterned back surface coloring parts 48a to 48d. Then, the resultant object was washed and dried, followed by forming an adhesive layer 50 and bonding a release substrate 60, through the same procedure as in Example 13 to form a label 3.

The first image part 40a had fine uneven structure-containing parts 42a-R and 42a-G having two regions with different colors, an aluminum reflective layer 44a remained only on the fine uneven structure-containing parts 42a-R and 42a-G, a mask layer 46a remained only on the fine uneven structure-containing parts 42a-R and 42a-G, and back surface coloring parts 48a-PI, 48a-Cy, and 48a-Cl having two regions with different colors and one colorless region and remained only on the fine uneven structure-containing parts 42a-R and 42a-G.

The second image part 40b had fine uneven structure-containing parts 42b-R, 42b-Bl and 42b-Y having three regions with different colors, an aluminum reflective layer 44b remained only on the fine uneven structure-containing parts 42b-R, 42b-Bl and 42b-Y, a mask layer 46b remained only on the fine uneven structure-containing parts 42b-R, 42b-Bl and 42b-Y, and back surface coloring parts 48b-Br and 48b-Cl having one region with one color and three colorless regions and remained only on the fine uneven structure-containing parts 42b-R, 42b-Bl and 42b-Y.

The third image part 40c had fine uneven structure-containing parts 42c-R, 42c-Bl and 42c-Cl having three regions with two different colors and one colorless region, an aluminum reflective layer 44c remained only on the fine uneven structure-containing parts 42c-R, 42c-Bl and 42c-Cl, a mask layer 46c remained only on the fine uneven structure-containing parts 42c-R, 42c-Bl and 42c-Cl, and back surface coloring parts 48c-Cy, 48c-Br and 48c-M having five regions with three different colors and remained only on the fine uneven structure-containing parts 42c-R, 42c-Bl and 42c-Cl.

The fourth image part 40d had fine uneven structure-containing parts 42d-G and 42d-Cl having one region with one color and four colorless regions, an aluminum reflective layer 44d remained only on the fine uneven structure-containing parts 42d-G and 42d-Cl, a mask layer 46d remained only on the fine uneven structure-containing parts 42d-G and 42d-Cl, and back surface coloring parts 48d-Br, 48d-M and 48d-Cl having three regions with two different colors and one colorless region and remained only on the fine uneven structure-containing parts 42d-G and 42d-Cl. Only the colorless adhesive layer 50 was present in the gaps between the image parts 40a to 40d.

After peeling off the release substrate 60, the obtained label 3 was bonded to a transparent PET receiving substrate 110 having a printed part 130 to obtain the printed matter 100 shown in Figs. 31A and 31B. In the printed matter 100, a patch-shaped label body 3' had been bonded onto the front surface shown in Fig. 31A.

As shown in Fig. 31A, when the printed matter 100 was observed from the front side, four discrete four image parts 40a to 40d were visually recognized. It was observed that the four image parts 40a to 40d respectively exhibited glossy appearances of a plurality of colors produced by the reflective layers 44a to 44d made of aluminum and the fine uneven structure-containing parts 42a to 42d tinted to have a plurality of colors. It was also observed that the reflective layers 44a to 44d were respectively registered with the fine uneven structure-containing parts 42 a-R, 42a-G, 42b-R, 42b-Bl, 42b-Y, 42c-R, 42c-Bl, 42c-Cl, 42d-G and 42d-Cl tinted to have a plurality of colors with no deviation, and the region other than the four image parts 40a to 40d was colorless and transparent. The first image part 40a had a glossy appearance of two colors produced by the peripheral area constituted of the red fine uneven structure-containing part 42a-R and the inner area constituted of the green fine uneven structure-containing part 42a-G. Further, the third image part 40c had a peripheral area constituted of the colorless fine uneven structure-containing part 42c-Cl and exhibiting a silver glossy appearance, and an inner area constituted of the red and blue fine uneven structure-containing parts 42c-R and 42c-Bl and exhibiting a non-silver glossy appearance. In this way, there can be provided an image in which an inner area exhibiting one or more colors is provided inside a peripheral area exhibiting one color.

As shown in Fig. 31B, when the printed matter 100 was observed from the reverse side, four discrete image parts 40a to 40d were visually recognized through the transparent receiving substrate 110. It was observed that the four image parts 40a to 40d exhibited glossy appearances of a plurality of colors produced by the reflective layers 44a to 44d made of aluminum and the back-surface coloring parts 48a to 48d tinted to have a plurality of colors. It was also observed that the reflective layers 44a to 44d were respectively registered with the back-surface coloring parts 48a to 48d tinted to have a plurality of colors with no deviation, and the region other than the four image parts 40a to 40d was colorless and transparent. In the first image part 40a, the peripheral area constituted of the pink back surface coloring part 48a-Pi and the inner area constituted of the cyan and colorless back surface coloring parts 48ac-Y and 48a-Cl exhibited a two-color glossy appearance, similarly to the observation from the front side. Further, the fourth image part 40d had a peripheral area constituted of the colorless back surface coloring part 48d-Cl and exhibiting a silver glossy appearance, and an inner area constituted of the brown and magenta back surface coloring parts 48d-Br and 48d-M and exhibiting a non-silver glossy appearance. In this way, an image exhibiting both the conventional silver glossy appearance and the glossy appearances in other colors can also be provided in the observation from the reverse side.

### [Example 16] [Figs. 32A and 32B]

First, in the same manner as in (5-1) and (5-2) of Example 5, an intermediate object 16-1 was obtained, and then, an intermediate object 16-2 was obtained. However, in (5-1) and (5-2) of Example 5, Example 2 should read Example 13, intermediate object 5-1 should read intermediate object 16-1, and intermediate object 5-2 should read intermediate object 16-2. Subsequently, a composition containing a vinyl chloride-vinyl acetate copolymer resin and a reddish-brown colorant was applied to the object to cover the fine uneven structure-containing parts 42a to 42d, at the positions corresponding to these parts, to form back surface coloring material layers a-RB to d-RB.

Then, the resultant object was immersed in a sodium hydroxide solution to etch off the aluminum layer using the silicon dioxide layer as a mask through the same procedure as in Example 13. In this case, the relatively thin silicon dioxide layer and the aluminum layer were selectively removed first to form patterned reflective layers 44a to 44d and patterned mask layers 46a to 46d. In this case, the material of the back-surface coloring material layer, which had been on the firstly selectively removed silicon dioxide material and the aluminum material, was concurrently removed to form patterned back surface coloring parts 48a to 48d. Then, the resultant object was washed and dried through the same procedure as in Example 13.

A composition containing an acrylic resin and a blue colorant was applied to an overall image parts 40a to 40d-side surface of the dried intermediate object to form a blue adhesive layer 50-B. Then, a composition containing an acrylic resin but free of colorants was applied to an overall carrier substrate 20-side surface of the intermediate object to form a colorless carrier substrate-side adhesive layer 70, thereby forming an embedding thread 4.

The obtained embedding thread 4 was embedded in a cotton dispersion to prepare a laminate in which the embedding thread 4 was embedded in a cotton receiving substrate 110. The front surface of the cotton receiving substrate 110 had receiving substrate windows 120 at positions corresponding to the image parts 40a to 40d of the embedding thread 4, with the image parts 40a to 40d being respectively exposed in the windows. The front-side and the reverse-side surfaces of the laminate (cotton receiving substrate 110) were subjected to printing to form a printed part 130, thereby obtaining printed matter 100.

As shown in Fig. 32A, when the printed matter 100 was observed from the front side, four discrete four image parts 40a to 40d were visually recognized. The two image parts 40a and 40c had a non-silver glossy appearance produced by the reflective layers 44a and 44c made of aluminum and the red fine uneven structure-containing parts 42a-R and 42c-R. The two image parts 40b and 40d had a non-silver glossy appearance produced by the reflective layers 44b and 44d made of aluminum and the yellow fine uneven structure-containing parts 42b-Y and 42d-Y. The reflective layers 44a to 44d were respectively registered with the fine uneven structure-containing parts 42a-R, 42b-Y, 42c-R, and 42d-Y having four regions with two different colors. The region other than the four image parts 40a to 40d was observed to be non-glossy blue as produced by the blue adhesive layer 50-B. The lack of gloss was due to the absence of the reflective layers 44a to 44d from the region other than the image parts 40a to 40d.

As shown in Fig. 32B, the four image parts 40a to 40d were not visually recognized under observation of the printed matter 100 from the reverse side, due to the opacity of the cotton receiving substrate 110. When the printed matter 100 was observed from the reverse side, with a strong light source being arranged on the front side of the printed matter 100, black regions at positions corresponding to the four image parts 40a to 40d were visually recognized in the non-glossy blue region produced by the blue adhesive layer 50-B due to the light passing through the cotton receiving substrate 110. This is because the transmitted light was blocked by the reflective layers 44a to 44d in the respective image parts 40a to 40d.

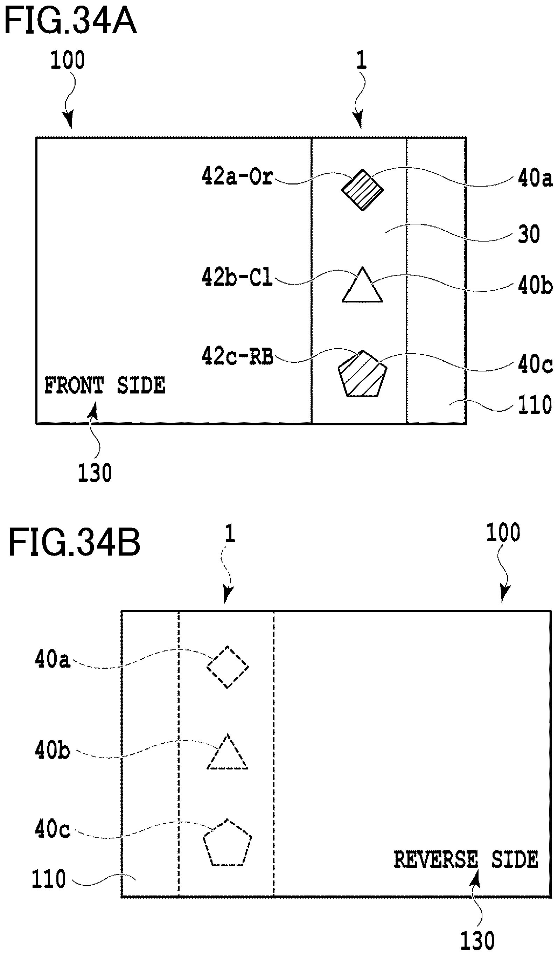

### [Example 17] [Figs. 33, 34A and 34B]

First, in the same manner as in (6-1) and (6-2) of Example 6, an intermediate object 17-1 was obtained, and then, an intermediate object 17-2 was obtained. However, in (6-1) and (6-2) of Example 6, Example 1 should read Example 12, intermediate object 6-1 should read intermediate object 17-1, and intermediate object 6-2 should read intermediate object 17-2.

Subsequently, a composition containing a vinyl chloride-vinyl acetate copolymer resin and a reddish-brown colorant was applied to the object to cover the fine uneven structure-containing parts 42a to 42c, at the positions corresponding to these parts, to form back surface coloring material layers a-RB to c-RB.

Then, the intermediate object was immersed in a sodium hydroxide solution to etch off the aluminum layer using the silicon dioxide layer as a mask through the same procedure as in Example 12. In this case, the relatively thin silicon dioxide layer and the aluminum layer were selectively removed first to form patterned reflective layers 44a to 44c and patterned mask layers 46a to 46c. In this case, the material of the back-surface coloring material layer, which had been on the firstly selectively removed silicon dioxide material and the aluminum material, was concurrently removed to form patterned back surface coloring parts 48a to 48c. Then, the resultant object was washed and dried, followed by forming an adhesive layer 50, through the same procedure as in Example 1 to form the transfer foil 2 shown in Fig. 33.

The first image part 40a had an orange fine uneven structure-containing part 42a-Or having a diffraction grating structure on the surface, an aluminum reflective layer 44a remained only on the fine uneven structure-containing part 42a-Or, a mask layer 46a remained only on the fine uneven structure-containing part 42a-Or, and a back-surface coloring part 48a remained only on the fine uneven structure-containing part 42a-Or.

The second image part 40b had a colorless fine uneven structure-containing part 42b-Cl having a non-directional scattering structure on the surface, an aluminum reflective layer 44b remained only on the fine uneven structure-containing part 42b-Cl, a mask layer 46b remained only on the fine uneven structure-containing part 42b-Cl, and a back-surface coloring part 48b remained only on the fine uneven structure-containing part 42b-Cl.

The third image part 40c had a reddish brown fine uneven structure-containing part 42c-RB having a directional scattering structure on the surface, an aluminum reflective layer 44c remained only on the fine uneven structure-containing part 42c-RB, a mask layer 46c remained only on the fine uneven structure-containing part 42c-RB, and a back-surface coloring part 48c remained only on the fine uneven structure-containing part 42c-RB. Only the colorless adhesive layer 50 was present in the gaps between the image parts 40a to 40c.

Through the same procedure as in Example 12, the resultant transfer foil 2 was thermocompressively bonded to an opaque cotton receiving substrate 110 having a printed part 130, followed by peeling off the first carrier substrate 20 to obtain the printed matter 100 shown in Figs. 34A and 34B. In the printed matter 100, a stripe-shaped optical information medium 1 of the second embodiment of the present invention had been transferred onto the front surface shown in Fig. 34A.

As shown in Fig. 34A, when the printed matter 100 was observed from the front side, the three discrete image parts 40a to 40c were visually recognized. The first image part 40a generally exhibited a gold glossy appearance, while the observed hue varied with the change of the observation angle. This effect was caused by the diffraction grating structure on the surface of the orange fine uneven structure-containing part 42a-Or. The second image part 40b generally exhibited a silver glossy appearance, while the intensity and the hue of the reflected light remained unchanged, irrespective of the change in the observation angle. This effect was caused by the non-directional scattering structure on the surface of the colorless fine uneven structure-containing part 42b-Cl. The third image part 40c generally exhibited a copper glossy appearance, and the intensity of the reflected light was observed to increase at a specific observation angle when the observation angle was changed. This effect was caused by the directional scattering structure on the surface of the reddish brown fine uneven structure-containing part 42c-RB. Furthermore, the first to third image parts 40a to 40c had surface areas different from each other.

In the first and third image parts 40a and 40c, registration was respectively achieved, with no deviation, with the colored fine uneven structure-containing parts 42a and 42c, the reflective layers 44a and 44c made of aluminum, the mask layers 46a and 46c, and the back-surface coloring parts 48a and 48c. Furthermore, there was no mixing of the silver glossy appearance of only the reflective layer, with the translucent color appearance having no metallic gloss of the fine uneven structure-containing part, caused by the positional deviation between the fine uneven structure and the mask layer.

As shown in Fig. 34B, the three image parts 40a to 40c were not visually recognized under observation of the printed matter 100 from the reverse side, due to the opacity of the cotton receiving substrate 110. When the printed matter 100 was observed from the reverse side, with a strong light source being arranged on the front side of the printed matter 100, black regions at positions corresponding to the three image parts 40a to 40c were visually recognized due to the light passing through the cotton receiving substrate 110. This is because the transmitted light was blocked by the reflective layers 44a to 44c in the respective image parts 40a to 40c. The three black regions observed under these conditions also had surface areas different from each other.

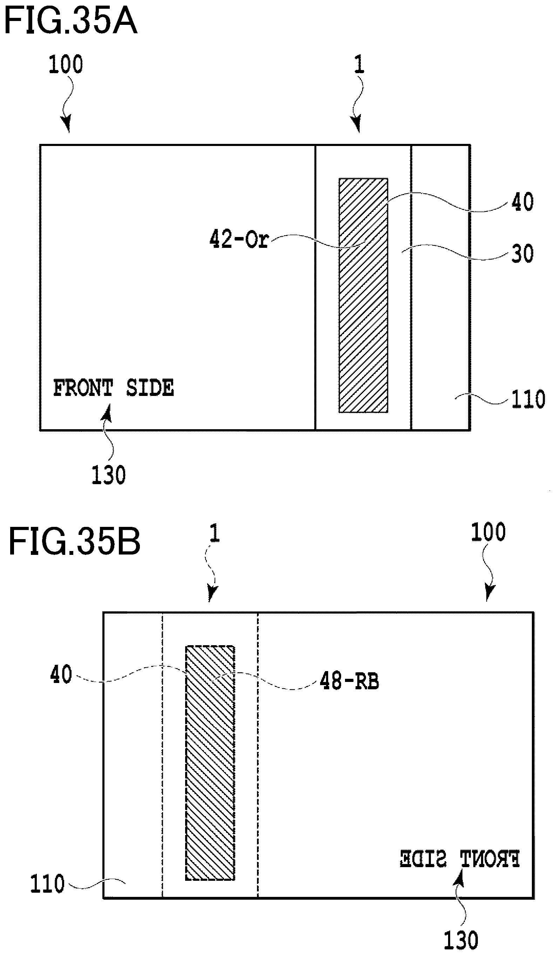

### [Example 18] [Figs. 35A and 35B]

Except for forming an unseparated image part 40, the procedure of Example 12 was repeated to obtain a transfer foil 2 of the second embodiment of the present invention. The image part 40 of the obtained transfer foil 2 sequentially included a fine uneven structure-containing part 42-Or containing a urethane resin and an orange colorant, a reflective layer 44 made of aluminum remained only on the fine uneven structure-containing part 42-Or, a mask layer 46 remained only on the fine uneven structure-containing part 42-Or, and a back surface coloring part 48-RB containing a vinyl chloride-vinyl acetate copolymer resin and a reddish brown colorant and remained only on the fine uneven structure-containing part 42-Or.

The resultant transfer foil 2 was thermocompressively bonded to a transparent polypropylene receiving substrate 110 having a printed part 130 by use of an up-down heat-transfer device provided with a hot stamp, followed by peeling off the first carrier substrate 20 to obtain the printed matter 100 shown in Figs. 35A and 35B. In the printed matter 100, a stripe-shaped optical information medium 1 of the second embodiment of the present invention had been transferred onto the front surface shown in Fig. 35A.

As shown in Fig. 35A, when the printed matter 100 was observed from the front side, an unseparated image part 40 was visually recognized. In the observation, the unseparated image part 40 exhibited a gold glossy appearance caused by the reflective layer 44 made of aluminum and the orange fine uneven structure-containing part 42-Or. It was also observed that the reflective layer 44 was registered with the orange fine uneven structure-containing part 42-Or with no deviation, and the region other than the image part 40 was colorless and transparent.

As shown in Fig. 35B, when the printed matter 100 was observed from the reverse side, an unseparated image part 40 was visually recognized through the transparent receiving substrate 110. In the observation, the unseparated image 40 exhibited a copper glossy appearance caused by the reflective layer 44 made of aluminum and the reddish-brown back surface coloring part 48-RB. It was also observed that the reflective layer 44 was registered with the reddish-brown back surface coloring part 48-RB with no deviation, and the region other than the image part 40 was colorless and transparent.

As described above, in the optical information medium 1 of the second embodiment of the present invention as obtained, a gold colored glossy appearance under observation from the front side and a copper-colored glossy appearance under observation from the reverse side were visually recognized in the colorless and transparent region, without using a monolayer having an orange-colored fine structure. Thus, there were obtained transfer foil 2, and printed matter 100 having the optical information medium 1. The reflective layer 44 of Example 18, which was formed of aluminum, exhibited physical strength and chemical resistance equivalent to those of the conventional reflective layer providing a silver glossy appearance.

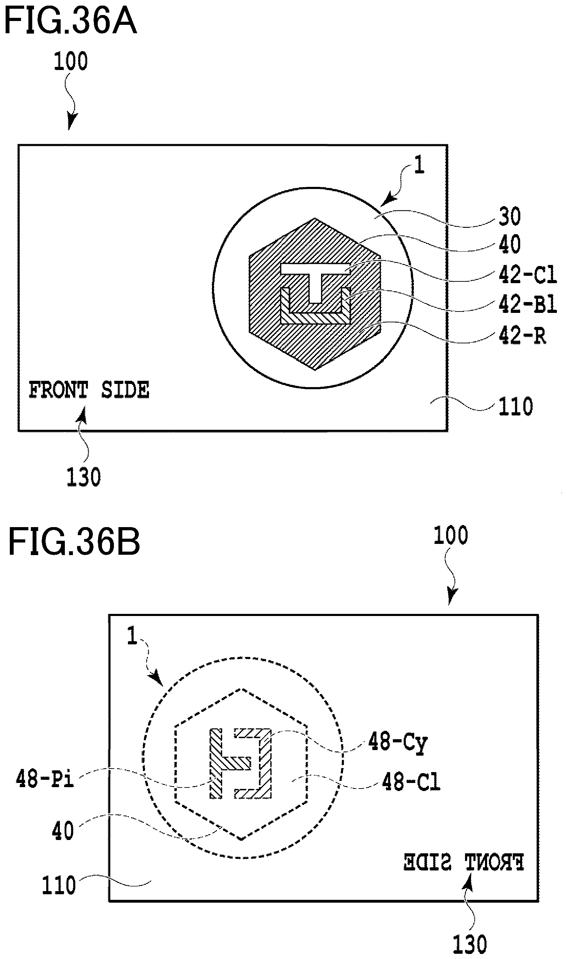

### [Example 19] [Figs. 36A and 36B]

First, in the same manner as in (8-1) and (8-2) of Example 8, an intermediate object 19-1 was obtained, and then, an intermediate object 19-2 was obtained. However, in (8-1) and (8-2) of Example 8, Example 1 should read Example 12, intermediate object 8-1 should read intermediate object 19-1, and intermediate object 8-2 should read intermediate object 19-2.

Subsequently, a composition containing a vinyl chloride-vinyl acetate copolymer resin and a pink colorant was applied to only a predetermined portion to form a back-surface coloring material layer -Pi.

Through the same procedure stated above, a composition containing a vinyl chloride-vinyl acetate copolymer resin and a cyan colorant was applied only to a predetermined portion to form a back-surface coloring material layer -Cy. Subsequently, a composition containing a vinyl chloride-vinyl acetate copolymer resin but free of colorants was applied only to a predetermined portion to form a back-surface coloring material layer -Cl. Resultantly, an unseparated back surface coloring material layer was formed by the back-surface coloring material layer -Pi, the back-surface coloring material layer -Cy, and the back-surface coloring material layer -Cl having the respective colors. The back-surface coloring material layer was positioned above the fine uneven structure-containing part 42, and had the same configuration as the fine uneven structure-containing part 42.

Then, the intermediate object was immersed in a sodium hydroxide solution to etch off the aluminum layer using the silicon dioxide layer as a mask through the same procedure as in Example 12. In this case, the relatively thin silicon dioxide layer and the aluminum layer were selectively removed first to form a patterned reflective layer 44 and a patterned mask layer 46. In this case, the back-surface coloring material layer, which had been on the firstly selectively removed silicon dioxide material and the aluminum material, was concurrently removed to form a patterned back surface coloring part 48. Resultantly, an unseparated image part 40 was formed by the fine uneven structure-containing part 42, the reflective layer 44, the mask layer 46, and the back-surface coloring part 48, which were obtained as described above. Then, the resultant object was washed and dried, followed by forming an adhesive layer 50, through the same procedure as in Example 12 to form a transfer foil 2 derived from the second embodiment of the present invention.

The image part 40 had fine uneven structure-containing parts 42-R, 42-Bl and 42-Cl having two regions with different colors and one colorless region, an aluminum reflective layer 44 remained only on the fine uneven structure-containing parts 42-R, 42-Bl and 42-Cl, a mask layer 46 remained only on the fine uneven structure-containing parts 42-R, 42-Bl and 42-Cl, and back surface coloring parts 48-PI, 48-Cy, and 48-Cl remained only on the fine uneven structure-containing parts 42-R, 42-Bl and 42-Cl. Further, only the colorless adhesive layer 50 was present in the region other than the image part 40.

Through the same procedure as in Example 12, the resultant transfer foil 2 was thermocompressively bonded to a transparent polypropylene receiving substrate 110 having a printed part 130, followed by peeling off the carrier substrate 20 to obtain the printed matter 100 shown in Figs. 36A and 36B. In the printed matter 100, a patch-shaped optical information medium 1 of the second embodiment of the present invention had been transferred onto the front surface shown in Fig. 36A.

As shown in Fig. 36A, an unseparated image part 40 was visually recognized when the printed matter 100 was observed from the front side. In the observation, the image part 40 exhibited glossy appearances of a plurality of colors produced by the reflective layer 44 made of aluminum and the fine uneven structure-containing part 42 tinted to have a plurality of colors, and a region provided with the colorless fine uneven structure-containing part 42c-Cl exhibited a silver glossy appearance. It was also observed that the reflective layer 44 was registered with the fine uneven structure-containing part 42 having a plurality of colors with no deviation, and the region other than the image part 40 was colorless and transparent. In this way, an image exhibiting both the conventional silver glossy appearance and the glossy appearances in other colors can be provided.

On the other hand, as shown in Fig. 36B, when the printed matter 100 was observed from the reverse side, an unseparated image part 40 was visually recognized through the transparent receiving substrate 110. In the observation, the image part 40 exhibited glossy appearances of a plurality of colors produced by the reflective layer 44 made of aluminum and the back-surface coloring part 48 tinted to have a plurality of colors, and the region provided with the colorless mask layer 48-Cl exhibited a silver glossy appearance. It was also observed that the reflective layer 44 was registered with the back-surface coloring part 48 having a plurality of colors with no deviation, and the region other than the image part 40 was colorless and transparent. In this way, an image exhibiting both the conventional silver glossy appearance and the glossy appearances in other colors can also be provided in the observation from the reverse side.

As described above, in the optical information medium 1 of the second embodiment of the present invention as obtained, a multi-color glossy appearance including silver under observation from the front side and a multi-color glossy appearance including silver under observation from the reverse side were visually recognized in the colorless and transparent region, without using a monolayer having a fine structure tinted to have one color. Also, there were obtained a transfer foil 2, and printed matter 100 having the optical information medium 1. The reflective layer 44 of Example 19, which was formed of aluminum, exhibited physical strength and chemical resistance equivalent to those of the conventional reflective layer providing a silver glossy appearance.

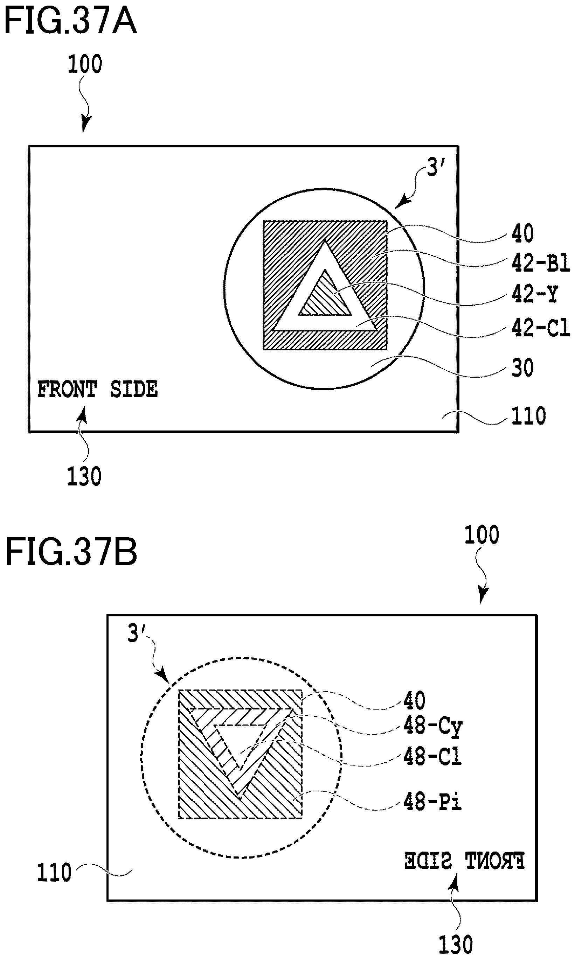

### [Example 20] [Figs. 37Aand 37B]

First, in the same manner as in (9-1) and (9-2) of Example 9, an intermediate object 20-1 was obtained, and then, an intermediate object 20-2 was obtained. However, in (9-1) and (9-2) of Example 9, Example 2 should read Example 13, Example 3 should read Example 14, intermediate object 9-1 should read intermediate object 20-1, and intermediate object 9-2 should read intermediate object 20-2.

Then, a composition containing a vinyl chloride-vinyl acetate copolymer resin and a pink colorant was applied to only a predetermined portion to form a back-surface coloring material layer -Pi. Through the same procedure stated above, a composition containing a vinyl chloride-vinyl acetate copolymer resin and a cyan colorant was applied only to a predetermined portion to form a back-surface coloring material layer -Cy. Furthermore, a composition containing a vinyl chloride-vinyl acetate copolymer resin but free of colorants was applied only to a predetermined portion to form a colorless back surface coloring material layer -Cl. Resultantly, an unseparated back surface coloring material layer was formed by the back-surface coloring material layer -Pi, the back-surface coloring material layer -Cy, and the back-surface coloring material layer -Cl having the respective colors. The back-surface coloring material layer was positioned above the fine uneven structure-containing part 42, and had the same configuration as the fine uneven structure-containing part 42.

Then, the resultant object was immersed in a sodium hydroxide solution to etch off the aluminum layer using the silicon dioxide layer as a mask through the same procedure as in Example 13. In this case, the relatively thin silicon dioxide layer and the aluminum layer were selectively removed first to form a patterned reflective layer 44 and a patterned mask layer 46. In this case, the back-surface coloring material layer, which had been on the firstly selectively removed silicon dioxide material and the aluminum material, was concurrently removed to form a patterned back surface coloring part 48. Resultantly, an unseparated image part 40 was formed by the fine uneven structure-containing part 42, the aluminum reflective layer 44 remained only on the fine uneven structure-containing part 42, the mask layer 46 remained only on the fine uneven structure-containing part 42, and the back-surface coloring part 48 remained only on the fine uneven structure-containing part 42, which were obtained as described above. Then, the resultant object was washed and dried, followed by forming an adhesive layer 50 and bonding a release substrate 60, through the same procedure as in Example 13 to form a label 3 derived from the second embodiment of the present invention.

The image part 40 had fine uneven structure-containing parts 42-Y, 42-Bl and 42-Cl having two regions with different colors and one colorless region, an aluminum reflective layer 44 remained only on the fine uneven structure-containing parts 42-Y, 42-Bl and 42-Cl, a mask layer 46 remained only on the fine uneven structure-containing parts 42-Y, 42-Bl and 42-Cl, and back surface coloring parts48-PI, 48-Cy, and 48-Cl having two regions with different colors and one colorless region and remained only on the fine uneven structure-containing parts 42-Y, 42-Bl and 42-Cl. Further, only the colorless adhesive layer 50 was present in the region other than the image part 40.

The release substrate 60 of the obtained label 3 was peeled off and bonded to a transparent PET receiving substrate 110 having a printed part 130 to obtain the printed matter 100 shown in Figs. 37A and 37B. In the printed matter 100, a patch-shaped label body 3' had been bonded onto the front surface shown in Fig. 37A.

As shown in Fig. 37A, when the printed matter 100 was observed from the front side, an unseparated image part 40 was visually observed. In the visual observation, the image part 40 exhibited glossy appearances of a plurality of colors produced by the reflective layer 44 made of aluminum and the fine uneven structure-containing part 42 tinted to have a plurality of colors, and a region provided with the colorless fine uneven structure-containing part 42-Cl exhibited a silver glossy appearance. It was also visually observed that the reflective layer 44 was registered with the fine uneven structure-containing part 42 having a plurality of colors with no deviation, and the region other than the image part 40 was colorless and transparent. In this way, there can be provided an image in which an inner area exhibiting one or more colors is provided inside a peripheral area exhibiting one color.

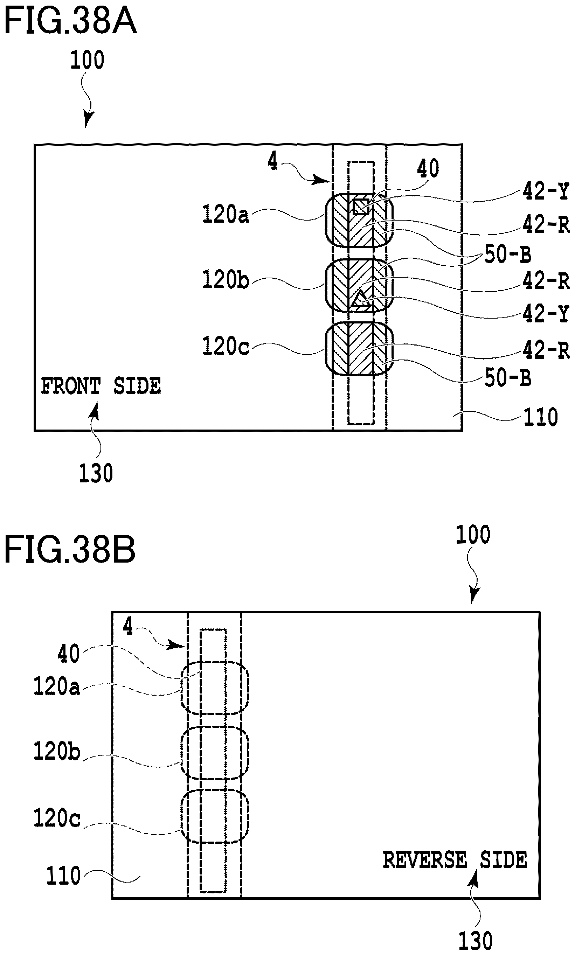

### [Example 21] [Figs. 38Aand 38B]

First, in the same manner as in (10-1) and (10-2) of Example 10, an intermediate object 21-1 was obtained, and then, an intermediate object 21-2 was obtained. However, in (10-1) and (10-2) of Example 10, Example 2 should read Example 13, intermediate object 10-1 should read intermediate object 21-1, and intermediate object 10-2 should read intermediate object 21-2.
Subsequently, a composition containing a vinyl chloride-vinyl acetate copolymer resin and a reddish-brown colorant was applied to the object to cover the fine uneven structure-containing part 42, at a position corresponding to the part, to form a back-surface coloring material layer-RB.

Then, the resultant object was immersed in a sodium hydroxide solution to etch off the aluminum layer using the silicon dioxide layer as a mask through the same procedure as in Example 13. In this case, the relatively thin silicon dioxide layer and the aluminum layer were selectively removed first to form a patterned reflective layer 44 and a patterned mask layer 46. In this case, the back-surface coloring material layer, which had been on the firstly selectively removed silicon dioxide material and the aluminum material, was concurrently removed to form a patterned back surface coloring part 48. Resultantly, an unseparated image part 40 was formed by the fine uneven structure-containing part 42, the aluminum reflective layer 44 remained only on the fine uneven structure-containing part 42, the mask layer 46 remained only on the fine uneven structure-containing part 42, and the back-surface coloring part 48 remained only on the fine uneven structure-containing part 42, which were obtained as described above. Then, the resultant object was washed and dried through the same procedure as in Example 13.

A composition containing an acrylic resin and a blue colorant was applied to an overall image part 40-side surface of the dried intermediate object to form a blue adhesive layer 50-B. Then, a composition containing an acrylic resin but free of colorants was applied to an overall carrier substrate 20-side surface of the intermediate object to form a colorless carrier substrate-side adhesive layer 70, thereby forming an embedding thread 4.

The obtained embedding thread 4 was embedded in a cotton dispersion to prepare a laminate in which the embedding thread 4 was embedded in a cotton receiving substrate 110. The front surface of the cotton receiving substrate 110 had receiving substrate windows 120a to 120c at portions in which the image part 40 of the embedding thread 4 partially exposed. The front-side and the reverse-side surfaces of the laminate (cotton receiving substrate 110) were subjected to printing to form a printed part 130, thereby obtaining printed matter 100.

As shown in Fig. 38A, when the printed matter 100 was observed from the front side, an unseparated image part 40 was visually recognized through the receiving substrate windows 120. The image part 40 observed from the first and second receiving substrate windows 120a and 120b exhibited a non-silver glossy appearance caused by the reflective layer 44 made of aluminum and the fine uneven structure-containing parts 42-R and 42-Y tinted to have two colors. The image part 40 observed from the third receiving substrate window 120c exhibited a non-silver glossy appearance caused by the reflective layer 44 made of aluminum and the red-colored fine uneven structure-containing part 42-R. In all of the receiving substrate windows 120a to 120c, the reflective layer 44 was registered with the fine uneven structure-containing part 42 having a plurality of colors with no deviation, and the region other than the image part 40 was observed to be non-glossy blue as produced by the blue adhesive layer 50-B. The lack of gloss was due to the absence of the reflective layer 44 from the region other than the image part 40.

As shown in Fig. 38B, the image part 40 was not visually recognized under observation of the printed matter 100 from the reverse side, due to the opacity of the cotton receiving substrate 110. When the printed matter 100 was observed from the reverse side, with a strong light source being arranged on the front side of the printed matter 100, black regions at positions corresponding to the image part 40 were visually recognized in the non-glossy blue region produced by the blue adhesive layer 50-B due to the light passing through the cotton receiving substrate 110. This is because the transmitted light was blocked by the reflective layer 44 in the image part 40.

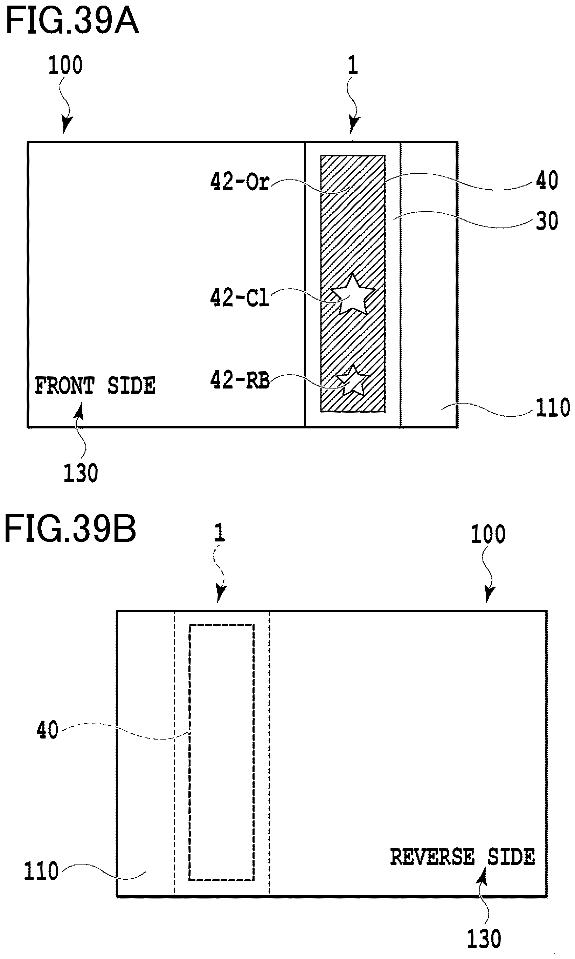

### [Example 22] [Figs. 39A and 39B]

First, in the same manner as in (11-1) and (11-2) of Example 11, an intermediate object 22-1 was obtained, and then, an intermediate object 2-2 was obtained. However, in (11-1) and (11-2) of Example 11, Example 1 should read Example 12, intermediate object 11-1 should read intermediate object 22-1, and intermediate object 11-2 should read intermediate object 22-2.
Subsequently, a composition containing a vinyl chloride-vinyl acetate copolymer resin and a reddish-brown colorant was applied to the object to cover the fine uneven structure-containing part 42, at a position corresponding to the part, to form a back-surface coloring material layer-RB.

Then, the intermediate object was immersed in a sodium hydroxide solution to etch off the aluminum layer using the silicon dioxide layer as a mask through the same procedure as in Example 12. In this case, the relatively thin silicon dioxide layer and the aluminum layer were selectively removed first to form a patterned reflective layer 44 and a patterned mask layer 46. In this case, the back-surface coloring material layer, which had been on the firstly selectively removed silicon dioxide material and the aluminum material, was concurrently removed to form a patterned back surface coloring part 48. Resultantly, an unseparated image part 40 was formed by the fine uneven structure-containing part 42, the aluminum reflective layer 44 remained only on the fine uneven structure-containing part 42, the mask layer 46 remained only on the fine uneven structure-containing part 42, and the back-surface coloring part 48 remained only on the fine uneven structure-containing part 42, which were obtained as stated above. Then, the resultant object was washed and dried, followed by forming an adhesive layer 50, through the same procedure as in Example 12 to form the transfer foil 2 shown in Fig. 33. The image part 40 had an orange fine uneven structure-containing part 42-Or having a diffraction grating structure on the surface, a colorless fine uneven structure-containing part 42-Cl having a non-directional scattering structure on the surface, and a reddish brown fine uneven structure-containing part 42-RB having a directional scattering structure on the surface.

Through the same procedure as in Example 12, the resultant transfer foil 2 was thermocompressively bonded to an opaque cotton receiving substrate 110 having a printed part 130, followed by peeling off the first carrier substrate 20 to obtain the printed matter 100 shown in Figs. 39A and 39B. In the printed matter 100, a stripe-shaped optical information medium 1 had been transferred onto the front surface shown in Fig. 39A.

As shown in Fig. 39A, an unseparated image part 40 was visually recognized when the printed matter 100 was observed from the front side. The region of the image part 40 provided with the orange fine uneven structure-containing part 42-Or generally exhibited a gold glossy appearance, while the observed hue varied with the change of the observation angle. This effect was caused by the diffraction grating structure on the surface of the orange fine uneven structure-containing part 42-Or. The region of the image part 40 provided with the colorless fine uneven structure-containing part 42-Cl generally exhibited a silver glossy appearance, while the intensity and the hue of the reflected light remained unchanged, irrespective of the change in the observation angle. This effect was caused by the non-directional scattering structure of the surface of the colorless fine uneven structure-containing part 42-Cl. The region of the image part 40 provided with the reddish-brown fine uneven structure-containing part 42-RB generally exhibited a copper glossy appearance, and the intensity of the reflected light was observed to increase at a specific observation angle when the observation angle was changed. This effect was caused by the directional scattering structure on the surface of the reddish brown fine uneven structure-containing part 42-RB. Furthermore, the aforementioned three regions had surface areas different from each other.

As shown in Fig. 39B, the image part 40 was not visually recognized under observation of the printed matter 100 from the reverse side, due to the opacity of the cotton receiving substrate 110. When the printed matter 100 was observed from the reverse side, with a strong light source being arranged on the front side of the printed matter 100, black regions at positions corresponding to the image part 40 were visually recognized due to the light passing through the cotton receiving substrate 110. This is because the transmitted light was blocked by the reflective layer 44 in the image part 40. The black regions observed under these conditions had surface areas different from each other.

### [Reference Signs List]

1 ... Optical information medium
2 ... Transfer foil
3 ... Label
3' ... Label body
4 ... Embedding thread
20 ... First carrier substrate
20' ... Second carrier substrate
20" ...Third carrier substrate
30 ... Bonding part (receiving layer)
31 ... Selective-etching-enabling structure
40 (a,b,c,d) ... Image part
42 (a,b,c,d) ... fine uneven structure-containing part
43 ... fine uneven structure
44 (a,b,c,d) ... Reflective layer
46 (a,b,c,d) ... Mask layer
48 (a,b,c,d) ... back surface coloring part
50 ... Adhesive layer (protective layer or first adhesive layer)
51 ... Light transmission region
60 ... Release substrate (peel sheet)
70 ... Carrier substrate-side adhesive layer (second adhesive layer or additional adhesive layer)
100 ... Printed matter
110 ... Receiving substrate
120 (a, b, c) ... Receiving substrate windows
130 ... Printed parts
250 ... Producing machine
251 ... Bonding film winding roll
252 ... Bonding film
253 ... Bonding ink reservoir
254 ... Bonding ink
255 ... Bonding ink applying cylinder
256 ... Bonding ink pressing cylinder
257 ... First transfer film
258 ... Bonding ink curing section
259 ... First forming film
261 ... First cylinder for lamination
262 ... First film peeling section
263 ... Transfer bonding first film
273 ... Forming resin ink reservoir
274 ... Forming resin ink
275 ... Forming resin ink applying cylinder
276 ... Forming resin ink pressing cylinder
277 ... Second transfer film
278 ... Forming resin ink curing section
279 ... Second forming film
281 ... Second cylinder for lamination
282 ... Second film peeling section
283 ... Second transferred bonding film
284 ... Bonding film take-up roll
-Cl ... Colorless (Clear)
-Or ... Orange
-RB ... Reddish brown
-R ... Red
-Bl ... Blue
-Y ... Yellow
-G ... Green
-Pi ... Pink
-Cy ... Cyan
-Br ... Brown
-M ... Magenta

## Claims

1. An optical information medium (1) comprising a bonding part (30), serving as receiving layer, at least one image part (40, 40a, 40b, 40c, 40d) and an adhesive layer (50), serving as protective layer, wherein:
the at least one image part (40, 40a, 40b, 40c, 40d) is disposed on part of the bonding part (30);
the at least one image part (40, 40a, 40b, 40c, 40d) and the bonding part (30) not having the at least one image part (40, 40a, 40b, 40c, 40d) are covered with the adhesive layer (50); and
each of the image parts (40, 40a, 40b, 40c, 40d) includes, in order from the bonding part (30) side, a fine uneven structure-containing part (42, 42a, 42b, 42c, 42d) having a fine uneven structure (43) on a surface thereof opposite to the bonding part (30), a reflective layer (44, 44a, 44b, 44c, 44d) formed on the fine uneven structure-containing part (42, 42a, 42b, 42c, 42d), and a mask layer (46, 46a, 46b, 46c, 46d) formed on the reflective layer (44, 44a, 44b, 44c, 44d); wherein:
the bonding part (30) has a fine uneven structure-containing part-side surface including a first region where the fine uneven structure-containing part (42, 42a, 42b, 42c, 42d) is formed, and a second region where the fine uneven structure-containing part (42, 42a, 42b, 42c, 42d) is not formed;
in the fine uneven structure-containing part-side surface of the bonding part (30), at least the second region has a selective-etching-enabling structure (31);
the selective-etching-enabling structure (31) is a concavo-convex structure and has a specific surface area greater than a specific surface area of the fine uneven structure (43);
wherein
the specific surface area of the selective-etching-enabling structure (31) can be estimated by dividing a total surface area of the second region including unevenness of the selective-etching-enabling structure (31), by a total surface area of the second region when the second region is taken to be perfectly flat without including unevenness of the selective-etching-enabling structure (31); and wherein
the specific surface area of the fine uneven structure (43) can be estimated by dividing a total surface area of the fine uneven structure (43) including unevenness of the fine uneven structure (43) by a total surface area of the first region when the first region is taken to be perfectly flat without including unevenness of the fine uneven structure (43).

2. The optical information medium (1) according to claim 1, **characterized in that**:
the fine uneven structure-containing part (42, 42a, 42b, 42c, 42d) is colorless, or tinted to have one or more translucent or opaque colors; and
at least one of the image parts (40, 40a, 40b, 40c, 40d) has a fine uneven structure-containing part (42, 42a, 42b, 42c, 42d) tinted to have one or more translucent or opaque colors.

3. The optical information medium (1) according to claim 1 or 2, **characterized in that** the image part (40, 40a, 40b, 40c, 40d) further includes a back-surface coloring part (48, 48a, 48b, 48c, 48d), and the back-surface coloring part (48, 48a, 48b, 48c, 48d) is formed on the mask layer (46, 46a, 46b, 46c, 46d).

4. The optical information medium (1) according to any one of claims 1 to 3, **characterized in that** the bonding part (30) and the adhesive layer (50) are colorless.

5. The optical information medium (1) according to any one of claims 1 to 4 comprising a single image part (40).

6. The optical information medium (1) according to any one of claims 1 to 4 comprising two or more discrete image parts (40a, 40b, 40c, 40d).

7. The optical information medium (1) according to claim 2, **characterized in that**, in each of the image parts (40, 40a, 40b, 40c, 40d), the fine uneven structure-containing part (42, 42a, 42b, 42c, 42d) is colorless, or tinted to have one color.

8. The optical information medium (1) according to claim 2, **characterized in that**, in at least one of the image parts (40, 40a, 40b, 40c, 40d), the fine uneven structure-containing part (42, 42a, 42b, 42c, 42d) is tinted to have two or more colors.

9. The optical information medium (1) according to claim 8, **characterized in that**, in at least one of the image parts (40, 40a, 40b, 40c, 40d), the fine uneven structure-containing part (42, 42a, 42b, 42c, 42d) has a peripheral area tinted to have one color, and an inner area surrounded by the peripheral area and tinted to have one or more colors different from the color of the peripheral area.

10. The optical information medium (1) according to claim 2, **characterized in that** the optical information medium (1) is provided with a plurality of image parts (40, 40a, 40b, 40c, 40d), and one of the image parts (40, 40a, 40b, 40c, 40d) has a fine uneven structure-containing part (42, 42a, 42b, 42c, 42d) tinted to have a color different from colors of the fine uneven structure-containing parts (42, 42a, 42b, 42c, 42d) of other image parts (40, 40a, 40b, 40c, 40d).

11. The optical information medium according to claim 2, **characterized in that** the optical information medium is provided with a plurality of image parts, and the fine uneven structure-containing parts have colors different from each other.

12. The optical information medium (1) according to any one of claims 1 to 3, **characterized in that** the optical information medium (1) is provided with a plurality of image parts (40, 40a, 40b, 40c, 40d), and at least two of the image parts (40, 40a, 40b, 40c, 40d) have surface areas different from others.

13. The optical information medium (1) according to any one of claims 1 to 3, **characterized in that** the optical information medium (1) is provided with a plurality of image parts (40, 40a, 40b, 40c, 40d), and one of the image parts (40, 40a, 40b, 40c, 40d) has a fine uneven structure-containing part (42, 42a, 42b, 42c, 42d) provided with a fine uneven structure (43) different from fine uneven structures (43) of the fine uneven structure-containing parts (42, 42a, 42b, 42c, 42d) of other image parts (40, 40a, 40b, 40c, 40d).

14. The optical information medium (1) according to any one of claims 1 to 3, **characterized in that** the optical information medium (1) is provided with a plurality of image parts (40, 40a, 40b, 40c, 40d), and the fine uneven structure-containing parts (42, 42a, 42b, 42c, 42d) have fine uneven structures (43) different from each other.

15. The optical information medium (1) according to any one of claims 1 to 11, **characterized in that** the adhesive layer (50) is tinted to have one or more translucent or opaque colors.

16. The optical information medium (1) according to any one of claims 1 to 14, **characterized in that** the bonding part (30) and the adhesive layer (50) are both colorless and are in direct contact with each other, thus forming a light transmission region (51).

17. The optical information medium (1) according to claim 3, **characterized in that**, in at least one of the image parts (40, 40a, 40b, 40c, 40d), the back-surface coloring part (48, 48a, 48b, 48c, 48d) is colorless, or tinted to have one color.

18. The optical information medium (1) according to claim 3, **characterized in that**, in at least one of the image parts (40, 40a, 40b, 40c, 40d), the back-surface coloring part (48, 48a, 48b, 48c, 48d) is tinted to have two or more colors.

19. The optical information medium (1) according to claim 18, **characterized in that**, in at least one of the image parts (40, 40a, 40b, 40c, 40d), the back-surface coloring part (48, 48a, 48b, 48c, 48d) has a peripheral area having one color, and an inner area surrounded by the peripheral area and having a color different from the color of the peripheral area.

20. The optical information medium (1) according to claim 3, **characterized in that** the optical information medium (1) is provided with a plurality of image parts (40, 40a, 40b, 40c, 40d), the plurality of image parts (40, 40a, 40b, 40c, 40d) have respective back surface coloring parts (48, 48a, 48b, 48c, 48d), and the back-surface coloring parts (48, 48a, 48b, 48c, 48d) have colors different from each other.

21. A method of producing an optical information medium (1) wherein the method sequentially comprises:
(I) a step of preparing a bonding part (30), serving as receiving layer, the bonding part (30) having a surface including a first region and a second region, at least the second region being provided with a selective-etching-enabling structure (31);
(II) a step of forming at least one image part (40, 40a, 40b, 40c, 40d) on a part of the first region of the bonding part (30), the step of forming the image part (40, 40a, 40b, 40c, 40d) including:
(II-1) a sub-step of forming a fine uneven structure-containing part (42, 42a, 42b, 42c, 42d) on the first region of the bonding part (30), the fine uneven structure-containing part (42, 42a, 42b, 42c, 42d) having a surface on a side opposite to the bonding part (30), which is provided with a fine uneven structure (43),
(II-2) a sub-step of forming a reflective material layer (44, 44a, 44b, 44c, 44d), covering the second region of the bonding part (30) and the fine uneven structure (43),
(II-3) a sub-step of forming a mask material layer (46, 46a, 46b, 46c, 46d) on the second region of the bonding part (30) and the fine uneven structure (43), covering the reflective material layer (44, 44a, 44b, 44c, 44d), and
(II-4) a sub-step of selectively etching the reflective material layer (44, 44a, 44b, 44c, 44d) to leave the reflective layer (44, 44a, 44b, 44c, 44d) and the mask layer (46, 46a, 46b, 46c, 46d) only on the fine uneven structure-containing part (42, 42a, 42b, 42c, 42d);
and
(III) a step of optionally forming an adhesive layer (50), serving as protective layer, covering the at least one image part (40, 40a, 40b, 40c, 40d), wherein:
the selective-etching-enabling structure (31) is a concavo-convex structure and has a specific surface area greater than a specific surface area of the fine uneven structure (43);
the specific surface area of the selective-etching-enabling structure (31) can be estimated by dividing a total surface area of the second region including unevenness of the selective-etching-enabling structure (31), by a total surface area of the second region when the second region is taken to be perfectly flat without including unevenness of the selective-etching-enabling structure (31);
the specific surface area of the fine uneven structure (43) can be estimated by dividing a total surface area of the fine uneven structure (43) including unevenness of the fine uneven structure (43) by a total surface area of the first region when the first region is taken to be perfectly flat without including unevenness of the fine uneven structure (43); and
the selective etching is performed making use of a difference in thicknesses between the reflective material layer (44, 44a, 44b, 44c, 44d) and the mask material layer (46, 46a, 46b, 46c, 46d) based on a difference in specific surface area between the selective-etching-enabling structure (31) and the fine uneven structure (43).

22. The method of producing an optical information medium (1) according to claim 21, **characterized in that**:
the fine uneven structure-containing part (42, 42a, 42b, 42c, 42d) is colorless, or tinted to have one or more translucent or opaque colors; and
at least one of the image parts (40, 40a, 40b, 40c, 40d) has a fine uneven structure-containing part (42, 42a, 42b, 42c, 42d) tinted to have one or more translucent or opaque colors.

23. The method of producing an optical information medium (1) according to claim 21 or 22, **characterized in that** the method comprises:
(II-3') a sub-step of forming a back-surface coloring material layer at a position corresponding to the fine uneven structure-containing part (42, 42a, 42b, 42c, 42d), covering the fine uneven structure-containing part (42, 42a, 42b, 42c, 42d), between the sub-steps (II-3) and (II-4); and
forming a back-surface coloring part (48, 48a, 48b, 48c, 48d), in the sub-step (II-4), by concurrently removing the back-surface coloring material layer with the mask layer (46, 46a, 46b, 46c, 46d) and the reflective layer (44, 44a, 44b, 44c, 44d) subjected to selective removal, on which the back-surface coloring material layer is present.

24. A transfer foil (2) **characterized in that** the transfer foil (2) comprises:
the optical information medium (1) according to any one of claims 1 to 20; and
a first carrier substrate (20) contacting the bonding part (30), serving as receiving layer, wherein
the first carrier substrate (20) is peelable from the bonding part (30) at an interface therebetween.

25. A label body (3') **characterized in that** the label body (3') comprises:
the optical information medium (1) according to any one of claims 1 to 20; and
a second carrier substrate (20) contacting the bonding part (30).

26. A label (3) **characterized in that** the label (3) comprises:
the optical information medium (1) according to any one of claims 1 to 20;
a second carrier substrate (20') contacting the bonding part (30); and
a release substrate (peel sheet) (60) contacting the adhesive layer (50), serving as protective layer, wherein
the adhesive layer (50) has tackiness, and the release substrate (peel sheet) (60) is peelable from the adhesive layer (protective layer) (50) at an interface therebetween.

27. An embedding thread (4) **characterized in that** the embedding thread (4) comprises:
the optical information medium (1) according to any one of claims 1 to 20;
a third carrier substrate (20") contacting the bonding part (30); and
a carrier substrate-side adhesive layer layer (70), hereinafter referred to as second adhesive layer, contacting the third carrier substrate (20").

28. A laminate **characterized in that** the laminate comprises:
a receiving substrate (110); and
the optical information medium (1) according to any one of claims 1 to 20, the label body (3') of claim 25, or the embedding thread (4) of claim 27 bonded to the receiving substrate (110).

29. Printed matter (100) which is the laminate according to claim 28, **characterized in that** the receiving substrate (110) includes a printed part (130) to which a printing ink is adhered.

## Patentansprüche

1. Optisches Informationsmedium (1), umfassend einen Verbindungsteil (30), der als Aufnahmeschicht dient, mindestens einen Bildteil (40, 40a, 40b, 40c, 40d) und eine Klebeschicht (50), die als Schutzschicht dient, wobei:
der mindestens eine Bildteil (40, 40a, 40b, 40c, 40d) auf einem Teil des Verbindungsteils (30) angeordnet ist;
der mindestens eine Bildteil (40, 40a, 40b, 40c, 40d) und der Verbindungsteil (30), der den mindestens einen Bildteil (40, 40a, 40b, 40c, 40d) nicht aufweist, mit der Klebeschicht (50) bedeckt sind; und
jeder der Bildteile (40, 40a, 40b, 40c, 40d) in dieser Reihenfolge von der Seite des Verbindungsteils (30) einen feine unebene Struktur enthaltenden Teil (42, 42a, 42b, 42c, 42d), der eine feine unebene Struktur (43) auf einer Seite davon entgegengesetzt zu dem Verbindungsteil (30) aufweist, eine Reflexionsschicht (44, 44a, 44b, 44c, 44d), die auf dem feine unebene Struktur enthaltenden Teil (42, 42a, 42b, 42c, 42d) ausgebildet ist, und eine Maskenschicht (46, 46a, 46b, 46c, 46d), die auf der Reflexionsschicht (44, 44a, 44b, 44c, 44d) ausgebildet ist, einschließt;
wobei:
der Verbindungsteil (30) eine Oberfläche auf der Seite des feine unebene Struktur enthaltenden Teils aufweist, die einen ersten Bereich, in dem der feine unebene Struktur enthaltende Teil (42, 42a, 42b, 42c, 42d) ausgebildet ist, und einen zweiten Bereich, in dem der feine unebene Struktur enthaltende Teil (42, 42a, 42b, 42c, 42d) nicht ausgebildet ist, einschließt;
an der Oberfläche des Verbindungsteils (30) auf der Seite des feine unebene Struktur enthaltenden Teils mindestens der zweite Bereich eine selektive Ätzung ermöglichende Struktur (31) aufweist;
die selektive Ätzung ermöglichende Struktur (31) eine konkav-konvexe Struktur ist und eine spezifische Oberfläche größer als die spezifische Oberfläche der feinen unebenen Struktur (43) aufweist;
wobei
die spezifische Oberfläche der selektive Ätzung ermöglichenden Struktur (31) berechnet werden kann durch Dividieren einer Gesamtoberfläche des zweiten Bereichs, die Unebenheit der selektive Ätzung ermöglichenden Struktur (31) eingeschlossen, durch eine Gesamtoberfläche des zweiten Bereichs, wenn der zweite Bereich als perfekt flach angenommen wird, ohne Unebenheit der selektive Ätzung ermöglichenden Struktur (31) einzuschließen,; und wobei
die spezifische Oberfläche der feinen unebenen Struktur (43) berechnet werden kann durch Dividieren einer Gesamtoberfläche der feinen unebenen Struktur (43), die Unebenheit der feinen unebenen Struktur (43) eingeschlossen, durch eine Gesamtoberfläche des ersten Bereichs, wenn der erste Bereich als perfekt flach angenommen wird, ohne Unebenheit der feinen unebenen Struktur (43) einzuschließen.

2. Optisches Informationsmedium (1) gemäß Anspruch 1, **dadurch gekennzeichnet, dass**:
der feine unebene Struktur enthaltende Teil (42, 42a, 42b, 42c, 42d) farblos oder so gefärbt ist, dass er eine oder mehr transluzente oder opake Farben hat; und
mindestens einer der Bildteile (40, 40a, 40b, 40c, 40d) einen feine unebene Struktur enthaltenden Teil (42, 42a, 42b, 42c, 42d) so gefärbt hat, dass er eine oder mehr transluzente oder opake Farben hat.

3. Optisches Informationsmedium (1) gemäß Anspruch 1 oder 2, **dadurch gekennzeichnet, dass** der Bildteil (40, 40a, 40b, 40c, 40d) ferner einen Rückseitenfärbungsteil (48, 48a, 48b, 48c, 48d) einschließt und der Rückseitenfärbungsteil (48, 48a, 48b, 48c, 48d) auf der Maskenschicht (46, 46a, 46b, 46c, 46d) ausgebildet ist.

4. Optisches Informationsmedium (1) gemäß mindestens einem der Ansprüche 1 bis 3, **dadurch gekennzeichnet, dass** der Verbindungsteil (30) und die Klebeschicht (50) farblos sind.

5. Optisches Informationsmedium (1) gemäß mindestens einem der Ansprüche 1 bis 4, das einen einzelnen Bildteil (40) umfasst.

6. Optisches Informationsmedium (1) gemäß mindestens einem der Ansprüche 1 bis 4, das zwei oder mehr diskrete Bildteile (40, 40a, 40b, 40c, 40d) umfasst.

7. Optisches Informationsmedium (1) gemäß Anspruch 2,
**dadurch gekennzeichnet, dass** in jedem der Bildteile (40, 40a, 40b, 40c, 40d) der feine unebene Struktur enthaltende Teil (42, 42a, 42b, 42c, 42d) farblos oder so gefärbt ist, dass er eine Farbe hat.

8. Optisches Informationsmedium (1) gemäß Anspruch 2, **dadurch gekennzeichnet, dass** in mindestens einem der Bildteile (40, 40a, 40b, 40c, 40d) der feine unebene Struktur enthaltende Teil (42, 42a, 42b, 42c, 42d) so gefärbt ist, dass er zwei oder mehr Farben hat.

9. Optisches Informationsmedium (1) gemäß Anspruch 8, **dadurch gekennzeichnet, dass** in mindestens einem der Bildteile (40, 40a, 40b, 40c, 40d) der feine unebene Struktur enthaltende Teil (42, 42a, 42b, 42c, 42d) eine Umfangsfläche, die so gefärbt ist, dass sie eine Farbe hat, und eine innere Fläche, die von der Umfangsfläche umgeben ist und so gefärbt ist, dass sie eine oder mehr von der Farbe der Umfangsfläche verschiedene Farben hat, aufweist.

10. Optisches Informationsmedium (1) gemäß Anspruch 2, **dadurch gekennzeichnet, dass** das optische Informationsmedium (1) mit mehreren Bildteilen (40, 40a, 40b, 40c, 40d) versehen ist und einer der Bildteile (40, 40a, 40b, 40c, 40d) einen feine unebene Struktur enthaltenden Teil (42, 42a, 42b, 42c, 42d) aufweist, der so gefärbt ist, dass er eine Farbe verschieden von Farben der feine unebene Struktur enthaltenden Teile (42, 42a, 42b, 42c, 42d) anderer Bildteile (40, 40a, 40b, 40c, 40d) hat.

11. Optisches Informationsmedium (1) gemäß Anspruch 2, **dadurch gekennzeichnet, dass** das optische Informationsmedium mit mehreren Bildteilen versehen ist und die feine unebene Struktur enthaltenden Teile voneinander verschiedene Farben aufweisen.

12. Optisches Informationsmedium (1) gemäß mindestens einem der Ansprüche 1 bis 3, **dadurch gekennzeichnet, dass** das optische Informationsmedium (1) mit mehreren Bildteilen (40, 40a, 40b, 40c, 40d) versehen ist und mindestens zwei der Bildteile (40, 40a, 40b, 40c, 40d) voneinander verschiedene Oberflächen haben.

13. Optisches Informationsmedium (1) gemäß mindestens einem der Ansprüche 1 bis 3, **dadurch gekennzeichnet, dass** das optische Informationsmedium (1) mit mehreren Bildteilen (40, 40a, 40b, 40c, 40d) versehen ist und eines der Bildteile (40, 40a, 40b, 40c, 40d) einen feine unebene Struktur enthaltenden Teil (42, 42a, 42b, 42c, 42d) aufweist, der mit einer feinen unebenen Struktur (43) verschieden von den feinen unebenen Strukturen (43) der feine unebene Struktur enthaltenden Teile (42, 42a, 42b, 42c, 42d) anderer Bildteile (40, 40a, 40b, 40c, 40d) versehen ist.

14. Optisches Informationsmedium (1) gemäß mindestens einem der Ansprüche 1 bis 3, **dadurch gekennzeichnet, dass** das optische Informationsmedium (1) mit mehreren Bildteilen (40, 40a, 40b, 40c, 40d) versehen ist und die feine unebene Struktur enthaltenden Teile (42, 42a, 42b, 42c, 42d) voneinander verschiedene feine unebene Strukturen (43) aufweisen.

15. Optisches Informationsmedium (1) gemäß mindestens einem der Ansprüche 1 bis 11, **dadurch gekennzeichnet, dass** die Klebeschicht (50) so gefärbt ist, dass sie eine oder mehr transluzente oder opake Farben hat.

16. Optisches Informationsmedium (1) gemäß mindestens einem der Ansprüche 1 bis 14, **dadurch gekennzeichnet, dass** der Verbindungteil (30) und die Klebeschicht (50) beide farblos sind und in direktem Kontakt zueinander stehen und so einen Lichttransmissionsbereich (51) bilden.

17. Optisches Informationsmedium (1) gemäß Anspruch 3, **dadurch gekennzeichnet, dass** in mindestens einem der Bildteile (40, 40a, 40b, 40c, 40d) der Rückseitenfärbungsteil (48, 48a, 48b, 48c, 48d) farblos oder so gefärbt ist, dass er eine Farbe hat.

18. Optisches Informationsmedium (1) gemäß Anspruch 3, **dadurch gekennzeichnet, dass** in mindestens einem der Bildteile (40, 40a, 40b, 40c, 40d) der Rückseitenfärbungsteil (48, 48a, 48b, 48c, 48d) so gefärbt ist, dass er zwei oder mehr Farben hat.

19. Optisches Informationsmedium (1) gemäß Anspruch 18, **dadurch gekennzeichnet, dass** in mindestens einem der Bildteile (40, 40a, 40b, 40c, 40d) der Rückseitenfärbungsteil (48, 48a, 48b, 48c, 48d) eine Umfangsfläche mit einer Farbe und eine innere Fläche, die von der Umfangsfläche umgeben ist und eine von der Farbe der Umfangsfläche verschiedene Farbe hat, aufweist.

20. Optisches Informationsmedium (1) gemäß Anspruch 3, **dadurch gekennzeichnet, dass** das optische Informationsmedium (1) mit mehreren Bildteilen (40, 40a, 40b, 40c, 40d) versehen ist, wobei die mehreren Bildteile (40, 40a, 40b, 40c, 40d) jeweils Rückseitenfärbungsteile (48, 48a, 48b, 48c, 48d) aufweisen und die Rückseitenfärbungsteile (48, 48a, 48b, 48c, 48d) voneinander verschiedene Farben haben.

21. Verfahren zur Herstellung eines optischen Informationsmediums (1), wobei das Verfahren der Reihe nach die folgenden Schritte umfasst:
(I) einen Schritt der Herstellung eines Verbindungsteils (30), der als Aufnahmeschicht dient, wobei der Verbindungsteil (30) eine Oberfläche aufweist, die einen ersten Bereich und einen zweiten Bereich einschließt, wobei mindestens der zweite Bereich mit einer selektive Ätzung ermöglichenden Struktur (31) versehen ist;
(II) einen Schritt der Ausbildung mindestens eines Bildteils (40, 40a, 40b, 40c, 40d) auf einem Teil des ersten Bereichs des Verbindungsteils (30), wobei der Schritt der Ausbildung des Bildteils (40, 40a, 40b, 40c, 40d) einschließt:
(II-1) einen Unterschritt der Bildung eines feine unebene Struktur enthaltenden Teils (42, 42a, 42b, 42c, 42d) in dem ersten Bereich des Verbindungsteils (30), wobei der feine unebene Struktur enthaltende Teil (42, 42a, 42b, 42c, 42d) eine Oberfläche auf einer Seite entgegengesetzt zu dem Verbindungsteil (30) aufweist, die mit einer feinen unebenen Struktur (43) versehen ist,
(II-2) einen Unterschritt der Ausbildung einer Reflexionsmaterialschicht (44, 44a, 44b, 44c, 44d), die den zweiten Bereich des Verbindungsteils (30) und die feine unebene Struktur (43) abdeckt,
(II-3) einen Unterschritt der Ausbildung einer Maskenmaterialschicht (46, 46a, 46b, 46c, 46d) in dem zweiten Bereich des Verbindungsteils (30) und der feinen unebenen Struktur (43), die die Reflexionsmaterialschicht (44, 44a, 44b, 44c, 44d) abdeckt, und
(II-4) einen Unterschritt der selektiven Ätzung der Reflexionsmaterialschicht (44, 44a, 44b, 44c, 44d), um die Reflexionsschicht (44, 44a, 44b, 44c, 44d) und die Maskenschicht (46, 46a, 46b, 46c, 46d) nur in dem feine unebene Struktur enthaltenden Teil (42, 42a, 42b, 42c, 42d) zu belassen; und
(III) einen Schritt, in dem optional eine, als Schutzschicht dienende Klebeschicht (50) ausgebildet wird, die den mindestens einen Bildteil (40, 40a, 40b, 40c, 40d) bedeckt, wobei:
die selektive Ätzung ermöglichende Struktur (31) eine konkav-konvexe Struktur ist und eine spezifische Oberfläche größer das die spezifische Oberfläche der feinen unebenen Struktur (43) aufweist;
die spezifische Oberfläche der selektive Ätzung ermöglichenden Struktur (31) berechnet werden kann durch Dividieren einer Gesamtoberfläche des zweiten Bereichs, die Unebenheit der selektive Ätzung ermöglichenden Struktur (31) eingeschlossen, durch eine Gesamtoberfläche des zweiten Bereichs, wenn der zweite Bereich als perfekt flach angenommen wird, ohne die Unebenheit der selektive Ätzung ermöglichenden Struktur (31) einzuschließen;
die spezifische Oberfläche der feinen unebenen Struktur (43) berechnet werden kann durch Dividieren einer Gesamtoberfläche der feinen unebenen Struktur (43), die Unebenheit der feinen unebenen Struktur (43) eingeschlossen, durch eine Gesamtoberfläche des ersten Bereichs, wenn der erste Bereich als perfekt flach angenommen wird, ohne die Unebenheit der feinen unebenen Struktur (43) einzuschließen und
die selektive Ätzung durchgeführt wird, wobei ein Dickenunterschied zwischen der Reflexionsmaterialschicht (44, 44a, 44b, 44c, 44d) und der Maskenmaterialschicht (46, 46a, 46b, 46c, 46d) auf Basis eines Unterschieds der spezifischen Oberfläche zwischen der selektive Ätzung ermöglichenden Struktur (31) und der feinen unebenen Struktur (43) ausgenutzt wird.

22. Verfahren zur Herstellung eines optischen Informationsmediums (1) gemäß Anspruch 21, **dadurch gekennzeichnet, dass**:
der feine unebene Struktur enthaltende Teil (42, 42a, 42b, 42c, 42d) farblos oder so gefärbt ist, dass er eine oder mehr transluzente oder opake Farben hat; und
mindestens einer der Bildteile (40, 40a, 40b, 40c, 40d) einen feine unebene Struktur enthaltenden Teil (42, 42a, 42b, 42c, 42d) aufweist, der so gefärbt ist, dass er eine oder mehr transluzente oder opake Farben hat.

23. Verfahren zur Herstellung optischen Informationsmediums (1) gemäß Anspruch 21 oder 22, **dadurch gekennzeichnet, dass** das Verfahren umfasst:
(II-3') einen Unterschritt der Ausbildung einer Rückseitenfärbungsmaterialschicht an einer Position, die dem feine unebene Struktur enthaltenden Teil (42, 42a, 42b, 42c, 42d) entspricht, die den feine unebene Struktur enthaltenden Teil (42, 42a, 42b, 42c, 42d) abdeckt, zwischen den Unterschritten (II-3) und (II-4); und
Ausbilden eines Rückseitenfärbungsteils (48, 48a, 48b, 48c, 48d) in dem Unterschritt (II-4), indem die Rückseitenfärbungsmaterialschicht gleichzeitig mit der Maskenschicht (46, 46a, 46b, 46c, 46d) und der Reflexionsschicht (44, 44a, 44b, 44c, 44d), die selektiv entfernt werden, auf denen die Rückseitenfärbungsmaterialschicht vorliegt, entfernt wird.

24. Transferfolie (2), **dadurch gekennzeichnet, dass** die Transferfolie (2) umfasst:
das optische Informationsmedium (1) gemäß mindestens einem der Ansprüche 1 bis 20; und
ein erstes Trägersubstrat (20) das den Verbindungsteil (30), der als Aufnahmeschicht dient, berührt, wobei
das erste Trägersubstrat (20) von dem Verbindungsteil (30) an einer Grenzfläche zwischen ihnen abgezogen werden kann.

25. Etikettkörper (3'), **dadurch gekennzeichnet, dass** der Etikettkörper (3') umfasst:
das optische Informationsmedium (1) gemäß mindestens einem der Ansprüche 1 bis 20; und ein zweites Trägersubstrat (20), das den Verbindungsteil (30) berührt.

26. Etikett (3), **dadurch gekennzeichnet, dass** das Etikett (3) umfasst:
das optische Informationsmedium (1) gemäß mindestens einem der Ansprüche 1 bis 20;
ein zweites Trägersubstrat (20'), das den Verbindungsteil (30) berührt; und
ein entfernbares Substrat (Abziehblatt) (60), das die Klebeschicht (50), die als Schutzschicht dient, berührt, wobei die Klebeschicht (50) Klebrigkeit besitzt und das entfernbare Substrat (Abziehblatt) (60) von der Klebeschicht (Schutzschicht) (50) an einer Grenzfläche zwischen ihnen abgezogen werden kann.

27. Einbettungsfaden (4), **dadurch gekennzeichnet, dass** der Einbettungsfaden (4) umfasst:
das optische Informationsmedium (1) gemäß mindestens einem der Ansprüche 1 bis 20;
ein drittes Trägersubstrat (20"), das den Verbindungsteil (30) berührt; und
eine Klebeschicht (70) auf der Seite des Trägersubstrats, die nachstehend als zweite Klebeschicht bezeichnet wird und das dritte Trägersubstrat (20") berührt.

28. Laminat, **dadurch gekennzeichnet, dass** das Laminat umfasst:
ein Aufnahmesubstrat (110); und
das optische Informationsmedium (1) gemäß mindestens einem der Ansprüche 1 bis 20, den Etikettkörper (3') von Anspruch 25 oder den Einbettungsfaden (4) von Anspruch 27, an das Aufnahmesubstrat (110) gebunden.

29. Bedruckter Gegenstand (100), der das Laminat gemäß Anspruch 28 ist, **dadurch gekennzeichnet, dass** das Aufnahmesubstrat (110) einen bedruckten Teil (130) einschließt, an den eine Druckfarbe anhaftet.

## Revendications

1. Support d'informations optique (1) comprenant une partie de liaison (30), servant de couche de réception,
au moins une partie image (40, 40a, 40b, 40c, 40d) et une couche adhésive (50), servant de couche de protection,
dans lequel :
l'au moins une partie image (40, 40a, 40b, 40c, 40d) est disposée sur une partie de la partie de liaison (30) ;
l'au moins une partie image (40, 40a, 40b, 40c, 40d) et la partie de liaison (30) ne comportant pas l'au moins une partie image (40, 40a, 40b, 40c, 40d) sont recouvertes par la couche adhésive (50) ; et
chacune des parties image (40, 40a, 40b, 40c, 40d) inclut, dans l'ordre à partir du côté de la partie de liaison (30), une partie contenant une structure irrégulière fine (42, 42a, 42b, 42c, 42d) présentant une structure irrégulière fine (43) sur une surface de celle-ci à l'opposé de la partie de liaison (30), une couche réfléchissante (44, 44a, 44b, 44c, 44d) formée sur la partie contenant une structure irrégulière fine (42, 42a, 42b, 42c, 42d), et une couche de masque (46, 46a, 46b, 46c, 46d) formée sur la couche réfléchissante (44, 44a, 44b, 44c, 44d) ;
dans lequel :
la partie de liaison (30) présente une surface du côté de la partie contenant une structure irrégulière fine incluant une première région où la partie contenant une structure irrégulière fine (42, 42a, 42b, 42c, 42d) est formée, et une seconde région où la partie contenant une structure irrégulière fine (42, 42a, 42b, 42c, 42d) n'est pas formée ;
dans la surface du côté de la partie contenant une structure irrégulière fine de la partie de liaison (30), au moins la seconde région comporte une structure permettant une gravure sélective (31) ;
la structure permettant une gravure sélective (31) est une structure concavo-convexe et présente une aire de surface spécifique plus grande qu'une aire de surface spécifique de la structure irrégulière fine (43) ;
dans lequel
l'aire de surface spécifique de la structure permettant une gravure sélective (31) peut être estimée en divisant une aire de surface totale de la seconde région incluant une irrégularité de la structure permettant une gravure sélective (31), par une aire de surface totale de la seconde région lorsque la seconde région est considérée comme parfaitement plane sans inclure d'irrégularité de la structure permettant une gravure sélective (31) ; et
dans lequel
l'aire de surface spécifique de la structure irrégulière fine (43) peut être estimée en divisant une aire de surface totale de la structure irrégulière fine (43) incluant une irrégularité de la structure irrégulière fine (43) par une aire de surface totale de la première région lorsque la première région est considérée comme parfaitement plane sans inclure d'irrégularité de la structure irrégulière fine (43).

2. Support d'informations optique (1) selon la revendication 1, **caractérisé en ce que** :
la partie contenant une structure irrégulière fine (42, 42a, 42b, 42c, 42d) est incolore, ou teintée pour présenter une ou plusieurs couleurs translucides ou opaques ; et
au moins l'une des parties image (40, 40a, 40b, 40c, 40d) comporte une partie contenant une structure irrégulière fine (42, 42a, 42b, 42c, 42d) teintée pour présenter une ou plusieurs couleurs translucides ou opaques.

3. Support d'informations optique (1) selon la revendication 1 ou 2, **caractérisé en ce que** la partie image (40, 40a, 40b, 40c, 40d) inclut en outre une partie de coloration de la surface arrière (48, 48a, 48b, 48c, 48d), et la partie de coloration de la surface arrière (48, 48a, 48b, 48c, 48d) est formée sur la couche de masque (46, 46a, 46b, 46c, 46d).

4. Support d'informations optique (1) selon l'une quelconque des revendications 1 à 3, **caractérisé en ce que** la partie de liaison (30) et la couche adhésive (50) sont incolores.

5. Support d'informations optique (1) selon l'une quelconque des revendications 1 à 4, comprenant une partie image unique (40).

6. Support d'informations optique (1) selon l'une quelconque des revendications 1 à 4, comprenant au moins deux parties image (40a, 40b, 40c, 40d) distinctes.

7. Support d'informations optique (1) selon la revendication 2, **caractérisé en ce que**, dans chacune des parties image (40, 40a, 40b, 40c, 40d), la partie contenant une structure irrégulière fine (42, 42a, 42b, 42c, 42d) est incolore, ou teintée pour présenter une couleur.

8. Support d'informations optique (1) selon la revendication 2, **caractérisé en ce que**, dans au moins l'une des parties image (40, 40a, 40b, 40c, 40d), la partie contenant une structure irrégulière fine (42, 42a, 42b, 42c, 42d) est teintée pour présenter au moins deux couleurs.

9. Support d'informations optique (1) selon la revendication 8, **caractérisé en ce que**, dans au moins l'une des parties image (40, 40a, 40b, 40c, 40d), la partie contenant une structure irrégulière fine (42, 42a, 42b, 42c, 42d) comporte une zone périphérique teintée pour présenter une couleur, et une zone intérieure entourée par la zone périphérique et teintée pour présenter une ou plusieurs couleurs différentes de la couleur de la zone périphérique.

10. Support d'informations optique (1) selon la revendication 2, **caractérisé en ce que** le support d'informations optique (1) est pourvu d'une pluralité de parties image (40, 40a, 40b, 40c, 40d), et l'une des parties image (40, 40a, 40b, 40c, 40d) comporte une partie contenant une structure irrégulière fine (42, 42a, 42b, 42c, 42d) teintée pour présenter une couleur différente des couleurs des parties contenant une structure irrégulière fine (42, 42a, 42b, 42c, 42d) d'autres parties image (40, 40a, 40b, 40c, 40d).

11. Support d'informations optique selon la revendication 2, **caractérisé en ce que** le support d'informations optique est pourvu d'une pluralité de parties image et **en ce que** les parties contenant une structure irrégulière fine présentent des couleurs différentes les unes des autres.

12. Support d'informations optique (1) selon l'une quelconque des revendications 1 à 3, **caractérisé en ce que** le support d'informations optique (1) est pourvu d'une pluralité de parties image (40, 40a, 40b, 40c, 40d) et **en ce qu'**au moins deux des parties image (40, 40a, 40b, 40c, 40d) présentent des aires de surface différentes des autres.

13. Support d'informations optique (1) selon l'une quelconque des revendications 1 à 3, **caractérisé en ce que** le support d'informations optique (1) est pourvu d'une pluralité de parties image (40, 40a, 40b, 40c, 40d) et **en ce que** l'une des parties image (40, 40a, 40b, 40c, 40d) comporte une partie contenant une structure irrégulière fine (42, 42a, 42b, 42c, 42d) pourvue d'une structure irrégulière fine (43) différente des structures irrégulières fines (43) des parties contenant une structure irrégulière fine (42, 42a, 42b, 42c, 42d) d'autres parties image (40, 40a, 40b, 40c, 40d).

14. Support d'informations optique (1) selon l'une quelconque des revendications 1 à 3, **caractérisé en ce que** le support d'informations optique (1) est pourvu d'une pluralité de parties image (40, 40a, 40b, 40c, 40d) et **en ce que** les parties contenant une structure irrégulière fine (42, 42a, 42b, 42c, 42d) comportent des structures irrégulières fines (43) différentes les unes des autres.

15. Support d'informations optique (1) selon l'une quelconque des revendications 1 à 11, **caractérisé en ce que** la couche adhésive (50) est teintée pour présenter une ou plusieurs couleurs translucides ou opaques.

16. Support d'informations optique (1) selon l'une quelconque des revendications 1 à 14, **caractérisé en ce que** la partie de liaison (30) et la couche adhésive (50) sont toutes les deux incolores et sont en contact direct l'une avec l'autre, formant ainsi une région de transmission de lumière (51).

17. Support d'informations optique (1) selon la revendication 3, **caractérisé en ce que**, dans au moins l'une des parties image (40, 40a, 40b, 40c, 40d), la partie de coloration de la surface arrière (48, 48a, 48b, 48c, 48d) est incolore ou teintée pour présenter une couleur.

18. Support d'informations optique (1) selon la revendication 3, **caractérisé en ce que**, dans au moins l'une des parties image (40, 40a, 40b, 40c, 40d), la partie de coloration de la surface arrière (48, 48a, 48b, 48c, 48d) est teintée pour présenter au moins deux couleurs.

19. Support d'informations optique (1) selon la revendication 18, **caractérisé en ce que**, dans au moins l'une des parties image (40, 40a, 40b, 40c, 40d), la partie de coloration de la surface arrière (48, 48a, 48b, 48c, 48d) comporte une zone périphérique présentant une couleur, et une zone intérieure entourée par la zone périphérique et présentant une couleur différente de la couleur de la zone périphérique.

20. Support d'informations optique (1) selon la revendication 3, **caractérisé en ce que** le support d'informations optique (1) est pourvu d'une pluralité de parties image (40, 40a, 40b, 40c, 40d), **en ce que** la pluralité de parties image (40, 40a, 40b, 40c, 40d) présentent des parties de coloration de la surface arrière (48, 48a, 48b, 48c, 48d) respectives et **en ce que** les parties de coloration de la surface arrière (48, 48a, 48b, 48c, 48d) présentent des couleurs différentes les unes des autres.

21. Procédé de production d'un support d'informations optique (1), dans lequel le procédé comprend séquentiellement :
(I) une étape de préparation d'une partie de liaison (30), servant de couche de réception, la partie de liaison (30) comportant une surface incluant une première région et une seconde région, au moins la seconde région étant pourvue d'une structure permettant une gravure sélective (31) ;
(II) une étape de formation d'au moins une partie image (40, 40a, 40b, 40c, 40d) sur une partie de la première région de la partie de liaison (30), l'étape de formation de la partie image (40, 40a, 40b, 40c, 40d) incluant :
(II-1) une sous-étape de formation d'une partie contenant une structure irrégulière fine (42, 42a, 42b, 42c, 42d) sur la première région de la partie de liaison (30), la partie contenant une structure irrégulière fine (42, 42a, 42b, 42c, 42d) comportant une surface sur un côté à l'opposé de la partie de liaison (30), présentant une structure irrégulière fine (43),
(II-2) une sous-étape de formation d'une couche de matière réfléchissante (44, 44a, 44b, 44c, 44d) recouvrant la seconde région de la partie de liaison (30) et la structure irrégulière fine (43),
(II-3) une sous-étape de formation d'une couche de matière de masque (46, 46a, 46b, 46c, 46d) sur la seconde région de la partie de liaison (30) et la structure irrégulière fine (43), recouvrant la couche de matière réfléchissante (44, 44a, 44b, 44c, 44d), et
(II-4) une sous-étape de gravure sélective de la couche de matière réfléchissante (44, 44a, 44b, 44c, 44d) pour laisser la couche réfléchissante (44, 44a, 44b, 44c, 44d) et la couche de masque (46, 46a, 46b, 46c, 46d) uniquement sur la partie contenant une structure irrégulière fine (42, 42a, 42b, 42c, 42d) ;
et
(III) une étape de formation facultative d'une couche adhésive (50), servant de couche de protection, recouvrant l'au moins une partie image (40, 40a, 40b, 40c, 40d), dans lequel :
la structure permettant une gravure sélective (31) est une structure concavo-convexe et présente une aire de surface spécifique plus grande qu'une aire de surface spécifique de la structure irrégulière fine (43) ;
l'aire de surface spécifique de la structure permettant une gravure sélective (31) peut être estimée en divisant une aire de surface totale de la seconde région incluant une irrégularité de la structure permettant une gravure sélective (31), par une aire de surface totale de la seconde région lorsque la seconde région est considérée comme parfaitement plane sans inclure d'irrégularité de la structure permettant une gravure sélective (31) ;
l'aire de surface spécifique de la structure irrégulière fine (43) peut être estimée en divisant une aire de surface totale de la structure irrégulière fine (43) incluant une irrégularité de la structure irrégulière fine (43) par une aire de surface totale de la première région lorsque la première région est considérée comme parfaitement plane sans inclure d'irrégularité de la structure irrégulière fine (43) ; et
la gravure sélective est réalisée en utilisant une différence d'épaisseurs entre la couche de matière réfléchissante (44, 44a, 44b, 44c, 44d) et la couche de matière de masque (46, 46a, 46b, 46c, 46d) sur la base d'une différence d'aire de surface spécifique entre la structure permettant une gravure sélective (31) et la structure irrégulière fine (43).

22. Procédé de production d'un support d'informations optique (1) selon la revendication 21, **caractérisé en ce que** :
la partie contenant une structure irrégulière fine (42, 42a, 42b, 42c, 42d) est incolore, ou teintée pour présenter une ou plusieurs couleurs translucides ou opaques ; et
au moins l'une des parties image (40, 40a, 40b, 40c, 40d) comporte une partie contenant une structure irrégulière fine (42, 42a, 42b, 42c, 42d) teintée pour présenter une ou plusieurs couleurs translucides ou opaques.

23. Procédé de production d'un support d'informations optique (1) selon la revendication 21 ou 22, **caractérisé en ce que** le procédé comprend :
(II-3') une sous-étape de formation d'une couche de matière de coloration de la surface arrière à un emplacement correspondant à la partie contenant une structure irrégulière fine (42, 42a, 42b, 42c, 42d), recouvrant la partie contenant une structure irrégulière fine (42, 42a, 42b, 42c, 42d), entre les sous-étapes (II-3) et (II-4) ; et
la formation d'une partie de coloration de la surface arrière (48, 48a, 48b, 48c, 48d), à la sous-étape (II-4), par l'élimination simultanée de la couche de matière de coloration de la surface arrière avec la couche de masque (46, 46a, 46b, 46c, 46d) et de la couche réfléchissante (44, 44a, 44b, 44c, 44d) soumise à une élimination sélective, sur laquelle la couche de matière de coloration de la surface arrière est présente.

24. Feuille de transfert (2), **caractérisée en ce que** la feuille de transfert (2) comprend :
le support d'informations optique (1) selon l'une quelconque des revendications 1 à 20 ; et
un premier substrat de support (20) en contact avec la partie de liaison (30), servant de couche de réception,
dans laquelle
le premier substrat de support (20) peut être détaché de la partie de liaison (30) au niveau d'une interface entre les deux.

25. Corps d'étiquette (3'), **caractérisé en ce que** le corps d'étiquette (3') comprend :
le support d'informations optique (1) selon l'une quelconque des revendications 1 à 20 ; et
un deuxième substrat de support (20) en contact avec la partie de liaison (30).

26. Étiquette (3), **caractérisée en ce que** l'étiquette (3) comprend :
le support d'informations optique (1) selon l'une quelconque des revendications 1 à 20;
un deuxième substrat de support (20') en contact avec la partie de liaison (30) ; et
un substrat détachable (film détachable) (60) en contact avec la couche adhésive (50), servant de couche de protection,
dans laquelle
la couche adhésive (50) présente un caractère collant, et le substrat détachable (film détachable) (60) peut être détaché de la couche adhésive (couche de protection) (50) au niveau d'une interface entre les deux.

27. Fil à intégrer (4), **caractérisé en ce que** le fil à intégrer (4) comprend :
le support d'informations optique (1) selon l'une quelconque des revendications 1 à 20;
un troisième substrat de support (20") en contact avec la partie de liaison (30) ; et
une couche adhésive côté substrat de support (70), à laquelle il est fait référence ci-après en tant que seconde couche adhésive, en contact avec le troisième substrat de support (20").

28. Stratifié, **caractérisé en ce que** le stratifié comprend :
un substrat de réception (110) ; et
le support d'informations optique (1) selon l'une quelconque des revendications 1 à 20, le corps d'étiquette (3') selon la revendication 25, ou le fil à intégrer (4) selon la revendication 27 lié au substrat de réception (110).

29. Matière imprimée (100) qui est le stratifié selon la revendication 28, **caractérisée en ce que** le substrat de réception (110) inclut une partie imprimée (130) à laquelle une encre d'impression adhère.
